# EUROPEAN PATENT APPLICATION

(11) **EP 2 910 126 A1**
(43) Date of publication of application: **26.08.2015**
(21) Application number: 15166331.7
(22) Date of filing: 05.05.2015
(51) Int. Cl.: A01N 43/56

(54) **ACTIVE COMPOUND COMBINATIONS HAVING INSECTICIDAL PROPERTIES**

(71) Applicant: Bayer CropScience AG, 40789 Monheim am Rhein (DE)
(72) Inventor: The designation of the inventor has not yet been filed
(74) Representative: BIP Patents

(57) **Abstract**

The present invention relates to novel active compound combinations comprising at least one known compound of the formula (I) 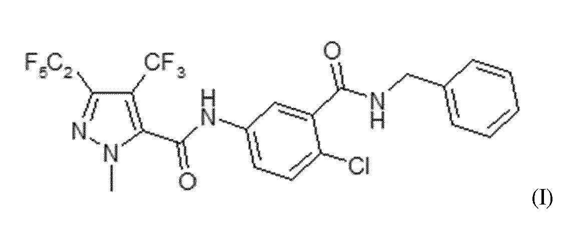 and at least one further active compound, which combinations are highly suitable for controlling animal pests such as unwanted insects and/or unwanted acarids.

## Description

The present invention relates to novel active compound combinations comprising firstly at least one known compound of the formula (I) and secondly and at least one active compound of group (II) consisting of Fungicide Groups (2) to (24), Insecticide Groups (2), (7), (8), (10) to (14), (16) to to (22), (24) and (29) or from Biological Control Agent (BCA) Groups (1) to (7), which combinations are highly suitable for controlling animal pests, such as unwanted insects and arachnids, especially acarids (mites).

### Background

Insecticidal activity of halo substituted compounds and preparations of such compounds is known from WO 2010 051926.

Furthermore, it is already known that numerous heterocycles, organotin compounds, benzoyl-ureas and pyrethroids have insecticidal and acaricidal properties. However, the activity of these compounds is not always satisfactory.

### Summary

The present invention refers to active compound combination comprising at least one compound of the formula (I) 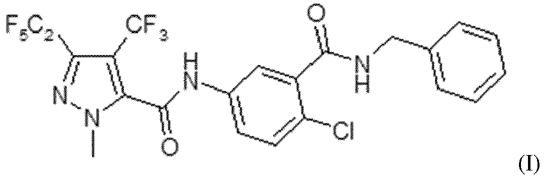 and at least one active compound of group (II) consisting of Fungicide Groups (2) to (24), Insecticide Groups (2), (7), (8), (10) to (14), (16) to to (22), (24) and (29) or from Biological Control Agent (BCA) Groups (1) to (7).

One embodiment refers to active compound combination according to the present invention, wherein a compound of group (II) is selected from the group consisting of (2-2) fluoxastrobin, (2-4) trifloxystrobin, (3-15) prothioconazole, (3-17) tebuconazole, (3-18) ipconazole, (3-20) triticonazole, (3-22) triadimenol, (6-7) carpropamid, (6-18) N-[2-(1,3-dimethylbutyl)phenyl]-5-fluoro-1,3-dimethyl-1H-pyrazole-4-carboxamide, (7-5) thiram, (8-3) metalaxyl, (8-4) metalaxyl-M, (19-21) cyprosulfamide, (20-1) pencycuron, and (24-1) N-(3',4'-dichloro-5-fluoro-1,1'-biphenyl-2-yl)-3-(difluoromethyl)-1-methyl-1H-pyrazole-4-carboxamide.

Another embodiment refers to active compound combination according to the present invention, wherein a compound of group (II) is an insecticide selected from the group consisting of Formetanat (II-1-1), Fipronil (II-2-1), Diafenthiuron (II-12-1), Azocyclotin (II-12-2), Propargit (II-12-3), Tetradifon (II-12-4), Amitraz (II-19-1), Acequinocyl (II-20-1), Fenazaquin (II-21-1), Fenpyroximate (II-21-2), Pyrimidifen (II-21-3), Pyridaben (II-21-4), Tebufenpyrad (II-21-5), Tolfenpyrad (II-21-6), Rotenone (Derris) (II-21-7), Indoxacarb (II-22-1) or Dicofol (II-29-1).

Another embodiment refers to active compound combination according to the present invention, wherein a compound of group (II) is selected from the group consisting of (7.1) Thymol extracted from thyme *(thymus vulgaris).*

An aspect refers to the use of active compound combinations according to the present invention for controlling insect or arachnid pests.

An embodiment refers to the use according described above, wherein the insect pest is an acarid pest.

Another aspect refers to a method for controlling animal pests, characterized in that an active compound combination according to the present invention is allowed to act on insect or arachnid pests and/or their habitat and/or seed.

One embodiment refers to the method described above , wherein the insect pest is an acarid pest.

Another aspect refers to a process for preparing insecticidal, especially acaricidal, or arachnicidal compositions, characterized in that an active compound combination according to the present invention is mixed with extenders and/or surfactants.

A further aspect refers to the use of an active compound combination according to the present invention for treating seed. One embodiment refers to this use of an active compound combination according to the present invention for treating transgenic plants. Another embodiment refers to this use of an active compound combinations according to the present invention for treating seed of transgenic plants. Yet another embodiment refers to this use of an active compound combination according to the present invention for treating plants or parts thereof selected from the group consisting of citrus, cotton, soybean, vegetables, almond, grape, maize or rice.

### Definitions

The person skilled in the art is aware that the terms "a" or "an", as used in the present application, may, depending on the situation, mean "one (1)" "one (1) or more" or "at least one (1)". Generally, the term refers to the meaning of "one (1) or more" or "at least one (1)". However, in one embodiment, the term "a" refers exclusively to "one (1)".

Mites are arthropods belonging to the subclass Acari (also known as Acarina) of the class Arachnida.

Bananas and plantains belong to the genera *Musa* in the family *Musaceae*.

Citrus is a common term and genus (Citrus) of flowering plants in the rue family, Rutaceae. The term Citrus includes orange (C. *sinensis*), lemon (C. *limon*)*,* grapefruit (C. *paradisi*), and lime (various, mostly C. *aurantifolia*, the key lime).

Pome is a common term for fruits produced by flowering plants in the subtribe Malinae of the family Rosaceae and for plants producing these fruits. A pome is an accessory fruit composed of one or more carpels surrounded by accessory tissue. Examples of plants that produce fruit classified as a pome are apple, loquat, pear, *pyracantha*, and quince.

Vegetable as used herein refers to an edible plant or its part selected from the list consisting of flower bud vegetable such as broccoli, cauliflower, globe artichokes and capers; leaf vegetable such as kale, spinach (*Spinacia oleracea*), arugula (*Eruca sativa),* and lettuce (*Lactuca sativa*); stem vegetable such as kohlrabi; stem shoot vegetable such as asparagus, bamboo shoots, potatoes (*Solanum tuberosum* L) and sweet potatoes (*Ipomoea batatas*); root vegetable such as carrots (*Daucus carota),* parsnips (*Pastinaca sativa*), beets (*Pastinaca sativa*), and radishes (*Raphanus sativus*)*;* bulb vegetable such as onion, garlic and shallots of genus *Allium*; tomato (*Solanum lycopersicum*), cucumber (*Cucumis sativus*), zucchini, squash and pumpkin of genus species *Cucurbita pepo,* pepper (of family *Solanaceae*), eggplant; beans (*Phaseolus vulgaris*). and pea (*Pisum sativum*).

In the context of the present invention, "control of pests" means a reduction in infestation by harmful pests, compared with the untreated plant measured as pesticidal efficacy, preferably a reduction by 25-50 %, compared with the untreated plant (100 %), more preferably a reduction by 40-79 %, compared with the untreated plant (100 %); even more preferably, the infection by pests is entirely suppressed (by 70-100 %). The control may be curative, i.e. for treatment of already infected plants, or protective, for protection of plants which have not yet been infected.

In the context of the present invention, "control of harmful microorganisms" means a reduction in infestation by harmful microorganisms, compared with the untreated plant measured as fungicidal efficacy, preferably a reduction by 25-50 %, compared with the untreated plant (100 %), more preferably a reduction by 40-79 %, compared with the untreated plant (100 %); even more preferably, the infection by harmful microorganisms is entirely suppressed (by 70-100 %). The control may be curative, i.e. for treatment of already infected plants, or protective, for protection of plants which have not yet been infected.

### Detailed description

It has now been found that active compound combinations of at least one compound of the formula (I) (compound (I)) 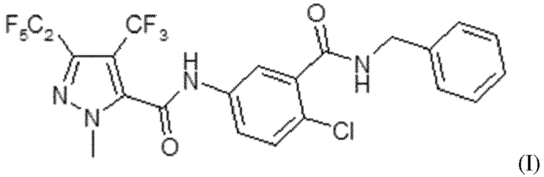 and at least one active compound of group (II) consisting of Fungicide Groups (2) to (24), Insecticide Groups (2), (7), (8), (10) to (14), (16) to to (22), (24) and (29) or from Biological Control Agent (BCA) Groups (1) to (7) below:

### Fungicid Groups

### Fungicide Group (2) Strobilurins of the general formula (II)

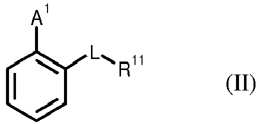

in which
A¹ represents one of the groups 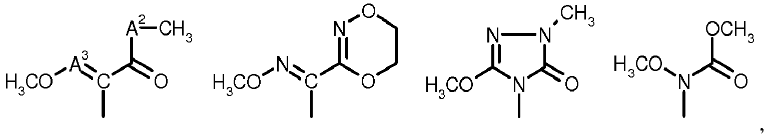 A² represents NH or O,
A³ represents N or CH,
L represents one of the groups 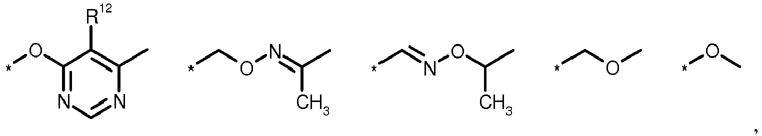 where the bond marked with an asterisk (*) is attached to the phenyl ring,
R¹¹ represents phenyl, phenoxy or pyridinyl, each of which is optionally mono- or disubstituted by identical or different substituents from the group consisting of chlorine, cyano, methyl and trifluoromethyl, or represents 1-(4-chlorophenyl)pyrazol-3-yl or represents 1,2-propanedione-bis(O-methyloxime)-1-yl,
R¹² represents hydrogen or fluorine;

### Fungicide Group (3) Triazoles of the general formula (III)

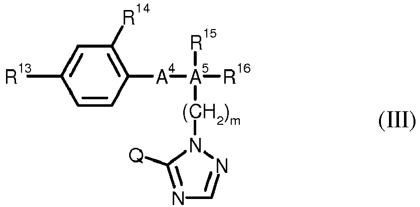

in which
Q represents hydrogen or SH,
m represents 0 or 1,
R¹³ represents hydrogen, fluorine, chlorine, phenyl or 4-chlorophenoxy,
R¹⁴ represents hydrogen or chlorine,
A⁴ represents a direct bond, -CH₂-, -(CH₂)₂-, -O-, represents *-CH₂-CHR¹⁷- or *-CH=CR¹⁷-, where the bond marked with * is attached to the phenyl ring, in which case
R¹⁵ and R¹⁷ together represent -CH₂-CH₂-CH[CH(CH₃)₂]- or -CH₂-CH₂-C(CH₃)₂-,
A⁵ represents C or Si (silicon),
A⁴ further represents -N(R¹⁷)- and A⁵ furthermore together with R¹⁵ and R¹⁶ represents the group C=N-R¹⁸, in which case R¹⁷ and R¹⁸ together represent the group 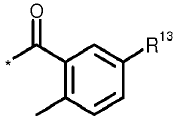 where the bond marked with * is attached to R¹⁷,
R¹⁵ represents hydrogen, hydroxyl or cyano,
R¹⁶ represents 1-cyclopropylethyl, 1-chlorocyclopropyl, C₁-C₄-alkyl, C₁-C₆-hydroxyalkyl, C₁-C₄-alkylcarbonyl, C₁-C₂-haloalkoxy-C₁-C₂-alkyl, trimethylsilyl-C₁-C₂-alkyl, monofluorophenyl or phenyl,
R¹⁵ and R¹⁶ furthermore together represent -O-CH₂-CH(R¹⁸)-O-, -O-CH₂-CH(R¹⁸)-CH₂-, or -O-CH-(2-chlorophenyl)-,
R¹⁸ represents hydrogen, C₁-C₄-alkyl or bromine;

### Fungicide Group (4) Sulphenamides of the general formula (IV)

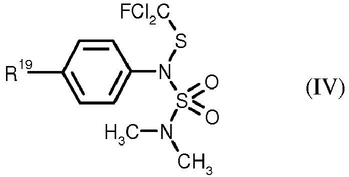

in which R¹⁹ represents hydrogen or methyl;

### Fungicide Group (5) Valinamides selected from

### (5-1) iprovalicarb

### (5-2) N¹-[2-(4-{[3-(4-chlorophenyl)-2-propynyl]oxy}-3-methoxyphenyl)ethyl]-N²-(methylsulphonyl)-D-valinamide

### (5-3) benthiavalicarb

### Fungicide Group (6) Carboxamides of the general formula (V)

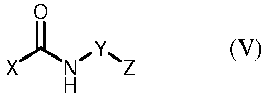

in which
X represents 2-chloro-3-pyridinyl, represents 1-methylpyrazol-4-yl which is substituted in the 3-position by methyl or trifluoromethyl and in the 5-position by hydrogen or chlorine, represents 4-ethyl-2-ethylamino-1,3-thiazol-5-yl, represents 1-methylcyclohexyl, represents 2,2-dichloro-1-ethyl-3-methylcyclopropyl, represents 2-fluoro-2-propyl, 3,4-dichloroisothiazol-5-yl, 5,6-dihydro-2-methyl-1,4-oxathiin-3-yl, 4-methyl-1,2,3-thiadiazol-5-yl, 4,5-dimethyl-2-trimethylsilylthiophen-3-yl, 1-methylpyrrol-3-yl which is substituted in the 4-position by methyl or trifluoromethyl and in the 5-position by hydrogen or chlorine, or represents phenyl which is mono- to trisubstituted by identical or different substituents from the group consisting of chlorine, methyl and trifluoromethyl,
Y represents a direct bond, C₁-C₆-alkanediyl (alkyl) which is optionally substituted by chlorine, cyano or oxo, represents C₂-C₆-alkenediyl (alkenylene) or thiophenediyl,
Z represents hydrogen, C₁-C₆-alkyl or the group 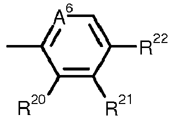 in which
A⁶ represents CH or N,
R²⁰ represents hydrogen, chlorine, cyano, C₁-C₆-alkyl, phenyl which is optionally mono- or disubstituted by identical or different substituents from the group consisting of chlorine and di(C₁-C₃-alkyl)aminocarbonyl,
R²¹ represents hydrogen, chlorine or isopropoxy,
R²² represents hydrogen, chlorine, hydroxyl, methyl, trifluoromethyl or di(C₁-C₃-alkyl) aminoc arbonyl,
R²⁰ and R²¹ furthermore together represent *-CH(CH₃)-CH₂-C(CH₃)₂- or *-CH(CH₃)-O-C(CH₃)₂- where the bond marked with * is attached to R²⁰;

### Fungicide Group (7) Dithiocarbamates selected from

### (7-1) mancozeb

### (7-2) maneb

### (7-3) metiram

### (7-4) propineb

### (7-5) thiram

### (7-6) zineb

### (7-7) ziram

### Fungicide Group (8) Acylalanines of the general formula (VI)

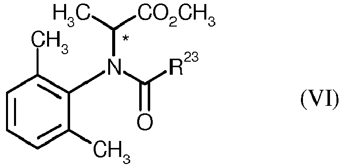

in which
* marks a carbon atom in the R or the S configuration, preferably in the S configuration,
R²³ represents benzyl, furyl or methoxymethyl;

### Fungicide Group (9): Anilinopyrimidines of the general formula (VII)

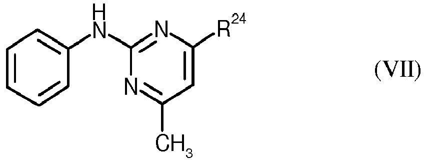

in which
R²⁴ represents methyl, cyclopropyl or 1-propynyl;

### Fungicide Group (10): Benzimidazoles of the general formula (VIII)

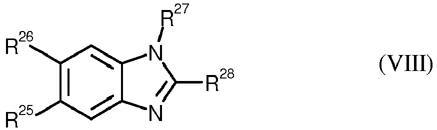

in which
R²⁵ and R²⁶ each represent hydrogen or together represent -O-CF₂-O-,
R²⁷ represents hydrogen, C₁-C₄-alkylaminocarbonyl or represents 3,5-dimethylisoxazol-4-ylsulphonyl,
R²⁸ represents chlorine, methoxycarbonylamino, chlorophenyl, furyl or thiazolyl;

### Fungicide Group (11): Carbamates of the general formula (IX)

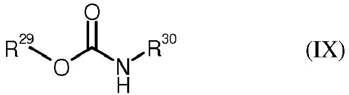

in which
R²⁹ represents n- or isopropyl,
R³⁰ represents di(C₁-C₂-alkyl)amino-C₂-C₄-alkyl or diethoxyphenyl,
salts of these compounds also being included;

### Fungicide Group (12): Dicarboximides selected from

### (12-1) captafol

### (12-2) captan

### (12-3) folpet

### (12-4) iprodione

### (12-5) procymidone

### (12-6) vinclozolin

### Fungicide Group (13): Guanidines selected from

### (13-1) dodine

### (13-2) guazatine

### (13-3) iminoctadine triacetate

### (13-4) iminoctadine tris(albesilate)

### Fungicide Group (14): Imidazoles selected from

### (14-1) cyazofamid

### (14-2) prochloraz

### (14-3) triazoxide

### (14-4) pefurazoate

### Fungicide Group (15): Morpholines of the general formula (X)

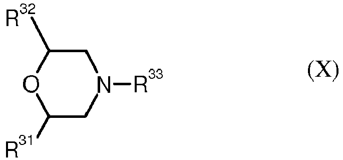

in which
R³¹ and R³² independently of one another represent hydrogen or methyl,
R³³ represents C₁-C₁₄-alkyl (preferably C₁₂-C₁₄-alkyl), C₅-C₁₂-cycloalkyl (preferably C₁₀-C₁₂-cycloalkyl), phenyl-C₁-C₄-alkyl, which may be substituted in the phenyl moiety by halogen or C₁-C₄-alkyl or represents acrylyl which is substituted by chlorophenyl and dimethoxyphenyl;

### Fungicide Group (16): Pyrroles of the general formula (XI)

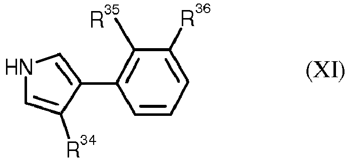

in which
R³⁴ represents chlorine or cyano,
R³⁵ represents chlorine or nitro,
R³⁶ represents chlorine,
R³⁵ and R³⁶ furthermore together represent -O-CF₂-O-;

### Fungicide Group (17): (Thio)phosphonates selected from

### (17-1) fosetyl-Al,

### (17-2) phosphonic acid,

### (17-3) tolclophos-methyl;

### Fungicide Group (18): Phenylethanamides of the general formula (XII)

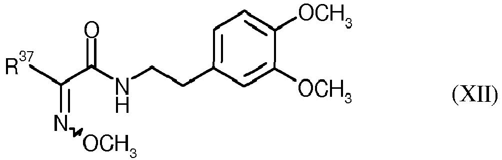

in which
R³⁷ represents unsubstituted or fluorine-, chlorine-, bromine-, methyl- or ethyl-substituted phenyl, 2-naphthyl, 1,2,3,4-tetrahydronaphthyl or indanyl;

### Fungicide Group (19): Fungicides selected from

### (19-1) acibenzolar-S-methyl

### (19-2) chlorothalonil

### (19-3) cymoxanil

### (19-4) edifenphos

### (19-5) famoxadone

### (19-6) fluazinam

### (19-7) copper oxychloride

### (19-8) copper hydroxide

### (19-9) oxadixyl

### (19-10) spiroxamine

### (19-11) dithianon

### (19-12) metrafenone

### (19-14) 2,3-dibutyl-6-chlorothieno[2,3-d]pyrimidin-4(3H)-one

### (19-15) probenazole

### (19-16) isoprothiolane

### (19-17) kasugamycin

### (19-18) phthalide

### (19-19) ferimzone

### (19-20) tricyclazole

### (19-21) cyprosulfamide

### (19-22) mandipropamid

### (19-23) quinoxyfen (known from ) EP-A 326 330of the formula

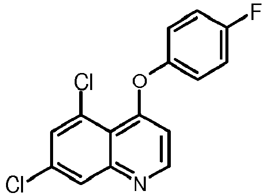

### (19-24) proquinazid (known from WO 94/26722) of the formula

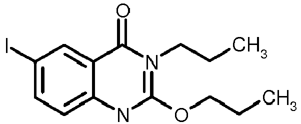

### Fungicide Group (20): (Thio)urea derivatives selected from

### (20-1) pencycuron

### (20-2) thiophanate-methyl

### (20-3) thiophanate-ethyl

### Fungicide Group (21): Amides of the general formula (XIII)

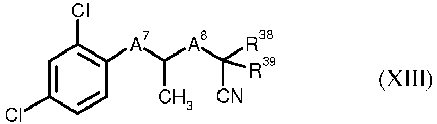

in which
A⁷ represents a direct bond or -O-,
A⁸ represents -C(=O)NH- or -NHC(=O)-,
R³⁸ represents hydrogen or C₁-C₄-alkyl,
R³⁹ represents C₁-C₆-alkyl;

### Fungicide Group (22): Triazolopyrimidines of the general formula (XIV)

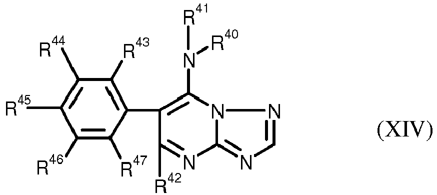

in which
R⁴⁰ represents C₁-C₆-alkyl or C₂-C₆-alkenyl,
R⁴¹ represents C₁-C₆-alkyl,
R⁴⁰ and R⁴¹ furthermore together represent C₄-C₅-alkanediyl (alkyl) which is mono- or disubstituted by C₁-C₆-alkyl,
R⁴² represents bromine or chlorine,
R⁴³ and R⁴⁷ independently of one another represent hydrogen, fluorine, chlorine or methyl,
R⁴⁴ and R⁴⁶ independently of one another represent hydrogen or fluorine,
R⁴⁵ represents hydrogen, fluorine or methyl,

### Fungicide Group (23): Iodochromones of the general formula (XV)

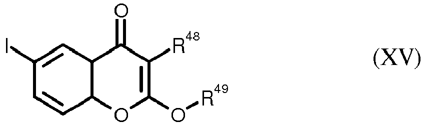

in which
R⁴⁸ represents C₁-C₆-alkyl,
R⁴⁹ represents C₁-C₆-alkyl, C₂-C₆-alkenyl or C₂-C₆-alkynyl;

### Fungicide Group (24): Biphenylcarboxamides of the general formula (XVI)

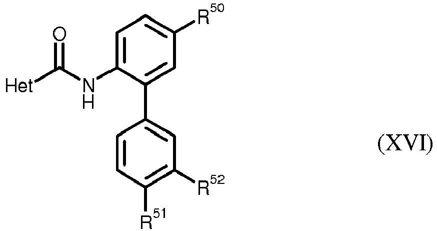

in which
R⁵⁰ represents hydrogen or fluorine,
R⁵¹ represents fluorine, chlorine, bromine, methyl, trifluoromethyl, trifluoromethoxy, -CH=N-OMe or -C(Me)=N-OMe,
R⁵² represents hydrogen, fluorine, chlorine, bromine, methyl or trifluoromethyl,
Het represents one of the radicals Het1 to Het7 below: 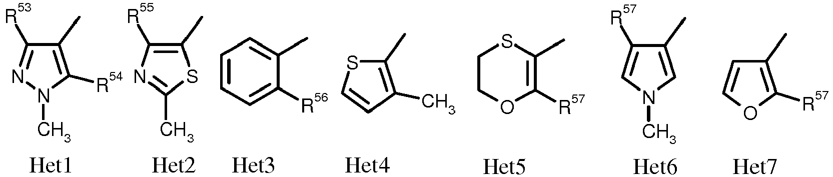 R⁵³ represents iodine, methyl, difluoromethyl or trifluoromethyl,
R⁵⁴ represents hydrogen, fluorine, chlorine or methyl,
R⁵⁵ represents methyl, difluoromethyl or trifluoromethyl,
R⁵⁶ represents chlorine, bromine, iodine, methyl, difluoromethyl or trifluoromethyl,
R⁵⁷ represents methyl or trifluoromethyl.

### Insecticide Groups (IRAC classification groups)

Insecticide Group (2) GABA-gated chloride channel antagonists, for example cyclodiene organochlorines, e.g. Chlordane and Endosulfan or phenylpyrazoles (fiproles), e.g. Ethiprole and Fipronil.

Insecticide Group (7) Juvenile hormone mimics, for example juvenile hormon analogues, e.g. Hydroprene, Kinoprene and Methoprene or Fenoxycarb or Pyriproxyfen.

Insecticide Group (8) Miscellaneous non-specific (multi-site) inhibitors, for example alkyl halides, e.g. Methyl bromide and other alkyl halides; or Chloropicrin or Sulfuryl fluoride or Borax or Tartar emetic.

Insecticide Group (10) Mite growth inhibitors, e.g. Clofentezine, Hexythiazox and Diflovidazin or Etoxazole.

Insecticide Group (11) Microbial disruptors of insect midgut membranes, e.g. Bacillus thuringiensis subspecies israelensis, Bacillus sphaericus, Bacillus thuringiensis subspecies aizawai, Bacillus thuringiensis subspecies kurstaki, Bacillus thuringiensis subspecies tenebrionis and BT crop proteins: Cry1Ab, Cry1Ac, Cry1Fa, Cry2Ab, mCry3A, Cry3Ab, Cry3Bb, Cry34/35Ab1.

Insecticide Group (12) Inhibitors of mitochondrial ATP synthase, for example Diafenthiuron or organotin miticides, e.g. Azocyclotin, Cyhexatin and Fenbutatin oxide or Propargite or Tetradifon.

Insecticide Group (13) Uncouplers of oxidative phoshorylation via disruption of the proton gradient, for example Chlorfenapyr, DNOC and Sulfluramid.

Insecticide Group (14) Nicotinic acetylcholine receptor (nAChR) channel blockers, for example Bensultap, Cartap hydrochloride, Thiocyclam and Thiosultap-sodium.

Insecticide Group (16) Inhibitors of chitin biosynthesis, type 1, for example Buprofezin.

Insecticide Group (17) Moulting disruptors, for example Cyromazine.

Insecticide Group (18) Ecdysone receptor agonists, for example Chromafenozide, Halofenozide, Methoxyfenozide and Tebufenozide.

Insecticide Group (19) Octopamine receptor agonists, for example Amitraz.

Insecticide Group (20) Mitochondrial complex III electron transport inhibitors, for example Hydramethylnon or Acequinocyl or Fluacrypyrim.

Insecticide Group (21) Mitochondrial complex I electron transport inhibitors, for example METI acaricides, e.g. Fenazaquin, Fenpyroximate, Pyrimidifen, Pyridaben, Tebufenpyrad and Tolfenpyrad or Rotenone (Derris).

Insecticide Group (22) Voltage-dependent sodium channel blockers, e.g. Indoxacarb or Metaflumizone.

Insecticide Group (24) Mitochondrial complex IV electron transport inhibitors, for example phosphines, e.g. Aluminium phosphide, Calcium phosphide, Phosphine and Zinc phosphide or Cyanide.

Insecticide Group (29) Further active ingredients with unknown or uncertain mode of action, for example Azadirachtin, Benclothiaz, Benzoximate, Bifenazate, Bromopropylate, Chinomethionat, Cryolite, Dicofol, Diflovidazin, Fluensulfone, Flometoquin, Flufenerim, Flufenoxystrobin, Flufiprole, Fluopyram, Flupyradifurone, Fufenozide, Heptafluthrin, Imidaclothiz, Iprodione, Meperfluthrin, Paichongding, Pyriminostrobin, Tetramethylfluthrin and Iodomethane; furthermore products based on Bacillus firmus (including but not limited to strain CNCM I-1582, such as, for example,VOTiVO TM, BioNem) or one of the following known active compounds:3-bromo-N-{2-bromo-4-chloro-6-[(1-cyclopropylethyl)carbamoyl]phenyl}-1-(3-chloropyridin-2-yl)-1H-pyrazole-5-carboxamide (known from WO2005/077934) and 1-{2-fluoro-4-methyl-5-[(2,2,2-trifluorethyl)sulfinyl]phenyl}-3-(trifluoromethyl)-1H-1,2,4-triazol-5-amine (known from WO2006/043635), {1'-[(2E)-3-(4-chlorophenyl)prop-2-en-1-yl]-5-fluorospiro[indole-3,4'-piperidin]-1(2H)-yl}(2-chloropyridin-4-yl)methanone (known from WO2003/106457), 2-chloro-N-[2-{1-[(2E)-3-(4-chlorophenyl)prop-2-en-1-yl]piperidin-4-yl}-4-(trifluoromethyl)phenyl]isonicotinamide (known from WO2006/003494), 3-(2,5-dimethylphenyl)-4-hydroxy-8-methoxy-1,8-diazaspiro[4.5]dec-3-en-2-one (known from WO2009/049851), 3-(2,5-dimethylphenyl)-8-methoxy-2-oxo-1,8-diazaspiro[4.5]dec-3-en-4-yl ethyl carbonate (known from WO2009/049851), 4-(but-2-yn-1-yloxy)-6-(3,5-dimethylpiperidin-1-yl)-5-fluoropyrimidine (known from WO2004/099160), 4-(but-2-yn-1-yloxy)-6-(3-chlorophenyl)pyrimidine (known from WO2003/076415), PF1364 (CAS-Reg.No. 1204776-60-2), 4-[5-(3,5-dichlorophenyl)-5-(trifluoromethyl)-4,5-dihydro-1,2-oxazol-3-yl]-2-methyl-N-{2-oxo-2-[(2,2,2-trifluoroethyl)amino]ethyl}benzamide (known from WO2005/085216), 4-{5-[3-chloro-5-(trifluoromethyl)phenyl]-5-(trifluoromethyl)-4,5-dihydro-1,2-oxazol-3-yl}-N-{2-oxo-2-[(2,2,2-trifluoroethyl)amino]ethyl}-1-naphthamide (known from WO2009/002809), methyl 2-[2-({[3-bromo-1-(3-chloropyridin-2-yl)-1H-pyrazol-5-yl]carbonyl}amino)-5-chloro-3-methylbenzoyl]-2-methylhydrazinecarboxylate (known from WO2005/085216), methyl 2-[2-({[3-bromo-1-(3-chloropyridin-2-yl)-1H-pyrazol-5-yl]carbonyl}amino)-5-cyano-3-methylbenzoyl]-2-ethylhydrazinecarboxylate (known from WO2005/085216), methyl 2-[2-({[3-bromo-1-(3-chloropyridin-2-yl)-1H-pyrazol-5-yl]carboxyl}amino)-5 -cyano -3-methylbenzoyl]-2 -methylhydrazinecarboxylate (known from WO2005/085216), methyl 2-[3,5-dibromo-2-({[3-bromo-1-(3-chloropyridin-2-yl)-1H-pyrazol-5-yl]carbonyl}amino)benzoyl]-2-ethylhydrazinecarboxylate (known from WO2005/085216), 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide (known from WO2010/069502), N-[2-(5-amino-1,3,4-thiadiazol-2-yl)-4-chloro-6-methylphenyl]-3-bromo-1-(3-chloropyridin-2-yl)-1H-pyrazole-5-carboxamide (known from CN102057925), 3-chloro-N-(2-cyanopropan-2-yl)-N-[4-(1,1,1,2,3,3,3-heptafluoropropan-2-yl)-2-methylphenyl]phthalamide (known from WO2012/034472 ), 8-chloro-N-[(2-chloro-5-methoxyphenyl)sulfonyl]-6-(trifluoromethyl)imidazo[1,2-a]pyridine-2-carboxamide (known from WO2010/129500 ), 8-chloro-N-[(2-chloro-5-methoxyphenyl)sulfonyl]-6-(trifluoromethyl)imidazo[1,2-a]pyridine-2-carboxamide (known from WO2009/080250 ), 1-[(2-chloro-1,3-thiazol-5-yl)methyl]-4-oxo-3-phenyl-4H-pyrido[1,2-a]pyrimidin-1-ium-2-olate (known from WO2009/099929 ), 1-[(6-chloropyridin-3-yl)methyl]-4-oxo-3-phenyl-4H-pyrido[1,2-a]pyrimidin-1-ium-2-olate (known from WO2009/099929 ), (5S,8R)-1-[(6-chloropyridin-3-yl)methyl]-9-nitro-2,3,5,6,7,8-hexahydro-1H-5,8-epoxyimidazo[1,2-a]azepine (known from WO2010/069266), (2E)-1-[(6-chloropyridin-3-yl)methyl]-N'-nitro-2-pentylidenehydrazinecarboximidamide (known from WO2010/060231), 4-(3-{2,6-dichloro-4-[(3,3-dichloroprop-2-en-1-yl)oxy]phenoxy}propoxy)-2-methoxy-6-(trifluoromethyl)pyrimidine (known from CN101337940), N-[2-(tert-butylcarbamoyl)-4-chloro-6-methylphenyl]-1-(3-chloropyridin-2-yl)-3-(fluoromethoxy)-1H-pyrazole-5-carboxamide (known from WO2008/134969), triflumezopyrim (3,4-dihydro-2,4-dioxo-1-(pyrimidin-5-ylmethyl)-3-(α,α,α-trifluoro-m-tolyl)-2H-pyrido[1,2-a]pyrimidin-1-ium-3-ide) (known from WO 2009/099929).

### Biological control agent

### BCA (1) bacteria,

### BCA (2) fungi or yeasts,

### BCA (3) protozoas,

### BCA (4) viruses,

### BCA (5) entomopathogenic nematode,

### BCA (6) products produced by microorganisms including proteins or secondary metabolites and

### BCA (7) botanical extracts

### have very good insecticidal and fungicidal properties.

### Preferred Fungicides

The formula (II) embraces the following preferred mixing partners of Fungicide Group (2):
(2-1) azoxystrobin (known from EP-A 0 382 375) of the formula 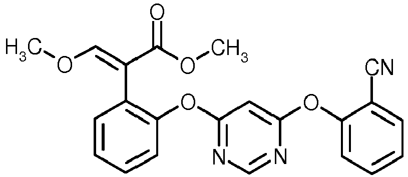
(2-2) fluoxastrobin (known from DE-A 196 02 095) of the formula 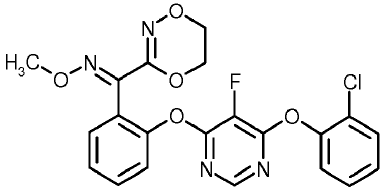 (2-3) (2*E*)-2-(2-{[6-(3-chloro-2-methylphenoxy)-5-fluoro-4-pyrimidinyl]oxy}phenyl)-2-(methoxy-imino)-N-methylethanamide (known from DE-A 196 46 407, EP-B 0 712 396) of the formula 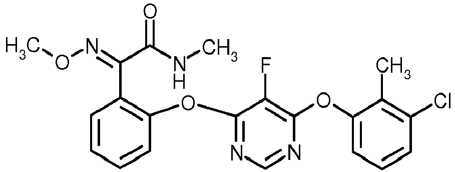 (2-4) trifloxystrobin (known from EP-A 0 460 575) of the formula 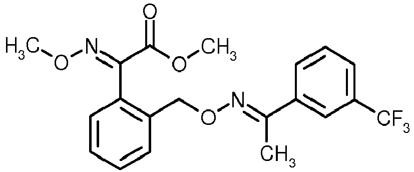
(2-5) (2*E*)-2-(methoxyimino)-*N*-methyl-2-(2-{[({(1*E*)-1-[3-(trifluoromethyl)phenyl]ethylidene}-amino)oxy]methyl}phenyl)ethanamide (known from EP-A 0 569 384) of the formula 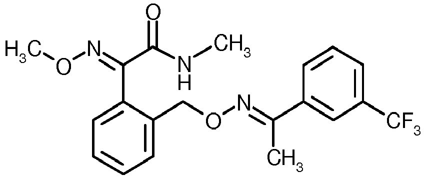
(2-6) (2*E*)-2-(methoxyimino)-*N*-methyl-2-{2-[(E)-({1-[3-(trifluoromethyl)phenyl)ethoxy}imino)-methyl]phenyl}ethanamide (known from EP-A 0 596 254) of the formula 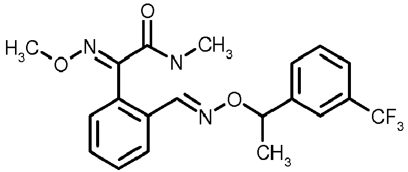
(2-7) orysastrobin (known from DE-A 195 39 324) of the formula 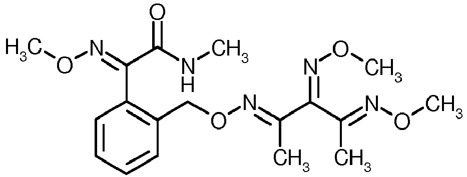
(2-8) 5-methoxy-2-methyl-4-(2-{[({(1*E*)-1-[3-(trifluoromethyl)phenyl]ethylidene}amino)oxy]-methyl}phenyl)-2,4-dihydro-3*H*-1,2,4-triazol-3-one (known from WO 98/23155) of the formula 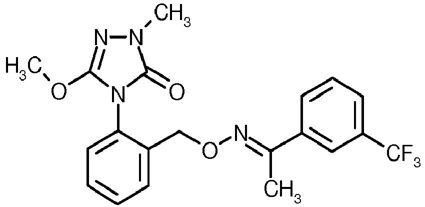
(2-9) kresoxim-methyl (known from EP-A 0 253 213) of the formula 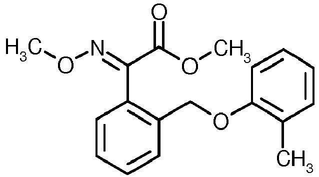 (2-10) dimoxystrobin (known from EP-A 0 398 692) of the formula 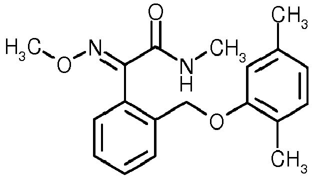 (2-11) picoxystrobin (known from EP-A 0 278 595) of the formula 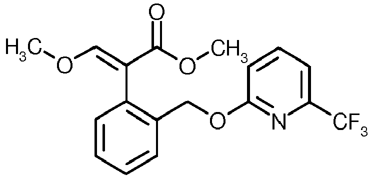 (2-12) pyraclostrobin (known from DE-A 44 23 612) of the formula 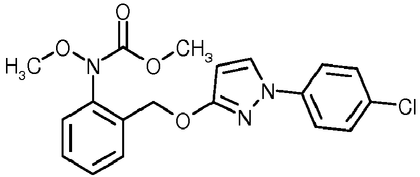 (2-13) metominostrobin (known from EP-A 0 398 692) of the formula

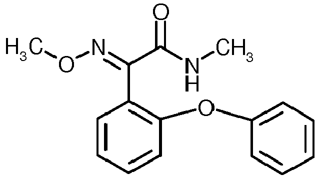

The formula (III) embraces the following preferred mixing partners of Fungicide Group (3):
(3-1) azaconazole (known from DE-A 25 51 560) of the formula 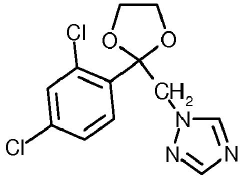
(3-2) etaconazole (known from DE-A 25 51 560) of the formula 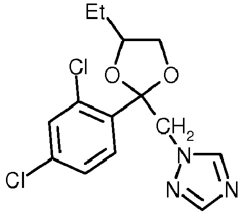 (3-3) propiconazole (known from DE-A 25 51 560) of the formula 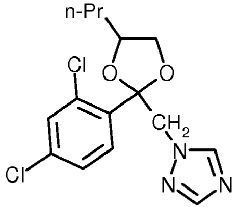
(3-4) difenoconazole (known from EP-A 0 112 284) of the formula 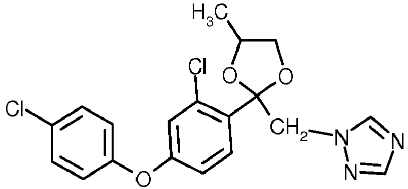
(3-5) bromuconazole (known from EP-A 0 258 161) of the formula 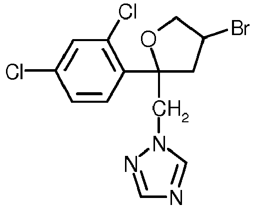
(3-6) cyproconazole (known from DE-A 34 06 993) of the formula 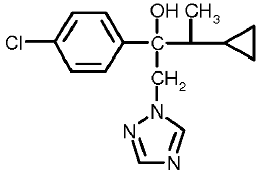
(3-7) hexaconazole (known from DE-A 30 42 303) of the formula 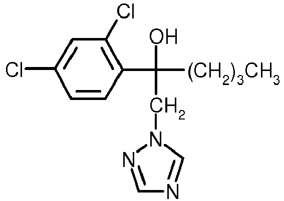
(3-8) penconazole (known from DE-A 27 35 872) of the formula 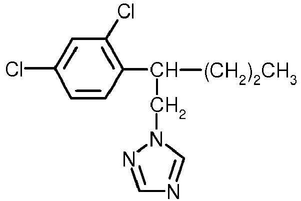
(3-9) myclobutanil (known from EP-A 0 145 294) of the formula 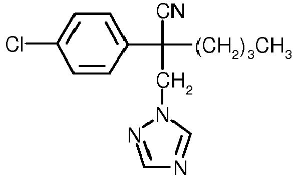
(3-10) tetraconazole (known from EP-A 0 234 242) of the formula 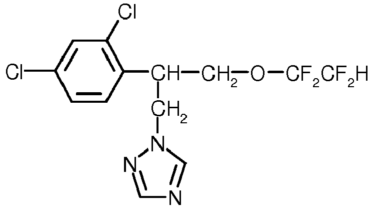
(3-11) flutriafol (known from EP-A 0 015 756) of the formula 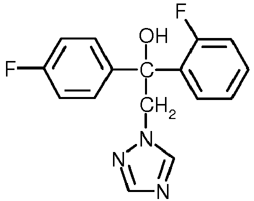
(3-12) epoxiconazole (known from EP-A 0 196 038) of the formula 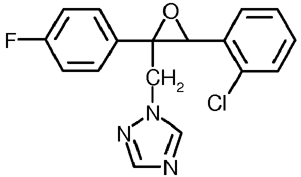
(3-13) flusilazole (known from EP-A 0 068 813) of the formula 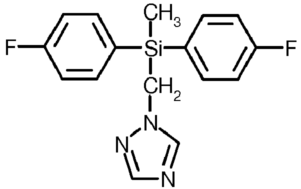
(3-14) simeconazole (known from EP-A 0 537 957) of the formula 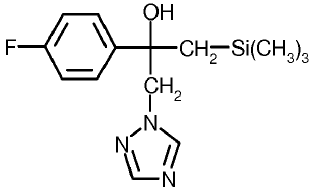
(3-15) prothioconazole (known from WO 96/16048) of the formula 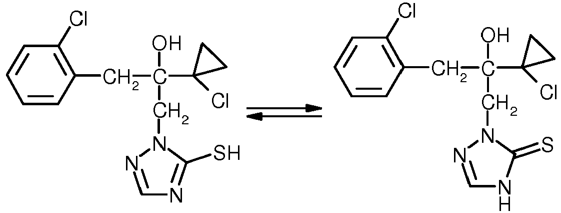
(3-16) fenbuconazole (known from DE-A 37 21 786) of the formula 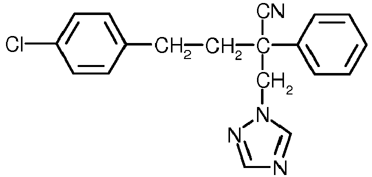
(3-17) tebuconazole (known from EP-A 0 040 345) of the formula 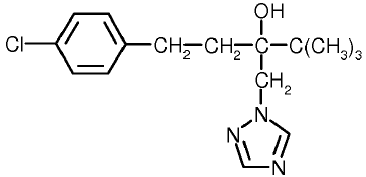
(3-18) ipconazole (known from EP-A 0 329 397) of the formula 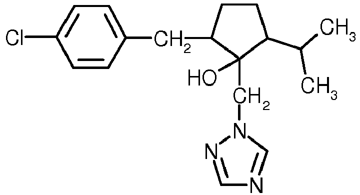
(3-19) metconazole (known from EP-A 0 329 397) of the formula 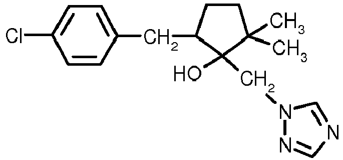
(3-20) triticonazole (known from EP-A 0 378 953) of the formula 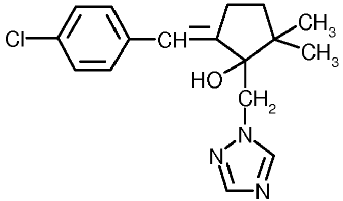
(3-21) bitertanol (known from DE-A 23 24 010) of the formula 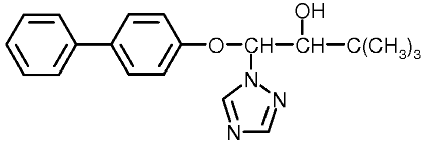
(3-22) triadimenol (known from DE-A 23 24 010) of the formula 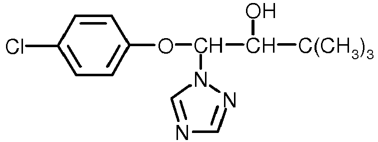
(3-23) triadimefon (known from DE-A 22 01 063) of the formula 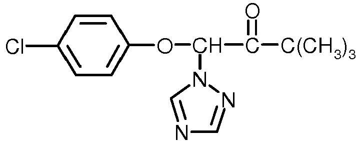
(3-24) fluquinconazole (known from EP-A 0 183 458) of the formula 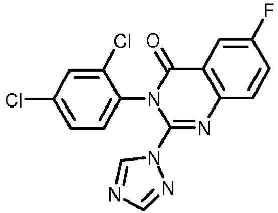
(3-25) quinconazole (known from EP-A 0 183 458) of the formula

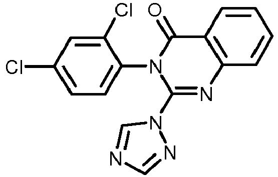

The formula (IV) embraces the following preferred mixing partners of Fungicide Group (4):
(4-1) dichlofluanid (known from DE-A 11 93 498) of the formula 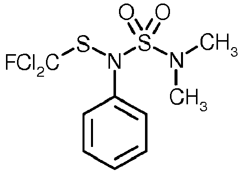
(4-2) tolylfluanid (known from DE-A 11 93 498) of the formula

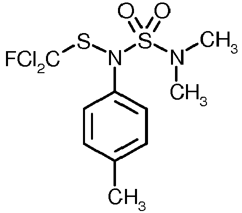

Preferred mixing partners of Fungicide Group (5) are
(5-1) iprovalicarb (known from DE-A 40 26 966) of the formula 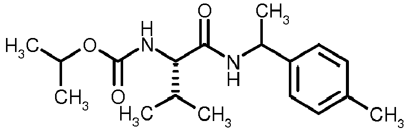
(5-3) benthiavalicarb (known from WO 96/04252) of the formula

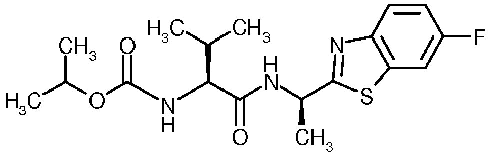

The formula (V) embraces the following preferred mixing partners of Fungicide Group (6):
(6-1) 2-chloro-N-(1,1,3-trimethylindan-4-yl)nicotinamide (known from EP-A 0 256 503) of the formula 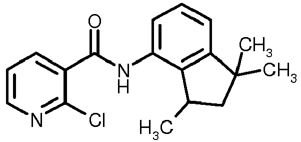
(6-2) boscalid (known from DE-A 195 31 813) of the formula 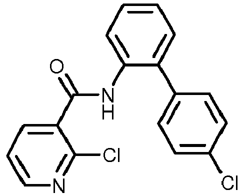
(6-3) furametpyr (known from EP-A 0 315 502) of the formula

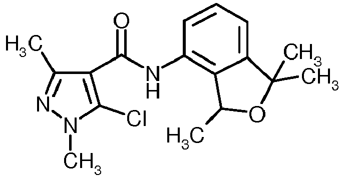

(6-4) N-(3-p-tolylthiophen-2-yl)-1-methyl-3-trifluoromethyl-1H-pyrazole-4-carboxamide (known from EP-A 0 737 682) of the formula 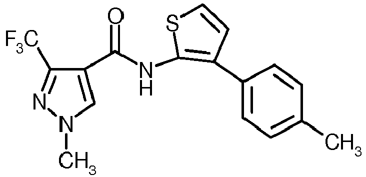
(6-5) ethaboxam (known from EP-A 0 639 574) of the formula 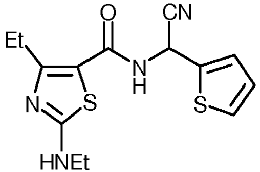
(6-6) fenhexamid (known from EP-A 0 339 418) of the formula 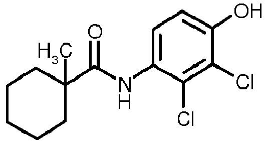
(6-7) carpropamid (known from EP-A 0 341 475) of the formula 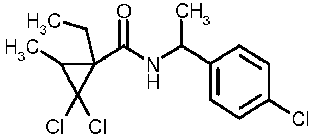
(6-8) 2-chloro-4-(2-fluoro-2-methylpropionylamino)-N,N-dimethylbenzamide (known from EP-A 0 600 629) of the formula 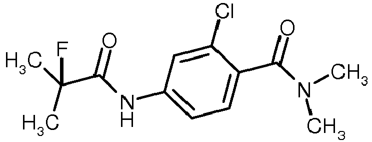
(6-9) fluopicolid (known from WO 99/42447) of the formula 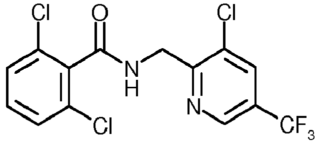
(6-10) zoxamide (known from EP-A 0 604 019) of the formula 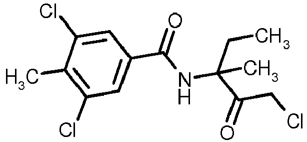
(6-12) carboxin (known from US 3,249,499) of the formula 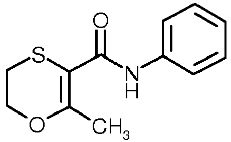
(6-13) tiadinil (known from US 6,616,054) of the formula 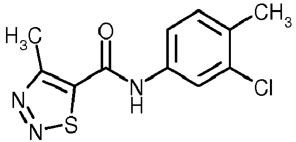
(6-14) penthiopyrad (known from EP-A 0 737 682) of the formula

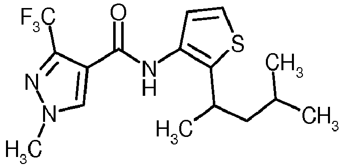

(6-15) silthiofam (known from WO 96/18631) of the formula 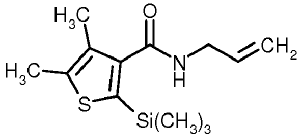
(6-16) *N*-[2-(1,3-dimethylbutyl)phenyl]-1-methyl-4-(trifluoromethyl)-1H-pyrrole-3-carboxamide (known from WO 02/38542) of the formula 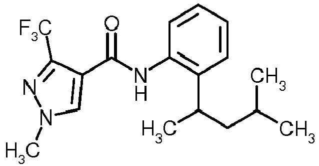
(6-17) flutolanil (known from DE-A 27 31 522) of the formula 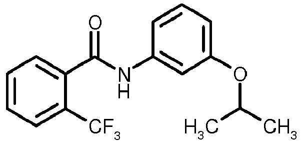
(6-18) N-[2-(1,3-dimethylbutyl)phenyl]-5-fluoro-1,3-dimethyl-1H-pyrazole-4-carboxamide (known from EP-A 1 414 803) of the formula 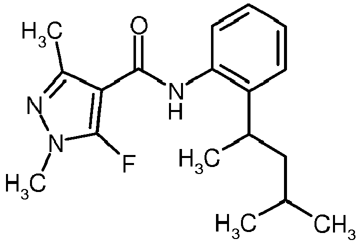
(6-20) N-[2-(1,3-dimethylbutyl)phenyl]-2-(trifluoromethyl)benzamide (known from EP-A 1 519 913) of the formula 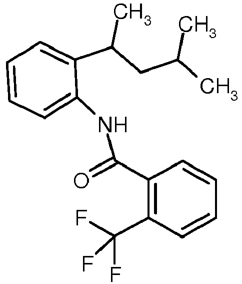
(6-21) N-[2-(1,3-dimethylbutyl)phenyl]-2-iodobenzamide (known from EP-A 1 519 913) of the formula 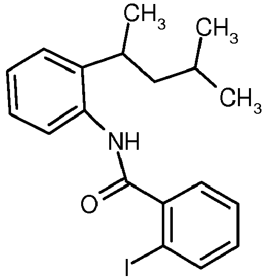
(6-22) N-(4'-chloro-3'-fluorobiphenyl-2-yl)-4-(difluoromethyl)-2-methyl-1,3-thiazole-5-carboxamide (known from EP-A 1 404 407) of the formula 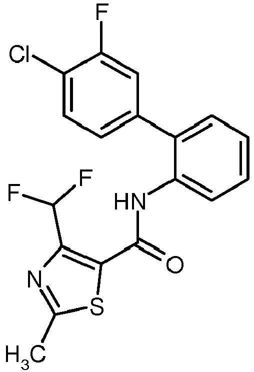
(6-23) N-[5-(4-chlorophenyl)pyrimidin-4-yl]-2-iodo-N-(2-iodobenzoyl)benzamide of the formula 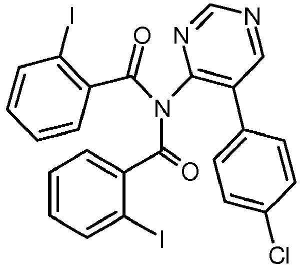
(6-24) N-(3',4'-dichlorobiphenyl-2-yl)-2-methyl-4-(trifluoromethyl)-1,3-thiazole-5-carboxamide (known from EP-A 1 474 406) of the formula

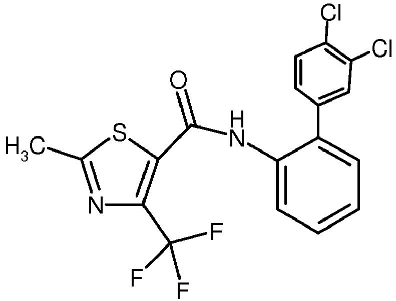

Preferred mixing partners of Fungicide Group (7) are
(7-1) mancozeb (known from DE-A 12 34 704) having the IUPAC name manganese ethylenebis(dithiocarbamate) (polymeric) complex with zinc salt
(7-2) maneb (known from US 2,504,404) of the formula 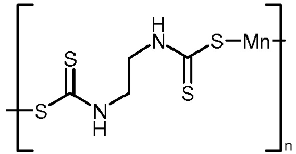
(7-3) metiram (known from DE-A 10 76 434) having the IUPAC name zinc ammoniate ethylenebis(dithiocarbamate)-poly(ethylenethiuram disulphide)
(7-4) propineb (known from GB 935 981) of the formula 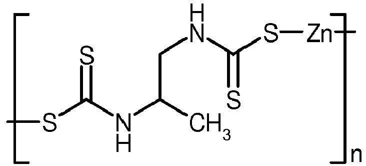
(7-5) thiram (known from US 1,972,961) of the formula 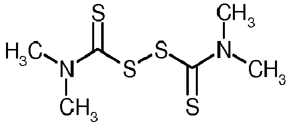
(7-6) zineb (known from DE-A 10 81 446) of the formula 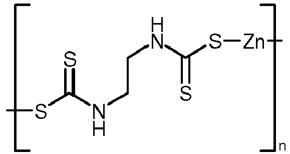
(7-7) ziram (known from US 2,588,428) of the formula

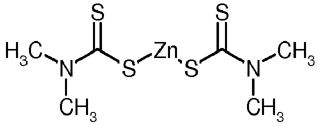

The formula (VI) embraces the following preferred mixing partners of Fungicide Group (8):
(8-1) benalaxyl (known from DE-A 29 03 612) of the formula 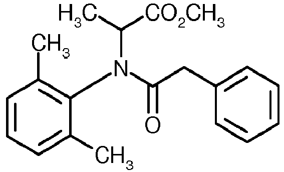
(8-2) furalaxyl (known from DE-A 25 13 732) of the formula 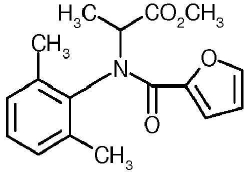
(8-3) metalaxyl (known from DE-A 25 15 091) of the formula 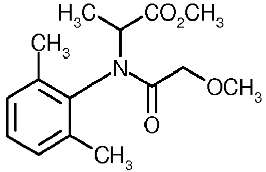
(8-4) metalaxyl-M (known from WO 96/01559) of the formula 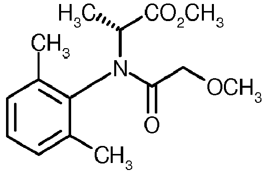
(8-5) benalaxyl-M of the formula

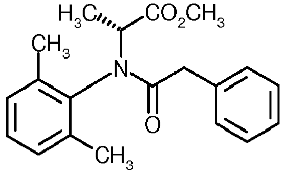

The formula (VII) embraces the following preferred mixing partners of Fungicide Group (9):
(9-1) cyprodinil (known from EP-A 0 310 550) of the formula 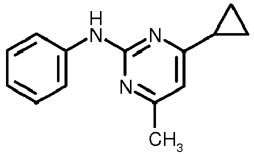
(9-2) mepanipyrim (known from EP-A 0 270 111) of the formula 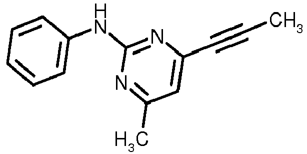
(9-3) pyrimethanil (known from DD 151 404) of the formula

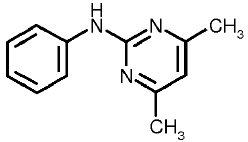

The formula (VIII) embraces the following preferred mixing partners of Fungicide Group (10):
(10-1) 6-chloro-5-[(3,5-dimethylisoxazol-4-yl)sulphonyl]-2,2-difluoro-5H-[1,3]dioxolo[4,5-f]-benzimidazole (known from WO 97/06171) of the formula 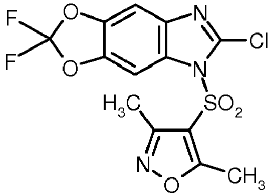
(10-2) benomyl (known from US 3,631,176) of the formula 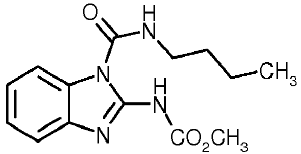
(10-3) carbendazim (known from US 3,010,968) of the formula 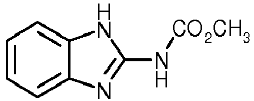
(10-4) chlorfenazole of the formula 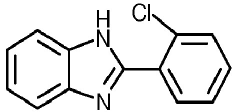
(10-5) fuberidazole (known from DE-A 12 09 799) of the formula 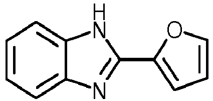
(10-6) thiabendazole (known from US 3,206,468) of the formula

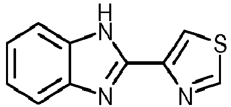

The formula (IX) embraces the following preferred mixing partners of Fungicide Group (11):
(11-1) diethofencarb (known from EP-A 0 078 663) of the formula 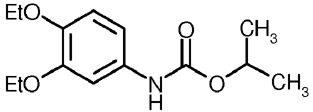
(11-2) propamocarb (known from US 3,513,241) of the formula 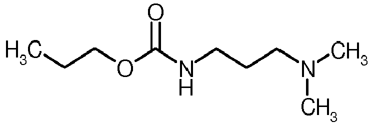
(11-3) propamocarb-hydrochloride (known from US 3,513,241) of the formula 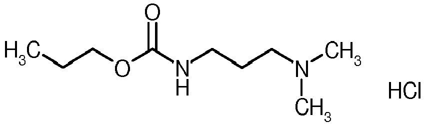
(11-4) propamocarb-fosetyl of the formula

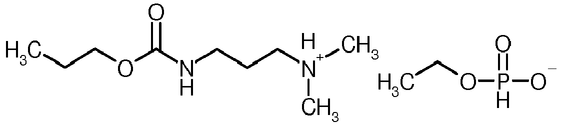

Preferred mixing partners of Fungicide Group (12) are
(12-1) captafol (known from US 3,178,447) of the formula 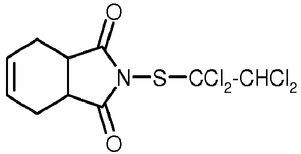
(12-2) captan (known from US 2,553,770) of the formula 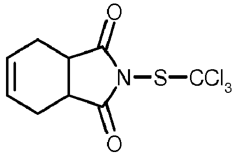
(12-3) folpet (known from US 2,553,770) of the formula 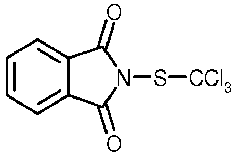
(12-4) iprodione (known from DE-A 21 49 923) of the formula 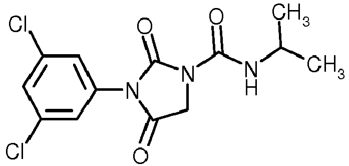
(12-5) procymidone (known from DE-A 20 12 656) of the formula 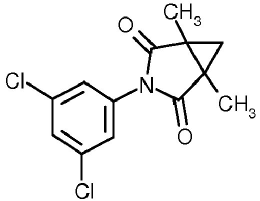
(12-6) vinclozolin (known from DE-A 22 07 576) of the formula

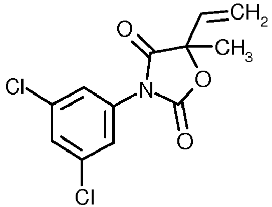

Preferred mixing partners of Fungicide Group (13) are
(13-1) dodine (known from GB 11 03 989) of the formula 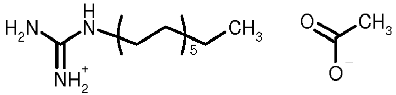
(13-2) guazatine (known from GB 11 14 155)
(13-3) iminoctadine triacetate (known from EP-A 0 155 509) of the formula

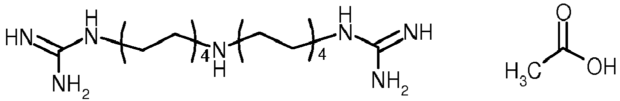

Preferred mixing partners of Fungicide Group (14) are
(14-1) cyazofamid (known from EP-A 0 298 196) of the formula 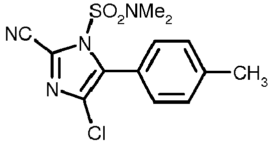
(14-2) prochloraz (known from DE-A 24 29 523) of the formula 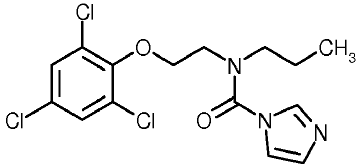
(14-3) triazoxide (known from DE-A 28 02 488) of the formula 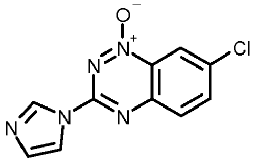
(14-4) pefurazoate (known from EP-A 0 248 086) of the formula

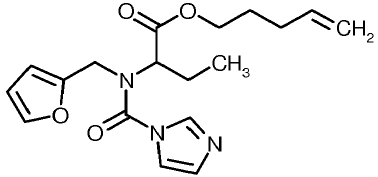

The formula (X) embraces the following preferred mixing partners of Fungicide Group (15):
(15-1) aldimorph (known from DD 140 041) of the formula 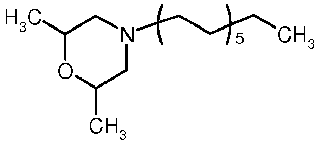
(15-2) tridemorph (known from GB 988 630) of the formula 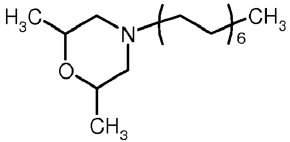
(15-3) dodemorph (known from DE-A 25 432 79) of the formula 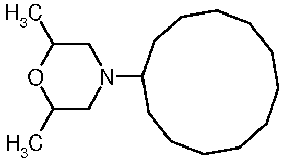
(15-4) fenpropimorph (known from DE-A 26 56 747) of the formula 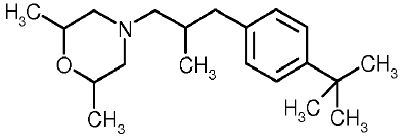
(15-5) dimethomorph (known from EP-A 0 219 756) of the formula 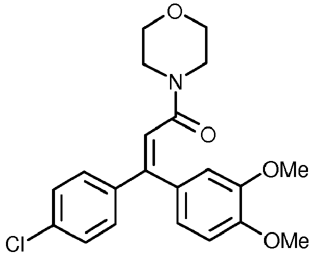
(15-6) flumorph (known from EP-A 0 860 438) of the formula

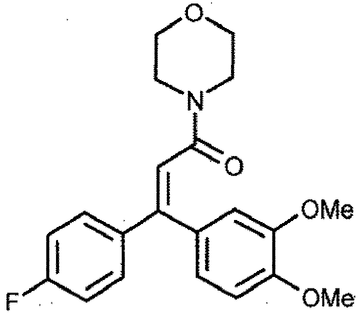

The formula (XI) embraces the following preferred mixing partners of Fungicide Group (16):
(16-1) fenpiclonil (known from EP-A 0 236 272) of the formula 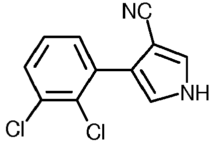
(16-2) fludioxonil (known from EP-A 0 206 999) of the formula 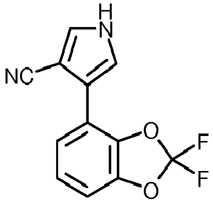
(16-3) pyrrolnitrin (known from JP 65-25876) of the formula

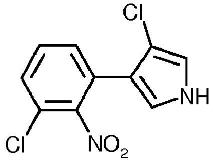

Preferred mixing partners of Fungicide Group (17) are
(17-1) fosetyl-Al (known from DE-A 24 56 627) of the formula 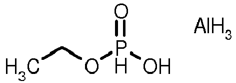
(17-2) phosphonic acid (known chemical) of the formula 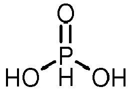
(17-3) tolclofos-methyl (known from DE-A 25 01 040) of the formula

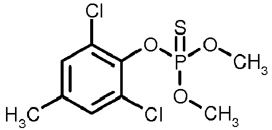

The formula (XII) embraces the following preferred mixing partners of Fungicide Group (18) which are known from WO 96/23793 and can in each case be present as E or Z isomers. Accordingly, compounds of the formula (XII) can be present as a mixture of different isomers or else in the form of a single isomer. Preference is given to compounds of the formula (XII) in the form of their E isomer:
(18-1) the compound 2-(2,3-dihydro-1H-inden-5-yl)-N-[2-(3,4-dimethoxyphenyl)ethyl]-2-(methoxy-imino)acetamide of the formula 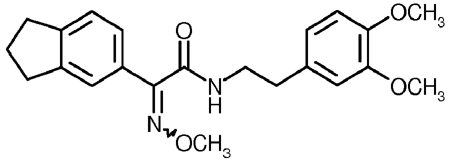
(18-2) the compound N-[2-(3,4-dimethoxyphenyl)ethyl]-2-(methoxyimino)-2-(5,6,7,8-tetrahydro-naphthalen-2-yl)acetamide of the formula 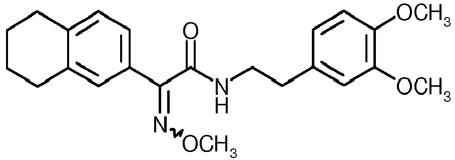
(18-3) the compound 2-(4-chlorophenyl)-N-[2-(3,4-dimethoxyphenyl)ethyl]-2-(methoxyimino)-acetamide of the formula 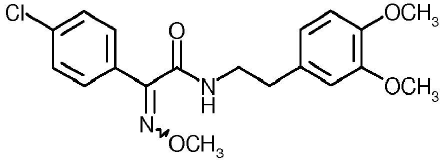
(18-4) the compound 2-(4-bromophenyl)-N-[2-(3,4-dimethoxyphenyl)ethyl]-2-(methoxyimino)-acetamide of the formula 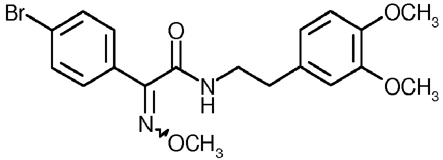
(18-5) the compound 2-(4-methylphenyl)-N-[2-(3,4-dimethoxyphenyl)ethyl]-2-(methoxyimino)-acetamide of the formula 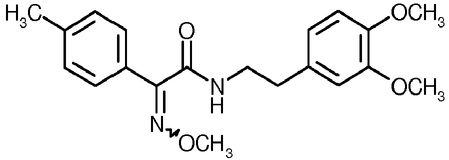
(18-6) the compound 2-(4-ethylphenyl)-N-[2-(3,4-dimethoxyphenyl)ethyl]-2-(methoxyimino)-acetamide of the formula

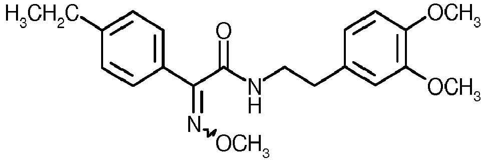

Preferred mixing partners of Fungicide Group (19) are
(19-1) acibenzolar-S-methyl (known from EP-A 0 313 512) of the formula 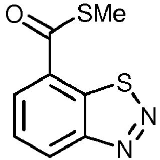
(19-2) chlorothalonil (known from US 3,290,353) of the formula 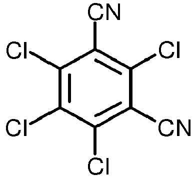
(19-3) cymoxanil (known from DE-A 23 12 956) of the formula 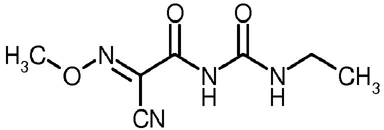
(19-4) edifenphos (known from DE-A 14 93 736) of the formula 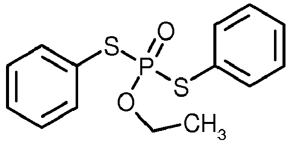
(19-5) famoxadone (known from EP-A 0 393 911) of the formula 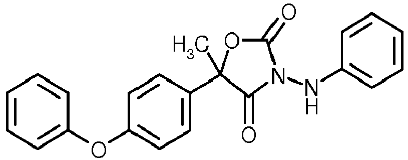
(19-6) fluazinam (known from EP-A 0 031 257) of the formula 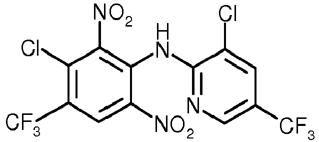
(19-7) copper oxychloride
(19-9) oxadixyl (known from DE-A 30 30 026) of the formula 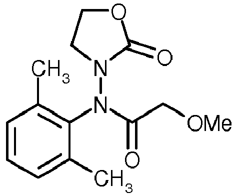
(19-10) spiroxamine (known from DE-A 37 35 555) of the formula 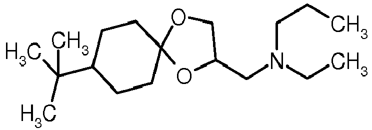
(19-11) dithianon (known from JP-A 44-29464) of the formula 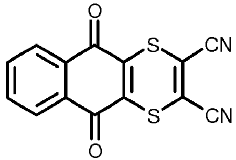
(19-12) metrafenone (known from EP-A 0 897 904) of the formula 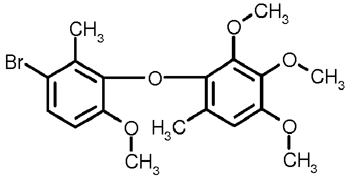
(19-13) 2,3-dibutyl-6-chlorothieno[2,3-d]pyrimidin-4(3H)one (known from WO 99/14202) of the formula 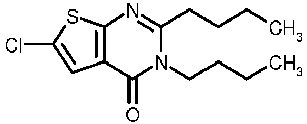
(19-14) probenazole (known from US 3,629,428) of the formula 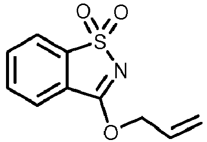
(19-15) isoprothiolane (known from US 3,856,814) of the formula 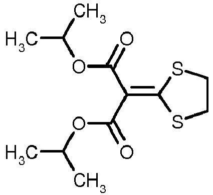
(19-16) kasugamycin (known from GB 1 094 567) of the formula 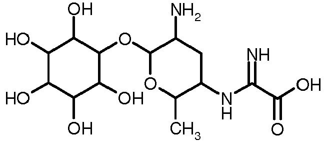
(19-17) phthalide (known from JP-A 57-55844) of the formula 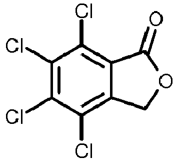
(19-18) ferimzone (known from EP-A 0 019 450) of the formula 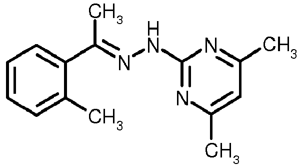
(19-19) tricyclazole (known from DE-A 22 50 077) of the formula 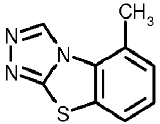
(19-20) cyprosulfamide of the formula 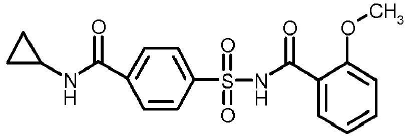
(19-21) mandipropamid (known from WO 01/87822) of the formula

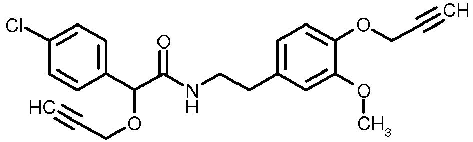

Preferred mixing partners of Fungicide Group (20) are
(20-1) pencycuron (known from DE-A 27 32 257) of the formula 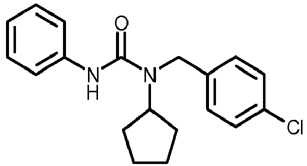
(20-2) thiophanate-methyl (known from DE-A 18 06 123) of the formula 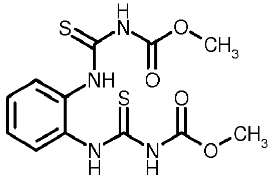
(20-3) thiophanate-ethyl (known from DE-A 18 06 123) of the formula

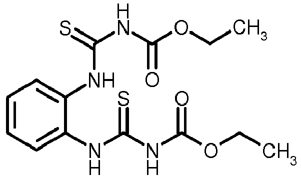

Preferred mixing partners of Fungicide Group (21) are
(21-1) fenoxanil (known from EP-A 0 262 393) of the formula 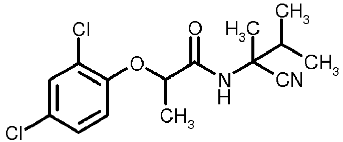
(21-2) diclocymet (known from JP-A 7-206608) of the formula

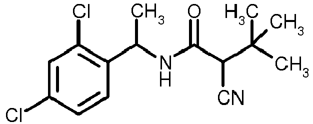

Preferred mixing partners of Fungicide Group (22) are
(22-1) 5-chloro-*N*-[*(1S)*-2,2,2-trifluoro-1-methylethyl]-6-(2,4,6-trifluorophenyl)[1,2,4]triazolo-[1,5-a]pyrimidine-7-amine (known from US 5,986,135) of the formula 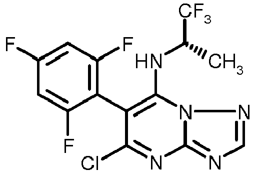
(22-2) 5-chloro-*N*-[*(1R)*-1,2-dimethylpropyl]-6-(2,4,6-trifluorophenyl)[1,2,4]triazolo[1,5-a]pyrimidine-7-amine (known from WO 02/38565) of the formula 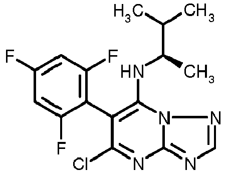
(22-3) 5-chloro-6-(2-chloro-6-fluorophenyl)-7-(4-methylpiperidin-1-yl)[1,2,4]triazolo[1,5-a]pyrimidine (known from US 5,593,996) of the formula 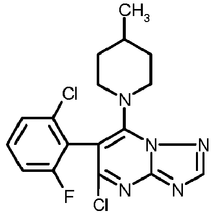
(22-4) 5-chloro-6-(2,4,6-trifluorophenyl)-7-(4-methylpiperidin-1-yl)[1,2,4]triazolo[1,5-a]pyrimidine (known from DE-A 101 24 208) of the formula

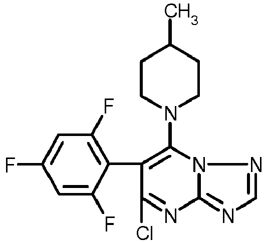

Preferred mixing partners of Fungicide Group (23) are
(23-1) 2-butoxy-6-iodo-3-propylbenzopyran-4-one (known from WO 03/014103) of the formula 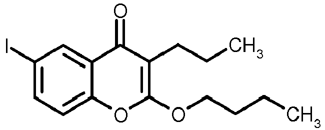
(23-2) 2-ethoxy-6-iodo-3-propylbenzopyran-4-one (known from WO 03/014103) of the formula 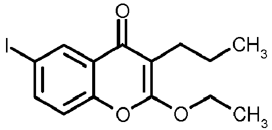
(23-3) 6-iodo-2-propoxy-3-propylbenzopyran-4-one (known from WO 03/014103) of the formula 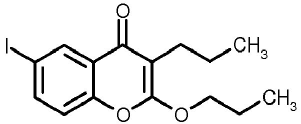
(23-4) 2-but-2-ynyloxy-6-iodo-3-propylbenzopyran-4-one (known from WO 03/014103) of the formula 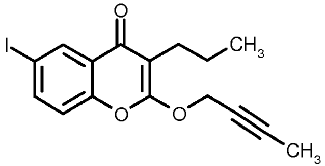
(23-5) 6-iodo-2-(1-methylbutoxy)-3-propylbenzopyran-4-one (known from WO 03/014103) of the formula 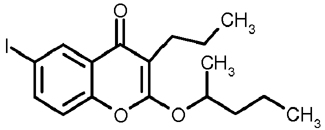
(23-6) 2-but-3-enyloxy-6-iodobenzopyran-4-one (known from WO 03/014103) of the formula 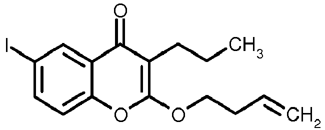
(23-7) 3-butyl-6-iodo-2-isopropoxybenzopyran-4-one (known from WO 03/014103) of the formula

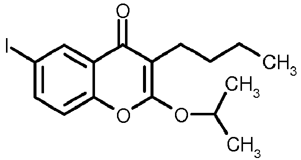

Preferred mixing partners of Fungicide Group (24) are
(24-1) *N*-(3',4'-dichloro-5-fluoro-1,1'-biphenyl-2-yl)-3-(difluoromethyl)-1-methyl-1*H*-pyrazole-4-carboxamide (known from WO 03/070705) of the formula 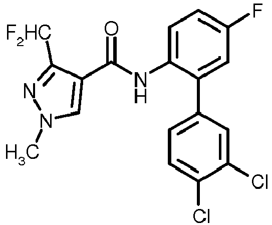
(24-2) 3-(difluoromethyl)-*N*-{3'-fluoro-4'-[(*E*)-(methoxyimino)methyl]-1,1'-biphenyl-2-yl}-1-methyl-1*H*-pyrazole-4-carboxamide (known from WO 02/08197) of the formula 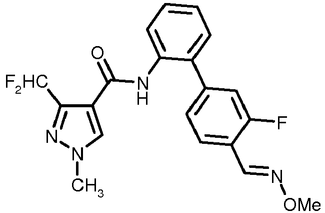
(24-3) 3-(trifluoromethyl)-*N*-{3'-fluoro-4'-[(*E*)-(methoxyimino)methyl]-1,1'-biphenyl-2-yl}-1-methyl-1*H*-pyrazole-4-carboxamide (known from WO 02/08197) of the formula 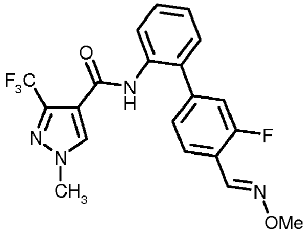
(24-4) *N*-(3',4'-dichloro-1,1'-biphenyl-2-yl)-5-fluoro-1,3-dimethyl-1*H*-pyrazole-4-carboxamide (known from WO 00/14701) of the formula 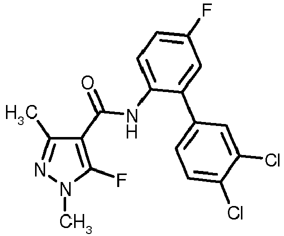
(24-5) *N*-(4'-chloro-3'-fluoro-1,1'-biphenyl-2-yl)-2-methyl-4-(trifluoromethyl)-1,3-thiazole-5-carboxamide (known from WO 03/066609) of the formula 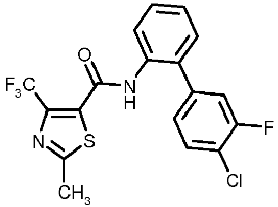
(24-6) *N*-(4'-chloro-1,1'-biphenyl-2-yl)-4-(difluoromethyl)-2-methyl-1,3-thiazole-5-carboxamide (known from WO 03/066610) of the formula 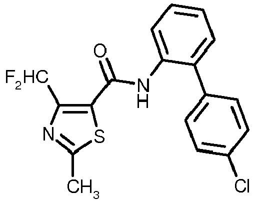
(24-7) *N*-(4'-bromo-1,1'-biphenyl-2-yl)-4-(difluoromethyl)-2-methyl-1,3-thiazole-5-carboxamide (known from WO 03/066610) of the formula 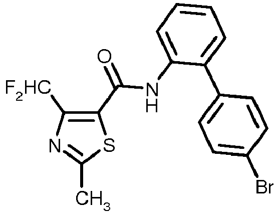
(24-8) 4-(difluoromethyl)-2-methyl-*N*-[4'-(trifluoromethyl)-1,1'-biphenyl-2-yl]-1,3-thiazole-5-carboxamide (known from WO 03/066610) of the formula

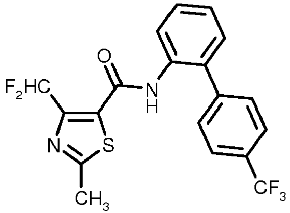

Compound (6-7), carpropamid, has three asymmetrically substituted carbon atoms. Accordingly, compound (6-7) can be present as a mixture of different isomers or else in the form of a single component. Particular preference is given to the compounds
(1*S*,3*R*)-2,2-dichloro-*N*-[(1*R*)-1-(4-chlorophenyl)ethyl]-1-ethyl-3-methylcyclopropanecarboxamide of the formula 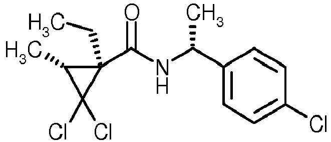 and
(1*R*,3*S*)-2,2-dichloro-*N*-[(1*R*)-1-(4-chlorophenyl)ethyl]-1-ethyl-3-methylcyclopropanecarboxamide of the formula

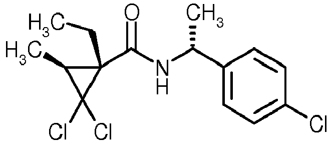

Particularly preferred active compounds of Fungicide Groups (2) to (24) are the following active compounds:
(2-1) azoxystrobin
(2-2) fluoxastrobin
(2-3) (2*E*)-2-(2-{[6-(3-chloro-2-methylphenoxy)-5-fluoro-4-pyrimidinyl]oxy}phenyl)-2-(methoxyimino)-*N*-methylethanamide
(2-4) trifloxystrobin
(2-5) (2*E*)-2-(methoxyimino)-*N*-methyl-2-(2-{[({(1*E*)-1-[3-(trifluoromethyl)-phenyl]ethylidene}amino)oxy]methyl}phenyl)ethanamide
(2-6) (2*E*)-2-(methoxyimino)-*N*-methyl-2-{2-[(*E*)-({1-[3-(trifluoromethyl)phenyl]-ethoxy}imino)methyl]phenyl}ethanamide
(2-8) 5-methoxy-2-methyl-4-(2-{[({(1*E*)-1-[3-(trifluoromethyl)phenyl]ethylidene}-amino)oxy]methyl}phenyl)-2,4-dihydro-3*H*-1,2,4-triazol-3-one
(2-9) kresoxim-methyl
(2-10) dimoxystrobin
(2-11) picoxystrobin
(2-12) pyraclostrobin
(2-13) metominostrobin
(3-3) propiconazole
(3-4) difenoconazole
(3-6) cyproconazole
(3-7) hexaconazole
(3-8) penconazole
(3-9) myclobutanil
(3-10) tetraconazole
(3-12) epoxiconazole
(3-13) flusilazole
(3-15) prothioconazole
(3-16) fenbuconazole
(3-17) tebuconazole
(3-18) ipconazole
(3-19) metconazole
(3-20) triticonazole
(3-21) bitertanol
(3-22) triadimenol
(3-23) triadimefon
(3-24) fluquinconazole
(4-1) dichlofluanid
(4-2) tolylfluanid
(5-1) iprovalicarb
(5-3) benthiavalicarb
(6-2) boscalid
(6-5) ethaboxam
(6-6) fenhexamid
(6-7) carpropamid
(6-8) 2-chloro-4-[(2-fluoro-2-methylpropanoyl)amino]-*N,N-*dimethylbenzamide
(6-9) fluopicolid
(6-10) zoxamide
(6-11) 3,4-dichloro-N-(2-cyanophenyl)isothiazole-5-carboxamide
(6-14) penthiopyrad
(6-16) *N*-[2-(1,3-dimethylbutyl)phenyl]-1-methyl-4-(trifluoromethyl)-1*H*-pyrrole-3-carboxamide
(6-17) flutolanil
(6-18) *N*-[2-(1,3-dimethylbutyl)phenyl]-5-fluoro-1,3-dimethyl-1*H*-pyrazole-4-carboxamide
(7-1) mancozeb
(7-2) maneb
(7-4) propineb
(7-5) thiram
(7-6) zineb
(8-1) benalaxyl
(8-2) furalaxyl
(8-3) metalaxyl
(8-4) metalaxyl-M
(8-5) benalaxyl-M
(9-1) cyprodinil
(9-2) mepanipyrim
(9-3) pyrimethanil
(10-1) 6-chloro-5-[(3,5-dimethylisoxazol-4-yl)sulphonyl]-2,2-difluoro-5*H*-[1,3]dioxolo[4,5-f]-benzimidazole
(10-3) carbendazim
(11-1) diethofencarb
(11-2) propamocarb
(11-3) propamocarb-hydrochloride
(11-4) propamocarb-fosetyl
(12-2) captan
(12-3) folpet
(12-4) iprodione
(12-5) procymidone
(13-1) dodine
(13-2) guazatine
(13-3) iminoctadine triacetate
(14-1) cyazofamid
(14-2) prochloraz
(14-3) triazoxide
(15-4) fenpropimorph
(15-5) dimethomorph
(15-6) flumorph
(16-2) fludioxonil
(17-1) fosetyl-Al
(17-2) phosphonic acid
(17-3) tolclofos-methyl
(19-1) acibenzolar-S-methyl
(19-2) chlorothalonil
(19-3) cymoxanil
(19-5) famoxadone
(19-6) fluazinam
(19-7) copper oxychloride
(19-9) oxadixyl
(19-10) spiroxamine
(19-21) cyprosulfamide
(19-22) mandipropamid
(20-1) pencycuron
(20-2) thiophanate-methyl
(22-1) 5-chloro-*N*-[(*1S*)-2,2,2-trifluoro-1-methylethyl]-6-(2,4,6-trifluorophenyl)[1,2,4]-triazolo[1,5-a]pyrimidine-7-amine
(22-2) 5-chloro-*N*-[(*1R*)-1,2-dimethylpropyl]-6-(2,4,6-trifluorophenyl)[1,2,4]triazolo[1,5-a]pyrimidine-7-amine
(22-4) 5-chloro-6-(2,4,6-trifluorophenyl)-7-(4-methylpiperidin-1-yl)[1,2,4-triazolo[1,5-a]pyrimidine
(23-1) 2-butoxy-6-iodo-3-propylbenzopyran-4-one
(23-2) 2-ethoxy-6-iodo-3-propylbenzopyran-4-one
(23-3) 6-iodo-2-propoxy-3-propylbenzopyran-4-one
(24-1) N-(3',4'-dichloro-5-fluoro-1,1'-biphenyl-2-yl)-3-(difluoromethyl)-1-methyl-1*H*-pyrazole-4-carboxamide
(24-3) 3-(trifluoromethyl)-*N*-{3'-fluoro-4'-[(E)-(methoxyimino)methyl]-1,1'-biphenyl-2-yl}-1-methyl-1*H*-pyrazole-4-carboxamide
(24-7) N-(4'-bromo-1,1'-biphenyl-2-yl)-4-(difluoromethyl)-2-methyl-1,3-thiazole-5-carboxamide.

Very particularly preferred active compounds of the groups (2) to (24) are the following active compounds:
(2-2) fluoxastrobin
(2-3) (2*E*)-2-(2-{[6-(3-chloro-2-methylphenoxy)-5-fluoro-4-pyrimidinyl]oxy}phenyl)-2-(methoxyimino)-*N*-methylethanamide
(2-4) trifloxystrobin
(3-15) prothioconazole
(3-17) tebuconazole
(3-18) ipconazole
(3-20) triticonazole
(3-21) bitertanol
(3-22) triadimenol
(3-24) fluquinconazole
(4-1) dichlofluanid
(4-2) tolylfluanid
(5-1) iprovalicarb
(6-6) fenhexamid
(6-7) carpropamid
(6-9) fluopicolid
(6-14) penthiopyrad
(6-17) flutolanil
(6-18) N-[2-(1,3-dimethylbutyl)phenyl]-5-fluoro-1,3-dimethyl-1H-pyrazole-4-carboxamide
(7-4) propineb
(7-5) thiram
(8-3) metalaxyl
(8-4) metalaxyl-M
(8-5) benalaxyl-M
(9-3) pyrimethanil
(10-3) carbendazim
(11-4) propamocarb-fosetyl
(12-4) iprodione
(14-2) prochloraz
(14-3) triazoxide
(16-2) fludioxonil
(17-3) tolclofos-methyl
(19-10) spiroxamine
(19-21) cyprosulfamide
(19-22) mandipropamid
(20-1) pencycuron
(22-4) 5-chloro-6-(2,4,6-trifluorophenyl)-7-(4-methylpiperidin-1-yl)[1,2,4]triazolo[1,5-a]pyrimidine
(24-1) *N*-(3',4'-dichloro-5-fluoro-1,1'-biphenyl-2-yl)-3-(difluoromethyl)-1-methyl-1*H*-pyrazole-4-carboxamide.

Especially preferred mixing partners are the following active compounds:
(2-2) fluoxastrobin
(2-4) trifloxystrobin
(3-15) prothioconazole
(3-17) tebuconazole
(3-18) ipconazole
(3-20) triticonazole
(3-22) triadimenol
(6-7) carpropamid
(6-18) N-[2-(1,3-dimethylbutyl)phenyl]-5-fluoro-1,3-dimethyl-1H-pyrazole-4-carboxamide
(7-5) thiram
(8-3) metalaxyl
(8-4) metalaxyl-M
(19-21) cyprosulfamide
(20-1) pencycuron
(24-1) *N*-(3',4'-dichloro-5-fluoro-1,1'-biphenyl-2-yl)-3-(difluoromethyl)-1-methyl-1*H*-pyrazole-4-carboxamide.

### Preferred Insecticides

The active ingredients of Insecticide Groups (1), (2), (5), (7) to (22), (24) and (29) specified herein by their "common name" are known and described, for example, in the Pesticide Manual ("The Pesticide Manual", 14th Ed., British Crop Protection Council 2006) or can be searched in the internet (e.g. http://www.alanwood.net/pesticides).

Especially preferred insecticide mixing partners (II) for compound (I) are the following active compounds: Formetanat, Fipronil, Ethiprol, Diafenthiuron, Azocyclotin, Propargit, Tetradifon, Amitraz, Acequinocyl, Fenazaquin, Fenpyroximate, Tebufenpyrad, Dicofol, Indoxacarb, Buprofezin, Diafenthiuron, Chlorfenapyr, Tebufenpyrad, Fenpyroximate, Pyrimidifen, Pyridaben, Tolfenpyrad Rotenone (Derris) or Triflumezopyrim.

Moreover, one preferred embodiment refers to combinations comprising a compound of formula (I) and a further acaricide such as Fipronil (II-2-1), Ethiprole (II-2-2), Diafenthiuron (II-12-1), Azocyclotin (II-12-2), Propargit (II-12-5), Tetradifon (II-12-6), Amitraz (II-19-1), Acequinocyl (II-20-1), Fenazaquin (II-21-1), Fenpyroximate (II-21-2), Pyrimidifen (II-21-3), Pyridaben (11-21-4), Tebufenpyrad (II-21-5), Tolfenpyrad (II-21-6), Rotenone (Derris) (II-21-7), Indoxacarb (II-22-1) Dicofol (II-29-1).

Another preferred embodiment refers to combinations comprising a compound of formula (I) and a compound of group (II) selected from Indoxacarb (II-22-1) and Metaflumizone (II-22-2), more preferably Indoxacarb (II-22-1).

Another preferred embodiment refers to combinations comprising a compound of formula (I) and a compound of group (II) selected from Fenazaquin (II-21-1), Fenpyroximate (II-21-2), Pyrimidifen (II-21-3), Pyridaben (II-21-4), Tebufenpyrad (II-21-5), Tolfenpyrad (II-21-6), Rotenone (Derris) (II-21-7).

Another preferred embodiment refers to combinations comprising a compound of formula (I) and Amitraz (II-19-1).

Another preferred embodiment refers to combinations comprising a compound of formula (I) and Buprofezin (II-16-1).

Another preferred embodiment refers to combinations comprising a compound of formula (I) and Chlorfenapyr (II-13-1).

Another preferred embodiment refers to combinations comprising a compound of formula (I) and a compound of group (II) selected from Fipronil (II-2-1) and Ethiprole (II-2-2).

Another preferred embodiment refers to combinations comprising a compound of formula (I) and a compound of group (II) selected from Diafenthiuron (II-12-1), Azocyclotin (II-12-2), Cyhexatin (II-12-3), Fenbutatin oxide (II-12-4), Propargite (II-12-5), and Tetradifon (II-12-6), more preferably Diafenthiuron (II-12-1), Azocyclotin (II-12-2) Propargite (II-12-5) and Tetradifon (II-12-6)

Another preferred embodiment refers to combinations comprising a compound of formula (I) and a compound of group (II) selected from Acequinocyl (II-20-1) and Fluacrypyrim (II-20-2), more preferably Acequinocyl (II-20-1).

Another preferred embodiment refers to combinations comprising a compound of formula (I) and a compound of group (II) selected from Indoxacarb (II-22-1), Buprofezin (II-16-1), Diafenthiuron (II-12-1), Chlorfenapyr (II-13-1), Fenpyroximate (II-21-2), Tebufenpyrad (II-21-5) and Triflumezopyrim.

### Preferred BCAs

Biological control agents which are summarized under the term "bacteria" include but are not limited to spore-forming, root-colonizing bacteria, or bacteria useful as bioinsecticide, biofungicide or bionematicide. Examples of such bacteria to be used or employed according to the invention include but are not limited to: (1.1) *Agrobacterium radiobacter*, (1.2) *Bacillus acidocaldarius,* (1.3) *Bacillus acidoterrestris*, (1.4) *Bacillus agri*, (1.5) *Bacillus aizawai,* (1.6) *Bacillus albolactis,* (1.7) *Bacillus alcalophilus,* (1.8) *Bacillus alvei,* (1.9) *Bacillus aminoglucosidicus*, (1.10) *Bacillus aminovorans.* (1.11) *Bacillus amylolyticus* (also known as *Paenibacillus amylolyticus*), (1.12) *Bacillus amyloliquefaciens,* in particular strain IN937a, (1.13) *Bacillus amyloliquefaciens,* in particular strain FZB42 (product known as RhizoVital^{®}), (1.14) *Bacillus amyloliquefaciens* strain B3, (1.15) *Bacillus aneurinolyticus*, (1.16) *Bacillus atrophaeus*, (1.17) *Bacillus azotoformans*, (1.18) *Bacillus radius,* (1.19) *Bacillus cereus*, in particular spores of *Bacillus cereus* strain CNCM I-1562 (cf. US 6 406 690), (1.20) *Bacillus chitinosporus*, in particular strain AQ746 (Accession No. NRRL B-21618), (1.21) *Bacillus circulans (1.22) Bacillus coagulans*, (1.23) *Bacillus fastidiosus*, (1.24) *Bacillus firmus*, in particular strain I-1582 (products known as Bionem, VOTIVO), (1.25) *Bacillus kurstaki*, (1.26) *Bacillus lacticola,* (1.27) *Bacillus lactimorbus*, (1.28) *Bacillus lactis,* (1.29) *Bacillus laterosporus* (also known as *Brevibacillus laterosporus*), (1.30) *Bacillus lautus*, (1.31) *Bacillus lentimorbus,* (1.32) *Bacillus lentus,* (1.33) *Bacillus licheniformis,* (1.34) *Bacillus maroccanus*, (1.35) *Bacillus megaterium* (products known as BioArc), (1.36) *Bacillus metiens*, (1.37) *Bacillus mycoides*, in particular strain AQ726 (Accession No. NRRL B21664), (1.38) *Bacillus mycoides* isolate J (BmJ), (1.39) *Bacillus natto,* (1.40) *Bacillus nematocida*, (1.41) *Bacillus nigrificans,* (1.42) *Bacillus nigrum,* (1.43) *Bacillus pantothenticus*, (1.44) *Bacillus popillae* (products known as Cronox), (1.45) *Bacillus psychrosaccharolyticus,* (1.46) *Bacillus pumilus*, in particular strain GB34 (products known as Yield Shield^{®}), (1.47) *Bacillus pumilus*, in particular strain QST2808 (Accession No. NRRL B-30087, products known as Sonata QST 2808^{®}), (1.48) *Bacillus pumilus*, in particular strain AQ717 (Accession No. NRRL B21662), (1.49) *Bacillus siamensis,* (1.50) *Bacillus smithii*, (1.51) *Bacillus sphaericus* (products known as VectoLexs^{®}), (1.52) *Bacillus subtilis,* in particular strain GB03 (products known as Kodiak^{®}), (1.53) *Bacillus subtilis,* in particular strain QST713/AQ713 (Accession No. NRRL B-21661, products known as Serenade QST 713^{®}, Serenade Soil, Serenade Max), (1.54) *Bacillus subtilis,* in particular strain AQ743 (Accession No. NRRL B-21665), (1.55) *Bacillus subtilis*, in particular strain AQ 153 (ATCC accession No. 55614), (1.56) *Bacillus subtilis var*. *amyloliquefaciens* strain FZB24 (products known as Taegro^{®}), (1.57) *Bacillus thuringiensis var*. *israelensis* (products known as VectoBac^{®}), (1.58) *Bacillus thuringiensis subsp*. *aizavai* strain ABTS-1857 (products known as XenTari^{®}), (1.59) *Bacillus thuringiensis subsp*. *kurstaki* strain HD-1 (products known as Dipel^{®} ES), (1.60) *Bacillus thuringiensis subsp*. *kurstaki* strain BMP 123, (1.61) *Bacillus thuringiensis subsp*. *tenebrionis* strain NB 176 (products known as Novodor^{®} FC), (1.62) *Bacillus thuringiensis var*. *aegyptii* (products known as Agerin), (1.63) *Bacillus thuringiensis var. colmeri* (products known as TianBaoBTc), (1.64) *Bacillus thuringiensis var*. *darmstadiensis* (products known as Baciturin, Kolepterin), (1.65) *Bacillus thuringiensis var*. *dendrolimus* (products known as Dendrobacillin), (1.66) *Bacillus thuringiensis var*. *galleriae* (products known as Enterobactin), (1.67) *Bacillus thuringiensis var*. *japonensis* (products known as Buihunter), (1.68) *Bacillus thuringiensis subsp*. *Morrisoni*, (1.69) *Bacillus thuringiensis var*. *san diego,* (1.70) *Bacillus thuringiensis subsp*. *thuringiensis* strain MPPL002, (1.71) *Bacillus thuringiensis subsp*. *thuringiensis* (products known as Bikol), (1.72) *Bacillus thuringiensis var*. *7216* (products known as Amactic, Pethian), (1.73) *Bacillus thuringiensis var*. *T36* (products known as Cahat), (1.74) *Bacillus thuringiensis* strain BD#32 (Accession No. NRRL B-21530), (1.75) *Bacillus thuringiensis* strain AQ52 (Accession No. NRRL B-21619), (1.76) *Bacillus uniflagellatus,* (1.77) *Bradyrhizobium japonicum* (products known as SoySelect), (1.78) Bacillus sp. strain AQ175 (ATCC Accession No. 55608), (1.79) Bacillus sp. strain AQ177 (ATCC Accession No. 55609), (1.80) Bacillus sp. strain AQ178 (ATCC Accession No. 53522), (1.81) *Brevibacillus brevis,* in particular strain SS86-3, (1.82) *Brevibacillus brevis,* in particular strain SS86-4, (1.83) *Brevibacillus brevis,* in particular strain SS86-5, (1.84) *Brevibacillus brevis,* in particular strain 2904, (1.85) *Brevibacillus laterosporus,* in particular strain 64, (1.86) *Brevibacillus laterosporus,* in particular strain 1111, (1.87) *Brevibacillus laterosporus,* in particular strain 1645, (1.88) *Brevibacillus laterosporus,* in particular strain 1647 (1.89) *Chromobacterium subtsugae,* in particular strain PRAA4-1T (products known as Gandevo), (1.90) *Delftia acidovorans*, in particular strain RAY209 (products known as BioBoost^{®}), (1.91) *Lactobacillus acidophilus* (products known as Fruitsan), (1.92) *Lysobacter antibioticus*, in particular strain 13-1 (cf. Biological Control 2008, 45, 288-296), (1.93) *Lysobacter enzymogenes,* in particular strain C3 (cf. J Nematol. 2006 June; 38(2): 233-239), (1.94) *Paenibacillus alvei*, in particular strains III3DT-1A (Bacillus genetic stock center, Nov 2001), (1.95) *Paenibacillus alvei*, in particular strain III2E (Bacillus genetic stock center, Nov 2001), (1.96) *Paenibacillus alvei*, in particular strain 46C3 (Bacillus genetic stock center, Nov 2001), (1.97) *Paenibacillus alvei*, in particular strain 2771 (Bacillus genetic stock center, Nov 2001), (1.98) *Paenibacillus polymyxa*, (1.99) *Paenibacillus popilliae,* (1.100) *Pantoea agglomerans*, (1.101) *Pasteuria penetrans* (products known as Pasteuria wettable powder), (1.102) *Pasteuria usgae* (products known as Econem™), (1.103) *Pectobacterium carotovorum* (products known as BioKeeper), (1.104) *Pseudomonas aeruginosa* (products known as Guiticid), (1.105) *Pseudomonas aureofaciens* (products known as Agate-25K), (1.106) *Pseudomonas cepacia,* in particular strain M54, (1.107) *Pseudomonas cepacia,* in particular strain J82, (1.108) *Pseudomonas chlororaphis,* in particular strain MA 342 (products known as Cedomon), (1.109) *Pseudomonas fluorescens* (products known as Sudozone), (1.110) *Pseudomonas proradix* (products known as Proradix^{®}), (1.111) *Pseudomonas putida* (products known as Nematsid, (1.112) *Pseudomonas resinovorans* (products known as Solanacure), (1.113) *Pseudomonas syringe* (products known as Biosave), (1.114) *Rhodococcus globerulus* strain AQ719 (Accession No. NRRL B21663) (1.115) *Serratia entomophila* (products known as Invade™), (1.116) *Serratia marcescens*, in particular strain SRM (MTCC8708), (1.117) *Serratia marcescens*, in particular strain R35, (1.118) *Streptomyces candidus* (products known as BioAid™), (1.119) *Streptomyces colombiensis* (products known as Mycoside), (1.120) *Streptomyces galbus,* in particular strain K61 (products known as Mycostop^{®}, cf. Crop Protection 2006, 25, 468-475), (1.121) *Streptomyces galbus,* in particular strain QST 6047, Accession No. NRRL 30232, (1.122) *Streptomyces goshikierisis* (products known as Safegro), (1.123) *Streptomyces griseoviridis* (products known as Mycostop^{®}, cf. Microbial db of Canada), (1.124) *Streptomyces lavendulae* (products known as Phytolavin-300), (1.125) *Streptomyces lydicus,* in particular strain WYCD108 (products known as ActinovateSP), (1.126) *Streptomyces lydicus,* in particular strain WYEC108 (products known as Actino-iron), (1.127) *Streptomyces prasinus* (cf. "Prasinons A and B: potent insecticides from *Streptomyces prasinus*" Applied Microbiology 1973 Nov), (1.128) *Streptomyces rimosus* (products known as Rhitovit), (1.129) *Streptomyces saraceticus* (products known as Clanda), (1.130) *Streptomyces venezuelae.* (1.131) *Streptomyces* sp. NRRL B-30145 (1.132) *Xanthomonas campestris,* (1.133) *Xenorhabdus luminescens,* (1.134) *Xenorhabdus nematophila,* (1.135) *Bacillus subtilis*, in particular strain QST30002/AQ30002 (Accession No. NRRL B-50421, cf. WO 2012/087980) and (1.136) *Bacillus subtilis*, in particular strain QST30004/AQ30004 (Accession No. NRRL B-50455, cf. WO 2012/087980).

Mutants of the bacterial, strains having all the identifying characteristics of the respective strain shall be included within the definition of the biological control agent being bacteria,

Biological control agents which are summarized under the term "fungi" or "yeasts" include but are not limited to: (2.1) *Ampelomyces quisqualis*, in particular strain AQ 10 (product known as AQ 10^{®}), (2.2) *Aureobasidium pullulans*, in particular blastospores of strain DSM14940, (2.3) *Aureobasidium pullulans*, in particular blastospores of strain DSM 14941 or mixtures thereof (product known as Blossom Protect^{®}), (2.4) *Aschersonia aleyrodes*, (2.5) *Aspergillus flavus,* in particular strain NRRL 21882 (products known as Afla-Guard^{®}), (2.6) *Arthrobotrys superba* (Corda 1839), (2.7) *Beauveria bassiana*, in particular strain ATCC 74040 (products known as Naturalis^{®}), (2.8) *Beauveria bassiana*, in particular strain GHA (products known as Mycotrol, BotaniGard), (2.9) *Beauveria brongniartii* (products known as Beaupro), (2.10) *Candida oleophila,* in particular strain O (products known as Nexy ^{®}, Aspire), (2.11) *Chaetomium cupreum* (products known as Ketocin), (2.12) *Cladosporium cladosporioides,* in particular strain H39, (2.13) *Conidiobolus obscurus*, (2.14) *Coniothyrium minitans,* in particular strain CON/M/91-8 (products known as Contans ^{®}), (2.15) *Dilophosphora alopecuri* (products known as Twist Fungus ^{®}), (2.16) *Entomophthora virulenta* (products known as Vektor), (2.17) *Fusarium oxysporum*, in particular strain Fo47 (products known as Fusaclean), (2.18) *Gliocladium catenulatum*, in particular strain J1446 (products known as Prestop^{®} or Primastop), (2.19) *Hirsutella thompsonii* (products known as Mycohit or ABTEC), (2.20) *Lagenidium giganteum* (products known as Laginex^{®} by AgraQuest, Inc.), (2.21) *Lecanicillium lecanii,* in particular conidia of strain KV01 (products known as Mycotal^{®}, Vertalec^{®}), (2.22) *Metarhizium anisopliae*, in particular strain F52 (products known as BIO 1020 or Met52), (2.23) *Metarhizium anisopliae var*. *acridum* (products known as Green Muscle), (2.24) *Metarhizium flavoviride,* (2.25) *Metschnikovia fructicola*, in particular the strain NRRL Y-30752 (product known as Shemer ^{®}), (2.26) *Microsphaeropsis ochracea* (products known as Microx^{®}), (2.27) *Mucor haemelis* (product known as BioAvard), (2.28) *Muscodor albus*, in particular strain QST 20799 (products known as Arabesque™ or Andante™), (2.29) *Muscodor albus*, in particular strain 620 (Accession No. NRRL 30547), (2.30) *Muscodor roseus* strain A3-5 (Accession No. NRRL 30548), (2.31) *Myrothecium verrucaria*, in particular strain AARC-0255 (products known as DiTera™), (2.32) *Nomuraea rileyi,* in particular strain SA86101, (2.33) *Nomuraea rileyi,* in particular strain GU87401, (2.34) *Nomuraea rileyi*, in particular strain SR86151, (2.35) *Nomuraea rileyi,* in particular strain CG128, (2.36) *Nomuraea rileyi,* in particular strain VA9101 (products known as Kongo^{®}), (2.37) *Ophiostoma piliferum,* in particular strain D97 (products known as Sylvanex), (2.38) *Paecilomyces fumosoreus*, in particular strain apopka 97 (products known as PreFeRal), (2.39) *Paecilomyces lilacinus,* in particular spores of *Paecilomyces lilacinus* strain 251 (products known as BioAct^{®}, cf. Crop Protection 2008, 27, 352-361), (2.40) *Paecilomyces variotii*, in particular strain Q-09 (products known as Nemaquim), (2.41) *Pandora delphacis,* (2.42) *Penicillium bilaii,* in particular strain ATCC22348 (products known as JumpStart^{®}, PB-50, Provide), (2.43) *Penicillium vermiculatum* (products known as Vermiculen), (2.44) *Phlebiopsis gigantea* (products known as Rotstop), (2.45) *Pichia anomala,* in particular strain WRL-076, (2.46) *Pochonia chlamydosporia,* (2.47) *Pseudozyma flocculosa,* in particular strain PF-A22 UL (products known as Sporodex ^{®} L), (2.48) *Pythium oligandrum*, in particular strain DV74 (products known as Polyversum), (2.49) *Sporothrix insectorum* (products known as Sporothrix), (2.50) *Talaromyces flavus,* (2.51) *Trichoderma album* (products known as Bio-Zeid), (2.52) *Trichoderma asperellum* (products known as BIO-TAM™), (2.53) *Trichoderma asperellum* in particular strain ICC 012 (products known as Bioten^{®}), (2.54) *Trichoderma atroviride*, in particular strain CNCM I-1237,(2.55) *Trichoderma gamsii* (products known as BIO-TAM™), (2.56) *Trichoderma gamsii*, in particular mycelial fragments,conidia & chlamydospores of strain ICC080 (products known as Bioderma), (2.57) *Trichoderm harmatum*, (2*.*58) *Trichoderma harzianum*, in particular *Trichoderma harzianum T39* (products known as Trichodex ^{®}), (2.59) *Trichoderma koningii* (products known as Trikot-S Plus), (2.60) *Trichoderma lignorum* (products known as Mycobac), (2.61) *Trichoderma polysporum*, in particular strain IMI 206039, (2.62) *Trichoderma virens* (products known as SoilGard), (2.63) *Tsukamurella paurometabola* (products known as HeberNem®), (2.64) *Ulocladium oudemansii* (products known as Botry-Zen), (2.65) *Verticillium albo-atrum,* in particular strain WCS850, (2.66) *Verticillium chlamydosporium* (products known as Varsha), (2.67) *Verticillium dahliae* (products known as Dutch Trig), and (2.68) *Zoophtora radican*.

Mutants of the fungal strains having all the identifying characteristics of the respective strain shall be included within the definition of the biological control agent being a fungus or yeast,

Biological control agents which are summarized under the term "protozoas" include but are not limited to: (3.1) *Nosema locustae* (products known as NoloBait), (3.2) *Thelohania solenopsis* and (3.3) *Vairimorpha spp.* Mutants of the protozoan strains having all the identifying characteristics of the respective strain shall be included within the definition of the biological control agent being protozoans,

Biological control agents which are summarized under the term "viruses" include but are not limited to: (4.1) *Adoxophyes orana* (summer fruit tortrix) granulosis virus (GV), (product known as BIOFA - Capex®), (4.2) *Agrotis segetum* (turnip moth) nuclear polyhedrosis virus (NPV), (4.3) *Anticarsia gemmatalis* (Woolly pyrol moth) mNPV (products known as Polygen), (4.4) *Autographa californica* (Alfalfa Looper) mNPV (products known as VPN80 from Agricola El Sol), (4.5) *Biston suppressaria* (tea looper) NPV, (4.6) *Bombyx mori* (silkworm) NPV, (4.7) *Cryptophlebia leucotreta* (false codling moth) *GV (products known as Cryptex),* (4.8) *Cydia pomonella* (Codling moth) granulosis virus (GV) (product known as Madex Plus), (4.9) *Dendrolimus punctatus* (Masson pine moth) CPV, (4.10) *Helicoverpa armigera* NPV (product known as AgBiTech - ViVUS Max), (4.11) *Helicoverpa* (previously *Heliothis) zea* (corn earworm) NPV (products known as Elcar), (4.12) *Leucoma salicis* (satin moth) NPV, (4.13) *Lymantria dispar* (gypsy moth) NPV (products known as Gypcheck), (4.14) *Neodiprion abietis* (balsam-fir sawfly) NPV (products known as Abietiv), (4.15) *Neodiprion lecontei* (red-headed pinesawfly) NPV (products known as Lecontvirus), (4.16) *Neodiprion sertifer* (Pine sawfly) NPV (products known as Neocheck-S), (4.17) *Orgyia pseudotsugata* (Douglas-fir tussock moth) NPV (products known as Virtuss), (4.18) *Phthorimaea operculella* (tobacco leaf miner) GV (products known as Matapol), (4.19) *Piers rapae* (small white) GV, (4.20) *Plutella xylostella* (diamondback moth) GV (products known as Plutec), (4.21) *Spodoptera albula* (gray-streaked armywom moth) mNPV (products known as VPN 82), (4.22) *Spodoptera exempta* (true armyworm) mNPV (products known as Spodec), (4.23) *Spodoptera exigua* (sugarbeet armyworm) mNPV (products known as Spexit from Andermatt Biocontrol), (4.24) *Spodoptera frugiperd*a (fall armyworm) mNPV (products known as Baculovirus VPN), (4.25) *Spodoptera littoralis* (tobacco cutworm) NPV (procucts known as Spodoptrin from NPP Calliope France), and (4.26) *Spodoptera litura* (oriental leafworm moth) NPV (products known as Littovir).

Biological control agents which are summarized under the term "entomopathogenic nematodes" include but are not limited to: (5.1) *Abbreviata caucasica*, (5.2) *Acuaria spp.,* (5.3) *Agamermis decaudata,* (5.4) *Allantonema spp.,* (5.5) *Amphimermis spp.,* (5.6) *Beddingia (= Deladenus) siridicola, (5.7) Bovienema spp.,* (5.8) *Cameronia spp.,* (5.9) *Chitwoodiella ovofilamenta*, (5.10) *Contortylenchus spp.,* (5.11) *Culicimermis spp.,* (5.12) *Diplotriaena spp.,* (5.13) *Empidomermis spp.,* (5.14) *Filipjevimermis leipsandra,* (5.15) *Gastromermis spp.,* (5.16) *Gongylonema spp.,* (5.17) *Gynopoecilia pseudovipara*, (5.18) *Heterorhabditis bacteriopliora* (products known as B-Green), (5.19) *Heterorhabditis baujardi,* (5.20) *Heterorhabditis heliothidis* (products known as Nematon), (5.21) *Heterorhabditis indica,* (5.22) *Heterorhabditis marelatus*, (5.23) *Heterorhabditis megidis*, (5.24) *Heterorhabditis zealandica,* (5.25) *Hexamermis spp.,* (5.26) *Hydromermis spp.,* (5.27) *Isomermis spp.,* (5.28) *Limnomermis spp.,* (5.29) *Maupasina weissi,* (5.30) *Mermis nigrescens,* (5.31) *Mesomermis spp.,* (5.32) *Neomesomermis spp.,* (5.33) *Neoparasitylenchus rugulosi,* (5.34) *Octomyomermis spp.,* (5.35) *Parasitaphelenchus spp.,* (5.36) *Parasitorhabditis spp.,* (5.37) *Parasitylenchus spp.,* (5.38) *Perutilimermis culicis,* (5.39) *Phasmarhabditis hermaphrodita*, (5.40) Physaloptera spp., (5.41) *Protrellatus spp.,* (5.42) *Pterygodermatites spp.,* (5.43) *Romanomermis spp.,* (5.44) *Seuratum cadarachense*, (5.45) *Sphaerulariopsis spp.,* (5.46) *Spirura guianensis*, (5.47) *Steinernema carpocapsae* (products known as Biocontrol), (5.48) *Steinernema feltiae* (products known as Nemasys®), (5.49) *Steinernema glaseri* (procucts known as Biotopia), (5.50) *Steinernema kraussei* (products known as Larvesure), (5.51) *Steinernema riobrave* (products known as Biovector), (5.52) *Steinernema scapterisci* (products known as Nematac S), (5.53) *Steinernema scarabaei*, (5.54) *Steinernema siamkayai*, (5.55) *Strelkovimermis peterseni*, (5.56) *Subulura spp.,* (5.57) *Sulphuretylenchus elongatus*, and (5.58) *Tetrameres spp.*

Biological control agents which are summarized under the term " proteins or secondary metabolites" include but are not limited to: (6.1) Harpin (isolated by *Erwinia amylovora*, products known as Harp-N-Tek™, Messenger®, Employ™, ProAct™).

Biological control agents which are summarized under the term "botanical extracts" include but are not limited to: (7.1) Thymol, extracted e. g. from thyme *(thymus vulgaris*), (7.2) Neem tree (*Azadirachta india)* oil, and therein Azadirachtin, (7.3) Pyrethrum, an extract made from the dried flower heads of different species of the genus *Tanacetum*, and therein Pyrethrins (the active components of the extract), (7.4) extract of *Cassia nigricans*, (7.5) wood extract of *Quassia amara* (bitterwood), (7.6) Rotenon, an extract from the roots and stems of several tropical and subtropical plant species, especially those belonging to the genera *Lonchocarpus* and *Derris,* (7.7) extract of *Allium sativum* (garlic), (7.8) Quillaja extract, made from the concentrated purified extract of the outer cambium layer of the *Quillaja Saponaria Molina* tree, (7.9) Sabadilla (*Sabadilla*= *Schoenocaulon officinale*) seeds, in particular Veratrin (extracted from the seeds), (7.10) Ryania, an extract made from the ground stems of *Ryania speciosa,* in particular Ryanodine (the active component of the extract), (7.11) extract of *Viscum album* (mistletoe), (7.12) extract of *Tanacetum vulgare* (tansy), (7.13) extract of *Artemisia absinthium* (wormwood), (7.14) extract of *Urtica dioica* (stinging nettle), (7.15) extract of *Symphytum officinale* (common comfrey), (7.16) extract of *Tropaeulum majus* (monks cress), (7.17) leaves and bark of *Quercus* (oak tree) (7.18) Yellow mustard powder, (7.19) oil of the seeds of *Chenopodium anthelminticum* (wormseed goosefoot), (7.20) dried leaves of *Dryopteris filix-mas* (male fern), (7.21) bark of *Celastrus angulatus* (Chinese bittersweet), (7.22) extract of *Equisetum arvense* (field horsetail), (7.23) Chitin. It is disclosed in US 2010/0316738 corresponding to WO 2010/144919), (7.25) Saponins of *Chenopodium quinoa* (products known as Heads Up).

Particularly preferred are biological control agents selected from the group of bacteria consisting of (1.12) *Bacillus amyloliquefaciens,* in particular strain IN937a, (1.13) *Bacillus amyloliquefaciens,* in particular strain FZB42 (product known as RhizoVital^{®}), (1.16) *Bacillus atrophaeus*, (1.19) *Bacillus cereus,* in particular spores of *Bacillus cereus* strain CNCM I-1562 (cf. US 6 406 690), (1.20) *Bacillus chitinosporus*, in particular strain AQ746 (Accession No. NRRL B-21618, (1.21) *Bacillus circulans, (1.22) Bacillus coagulan,* (1.24) *Bacillus firmus,* in particular strain I-1582 (products known as Bionem, VOTIVO), (1.37) *Bacillus mycoides,* in particular strain AQ726 (Accession No. NRRL B21664), (1.38) *Bacillus mycoides* isolate J (BmJ), (1.44) *Bacillus popillae* (products known as Cronox), (1.46) *Bacillus pumilus,* in particular strain GB34 (products known as Yield Shield^{®}), (1.47) *Bacillus pumilus*, in particular strain QST2808 (Accession No. NRRL B-30087, products known as Sonata QST 2808^{®}), (1.48) *Bacillus pumilus,* in particular strain AQ717 (Accession No. NRRL B21662), (1.51) *Bacillus sphaericus* (products known as VectoLexs^{®}), (1.52) *Bacillus subtilis*, in particular strain GB03 (products known as Kodiak^{®}), (1.53) *Bacillus subtilis*, in particular strain QST713/AQ713 (Accession No. NRRL B-21661, products known as Serenade QST 713^{®}, Serenade Soil, Serenade Max), (1.54) *Bacillus subtilis*, in particular strain AQ743 (Accession No. NRRL B-21665), (1.55) *Bacillus subtilis*, in particular strain AQ 153 (ATCC accession No. 55614), (1.56) *Bacillus subtilis var*. *amyloliquefaciens* strain FZB24 (products known as Taegro^{®}), (1.57) *Bacillus thuringiensis var*. *israelensis* (products known as VectoBac^{®}), (1.58) *Bacillus thuringiensis subsp. aizawai* strain ABTS-1857 (products known as XenTari^{®}), (1.59) *Bacillus thuringiensis subsp. kurstaki strain* HD-1 (products known as Dipel^{®} ES), (1.60) *Bacillus thuringiensis subsp. kurstaki strain BMP 123,* (1.61) *Bacillus thuringiensis subsp*. *tenebrionis* strain NB 176 (products known as Novodor^{®} FC), (1.62) *Bacillus thuringiensis var*. *aegyptii* (products known as Agerin), (1.63) *Bacillus thuringiensis var*. *colmeri* (products known as TianBaoBTc), (1.64) *Bacillus thuringiensis var*. *darmstadiensis* (products known as Baciturin, Kolepterin), (1.65) *Bacillus thuringiensis var*. *dendrolimus* (products known as Dendrobacillin), (1.66) *Bacillus thuringiensis var*. *galleriae* (products known as Enterobactin), (1.67) *Bacillus thuringiensis var*. *japonensis* (products known as Buihunter), (1.71) *Bacillus thuringiensis subsp. thuringiensis* (products known as Bikol), (1.72) *Bacillus thuringiensis var*. *7216* (products known as Amactic, Pethian), (1.73) *Bacillus thuringiensis var*. *T36* (products known as Cahat),(1.76) *Bacillus uniflagellatus, (1.77) Bradyrhizobium japonicum* (products known as SoySelect), (1.78) Bacillus sp. strain AQ175 (ATCC Accession No. 55608), (1.79) Bacillus sp. strain AQ177 (ATCC Accession No. 55609), (1.80) Bacillus sp. strain AQ178 (ATCC Accession No. 53522), (1.81) *Brevibacillus brevis,* in particular strain SS86-3, (1.82) *Brevibacillus brevis,* in particular strain SS86-4, (1.83) *Brevibacillus brevis,* in particular strain SS86-5, (1.84) *Brevibacillus brevis,* in particular strain 2904, (1.85) *Brevibacillus laterosporus*, in particular strain 64, (1.86) *Brevibacillus laterosporus*, in particular strain 1111, (1.87) *Brevibacillus laterosporus*, in particular strain 1645, (1.88) *Brevibacillus laterosporus*, in particular strain 1647 (1.89) *Chromobacterium subtsugae,* in particular strain PRAA4-1T (products known as Gandevo), (1.90) *Delftia acidovorans,* in particular strain RAY209 (products known as BioBoost^{®}), (1.91) *Lactobacillus acidophilus* (products known as Fruitsan), (1.92) *Lysobacter antibioticus,* in particular strain 13-1 (cf. Biological Control 2008, 45, 288-296), (1.101) *Pasteuria penetrans* (products known as Pasteuria wettable powder), (1.102) *Pasteuria usgae* (products known as Econem™), (1.103) *Pectobacterium carotovorum* (products known as BioKeeper), (1.104) *Pseudomonas aeruginosa* (products known as Guiticid), (1.105) *Pseudomonas aureofaciens* (products known as Agate-25K), (1.108) *Pseudomonas chlororaphis,* in particular strain MA 342 (products known as Cedomon), (1.109) *Pseudomonas fluorescens* (products known as Sudozone), (1.110) *Pseudomonas proradix* (products known as Proradix^{®}), (1.111) *Pseudomonas putida* (products known as Nematsid, (1.112) *Pseudomonas resinovorans* (products known as Solanacure), (1.113) *Pseudomonas syringae* (products known as Biosave), (1.114) *Rhodococcus globerulus* strain AQ719 (Accession No. NRRL B21663), (1.115) *Serratia entomophila* (products known as Invade™), (1.118) *Streptomyces candidus* (products known as BioAid™), (1.119) *Streptomyces colombiensis* (products known as Mycoside), (1.120) *Streptomyces galbus,* in particular strain K61 (products known as Mycostop^{®}, cf. Crop Protection 2006, 25, 468-475), (1.121) *Streptomyces galbus*, in particular strain QST 6047, Accession No. NRRL 30232, (1.122) *Streptomyces goshikiensis* (products known as Safegro), (1.123) *Streptomyces griseoviridis* (products known as Mycostop^{®}, cf. Microbial db of Canada), (1.124) *Streptomyces lavendulae* (products known as Phytolavin-300), (1.125) *Streptomyces lydicus,* in particular strain WYCD108 (products known as ActinovateSP), (1.126) *Streptomyces lydicus,* in particular strain WYEC108 (products known as Actino-iron), (1.128) *Streptomyces rimosus* (products known as Rhitovit), (1.129) *Streptomyces saraceticus* (products known as Clanda), (1.135) *Bacillus subtilis*, in particular strain QST30002/AQ30002 (Accession No. NRRL B-50421, cf. WO 2012/087980) and (1.136) *Bacillus subtilis*, in particular strain QST30004/AQ30004 (Accession No. NRRL B-50455, cf. WO 2012/087980).

Particularly preferred are biological control agents selected from the group of fungi or yeasts consisiting of (2.1) *Ampelomyces quisqualis*, in particular strain AQ 10 (product known as AQ 10^{®}), *(2.3) Aureobasidium pullulans*, in particular blastospores of strain DSM 14941 or mixtures thereof (product known as Blossom Protect^{®}), (2.5) *Aspergillus flavus,* in particular strain NRRL 21882 (products known as Afla-Guard^{®}), (2.7) *Beauveria bassiana*, in particular strain ATCC 74040 (products known as Naturalis^{®}), (2.8) *Beauveria bassiana,* in particular strain GHA (products known as Mycotrol, BotaniGard), (2.9) *Beauveria brongniartii* (products known as Beaupro), (2.10) *Candida oleophila,* in particular strain O (products known as Nexy^{®}, Aspire), (2.11) *Chaetomium cupreum* (products known as Ketocin), (2.14) *Coniothyrium minitans,* in particular strain CON/M/91-8 (products known as Contans ^{®}), (2.15) *Dilophosphora alopecuri* (products known as Twist Fungus ^{®}), (2.16) *Entomophthora virulenta* (products known as Vektor), (2.17) *Fusarium oxysporum,* in particular strain Fo47 (products known as Fusaclean), (2.18) *Gliocladium catenulatum,* in particular strain J1446 (products known as Prestop ^{®} or Primastop), (2.19) *Hirsutella thompsonii* (products known as Mycohit or ABTEC), (2.20) *Lagenidium giganteum* (products known as Laginex^{®} by AgraQuest, Inc.), (2.21) *Lecanicillium lecanii,* in particular conidia of strain KV01 (products known as Mycotal^{®}, Vertalec^{®}), (2.22) *Metarhizium anisopliae,* in particular strain F52 (products known as BIO 1020 or Met52), (2.23) *Metarhizium anisopliae var*. *acridum* (products known as Green Muscle), (2.25) *Metschnikovia fructicola*, in particular the strain NRRL Y-30752 (product known as Shemer ^{®}), (2.26) *Microsphaeropsis ochracea* (products known as Microx^{®}), (2.27) *Mucor haemelis* (product known as BioAvard), (2.28) *Muscodor albus,* in particular strain QST 20799 (products known as Arabesque™ or Andante™), (2.29) *Muscodor albus,* in particular strain 620 (Accession No. NRRL 30547), (2.30) *Muscodor roseus* strain A3-5 (Accession No. NRRL 30548), (2.31) *Myrothecium verrucaria*, in particular strain AARC-0255 (products known as DiTera™), (2.32) *Nomuraea rileyi,* in particular strain SA86101, (2.33) *Nomuraea rileyi,* in particular strain GU87401, (2.34) *Nomuraea rileyi,* in particular strain SR86151, (2.35) *Nomuraea rileyi,* in particular strain CG128, (2.36) *Nomuraea rileyi*, in particular strain VA9101 (products known as Kongo^{®}), (2.37) *Ophiostoma piliferum,* in particular strain D97 (products known as Sylvanex), (2.38) *Paecilomyces fumosoreus,* in particular strain apopka 97 (products known as PreFeRal), (2.39) *Paecilomyces lilacinus*, in particular spores of *Paecilomyces lilacinus* strain 251 (products known as BioAct^{®}, cf. Crop Protection 2008, 27, 352-361), (2.40) *Paecilomyces variotii*, in particular strain Q-09 (products known as Nemaquim), (2.42) *Penicillium bilaii,* in particular strain ATCC22348 (products known as JumpStart^{®}, PB-50, Provide), (2.43) *Penicillium vermiculatum* (products known as Vermiculen), (2.44) *Phlebiopsis gigantea* (products known as Rotstop), (2.47) *Pseudozyma flocculosa,* in particular strain PF-A22 UL (products known as Sporodex ^{®} L), (2.48) *Pythium oligandrum,* in particular strain DV74 (products known as Polyversum), (2.49) *Sporothrix insectorum* (products known as Sporothrix), (2.51) *Trichoderma album* (products known as Bio-Zeid), *(2.52) Trichoderma asperellum* (products known as BIO-TAM™), (2.53) *Trichoderma asperellum* in particular strain ICC 012 (products known as Bioten^{®}), (2.54) *Trichoderma atroviride*, in particular strain CNCM I-1237, (2.55) *Trichoderma gamsii* (products known as BIO-TAM™), (2.56) *Trichoderma gamsii,* in particular mycelial fragments,conidia & chlamydospores of strain ICC080 (products known as Bioderma), (2.58) *Trichoderma harzianum,* in particular *Trichoderma harzianum T39* (products known as Trichodex ^{®}), (2.59) *Trichoderma koningii* (products known as Trikot-S Plus ), (2.60) *Trichoderma lignorum* (products known as Mycobac), (2.62) *Trichoderma virens* (products known as SoilGard), (2.63) *Tsukamurella paurometabola* (products known as HeberNem®), (2.64) *Ulocladium oudemansii* (products known as Botry-Zen), (2.66) *Verticillium chlamydosporium* (products known as Varsha) and (2.67) *Verticillium dahliae* (products known as Dutch Trig).

Particularly preferred are biological control agents selected from the group of protozoas consisting of (3.1) *Nosema locustae* (products known as NoloBait).

Particularly preferred are biological control agents selected from the group of viruses consisting of (4.1) *Adoxophyes orana* (summer fruit tortrix) granulosis virus (GV), (product known as BIOFA - Capex®), (4.3) *Anticarsia gemmatalis* (Woolly pyrol moth) mNPV (products known as Polygen), (4.4) *Autographa californica* (Alfalfa Looper ) mNPV (products known as VPN80 from Agricola El Sol), *(4.7) Cryptophlebia leucotreta* (false codling moth) *GV (products known as Cryptex),* (4.8) *Cydia pomonella* (Codling moth) granulosis virus (GV) (product known as Madex Plus), (4.10) *Helicoverpa armigera* NPV (product known as AgBiTech - ViVUS Max), (4.11) *Helicoverpa* (previously *Heliothis) zea* (corn earworm) NPV (products known as Elcar), (4.13) *Lymantria dispar* (gypsy moth) NPV (products known as Gypcheck), (4.14) *Neodiprion abietis* (balsam-fir sawfly) NPV (products known as Abietiv), (4.15) *Neodiprion lecontei* (red-headed pinesawfly) NPV (products known as Lecontvirus), (4.16) *Neodiprion sertifer* (Pine sawfly) NPV (products known as Neocheck-S), (4.17) *Orgyia pseudotsugata* (Douglas-fir tussock moth) NPV (products known as Virtuss), (4.18) *Phthorimaea operculella* (tobacco leaf miner) GV (products known as Matapol), (4.20) *Plutella xylostella* (diamondback moth) GV (products known as Plutec), (4.21) *Spodoptera albula* (gray-streaked armywom moth) mNPV (products known as VPN 82), (4.22) *Spodoptera exempta* (true armyworm) mNPV (products known as Spodec), (4.23) *Spodoptera exigua* (sugarbeet armyworm) mNPV (products known as Spexit from Andermatt Biocontrol), (4.24) *Spodoptera frugiperda* (fall armyworm) mNPV (products known as Baculovirus VPN), (4.25) *Spodoptera littoralis* (tobacco cutworm) NPV (procucts known as Spodoptrin from NPP Calliope France), and (4.26) *Spodoptera litura* (oriental leafworm moth) NPV (products known as Littovir).

Particularly preferred are biological control agents selected from the group of entomopathogenic nematodes consisting of (5.18) *Heterorhabditis bacteriophora* (products known as B-Green), (5.20) *Heterorhabditis heliothidis* (products known as Nematon), (5.47) *Steinernema carpocapsae* (products known as Biocontrol), (5.48) *Steinernema feltiae* (products known as Nemasys®), (5.49) *Steinernema glaseri* (procucts known as Biotopia), (4.50) *Steinernema kraussei* (products known as Larvesure), (5.51) *Steinernema riobrave* (products known as Biovector), and (5.52) *Steinernema scapterisci* (products known as Nematac S).

Particularly preferred are biological control agents selected from the group of proteins and secondary metabolites consisting of (6.1) Harpin (isolated by *Erwinia amylovora,* products known as Harp-N-Tek™, Messenger®, Employ™, ProAct™).

Particularly preferred are biological control agents selected from the group of botanical extracts consisting of (7.1) Thymol, extracted e. g. from thyme *(thymus vulgaris*), (7.25) Saponins of *Chenopodium quinoa* (products known as Heads Up).

More particularly preferred are biological control agents selected from the group of bacteria consisting of (1.12) *Bacillus amyloliquefaciens*, in particular strain IN937a, (1.13) *Bacillus amyloliquefaciens,* in particular strain FZB42 (product known as RhizoVital^{®}), (1.16) *Bacillus atrophaeus*, (1.19) *Bacillus cereus,* in particular spores of *Bacillus cereus* strain CNCM I-1562 (cf. US 6 406 690), (1.20) *Bacillus chitinosporus,* in particular strain AQ746 (Accession No. NRRL B-21618), (1.21) *Bacillus circulans,* (1.22) *Bacillus coagulans,* (1.24) *Bacillus firmus*, in particular strain I-1582 (products known as Bionem, VOTIVO), (1.37) *Bacillus mycoides,* in particular strain AQ726 (Accession No. NRRL B21664), (1.38) *Bacillus mycoides* isolate J (BmJ), (1.44) *Bacillus popillae* (products known as Cronox), (1.46) *Bacillus pumilus,* in particular strain GB34 (products known as Yield Shield^{®}), (1.47) *Bacillus pumilus,* in particular strain QST2808 (Accession No. NRRL B-30087, products known as Sonata QST 2808^{®}), (1.48) *Bacillus pumilus,* in particular strain AQ717 (Accession No. NRRL B21662), (1.51) *Bacillus sphaericus* (products known as VectoLexs^{®}), (1.52) *Bacillus subtilis*, in particular strain GB03 (products known as Kodiak^{®}), (1.53) *Bacillus subtilis*, in particular strain QST713/AQ713 (Accession No. NRRL B-21661, products known as Serenade QST 713^{®}, Serenade Soil, Serenade Max), (1.54) *Bacillus subtilis*, in particular strain AQ743 (Accession No. NRRL B-21665), (1.55) *Bacillus subtilis*, in particular strain AQ 153 (ATCC accession No. 55614), (1.56) *Bacillus subtilis var*. *amyloliquefaciens* strain FZB24 (products known as Taegro^{®}), (1.57) *Bacillus thuringiensis var*. *israelensis* (products known as VectoBac^{®}), (1.58) *Bacillus thuringiensis subsp. aizawai* strain ABTS-1857 (products known as XenTari^{®}), (1.59) *Bacillus thuringiensis subsp. kurstaki* strain HD-1 (products known as Dipel^{®} ES), (1.60) *Bacillus thuringiensis subsp. kurstaki* strain BMP 123, (1.61) *Bacillus thuringiensis subsp. tenebrionis* strain NB 176 (products known as Novodor^{®} FC), (1.62) *Bacillus thuringiensis var*. *aegyptii* (products known as Agerin), (1.63) *Bacillus thuringiensis var*. *colmeri* (products known as TianBaoBTc), (1.64) *Bacillus thuringiensis var*. *darmstadiensis* (products known as Baciturin, Kolepterin), (1.65) *Bacillus thuringiensis var*. *dendrolimus* (products known as Dendrobacillin), (1.66) *Bacillus thuringiensis var*. *galleriae* (products known as Enterobactin), (1.67) *Bacillus thuringiensis var*. *japonensis* (products known as Buihunter), (1.71) *Bacillus thuringiensis subsp. thuringiensis* (products known as Bikol), (1.72) *Bacillus thuringiensis var*. *7216* (products known as Amactic, Pethian), (1.73) *Bacillus thuringiensis var*. *T36* (products known as Cahat), (1.78) Bacillus sp. strain AQ175 (ATCC Accession No. 55608), (1.79) Bacillus sp. strain AQ177 (ATCC Accession No. 55609), (1.80) Bacillus sp. strain AQ178 (ATCC Accession No. 53522), (1.81) *Brevibacillus brevis,* in particular strain SS86-3, (1.82) *Brevibacillus brevis,* in particular strain SS86-4, (1.83) *Brevibacillus brevis,* in particular strain SS86-5, (1.84) *Brevibacillus brevis,* in particular strain 2904, (1.85) *Brevibacillus laterosporus*, in particular strain 64, (1.86) *Brevibacillus laterosporus,* in particular strain 1111, (1.87) *Brevibacillus laterosporus*, in particular strain 1645, (1.88) *Brevibacillus laterosporus,* in particular strain 1647, (1.89) *Chromobacterium subtsugae*, in particular strain PRAA4-1T (products known as Gandevo), (1.90) *Delftia acidovorans*, in particular strain RAY209 (products known as BioBoost^{®}), (1.91) *Lactobacillus acidophilus* (products known as Fruitsan), (1.92) *Lysobacter antibioticus,* in particular strain 13-1 (cf. Biological Control 2008, 45, 288-296), (1.103) *Pectobacterium carotovorum* (products known as BioKeeper), (1.114) *Rhodococcus globerulus* strain AQ719 (Accession No. NRRL B21663), (1.121) *Streptomyces galbus*, in particular strain QST 6047, Accession No. NRRL 30232 and (1.123) *Streptomyces griseoviridis* (products known as Mycostop^{®}, cf. Microbial db of Canada).

More particularly preferred are biological control agents selected from the group of fungi or yeasts consisting of (2.7) *Beauveria bassiana*, in particular strain ATCC 74040 (products known as Naturalis^{®}), (2.8) *Beauveria bassiana*, in particular strain GHA (products known as Mycotrol, BotaniGard), (2.9) *Beauveria brongniartii* (products known as Beaupro), (2.19) *Hirsutella thompsonii* (products known as Mycohit or ABTEC), (2.20) *Lagenidium giganteum* (products known as Laginex^{®} by AgraQuest, Inc.), (2.29) *Muscodor albus*, in particular strain 620 (Accession No. NRRL 30547), (2.30) *Muscodor roseus* strain A3-5 (Accession No. NRRL 30548), (2.31) *Myrothecium verrucaria,* in particular strain AARC-0255 (products known as DiTera™), (2.42) *Penicillium bilaii,* in particular strain ATCC22348 (products known as JumpStart^{®}, PB-50, Provide), (2.52) *Trichoderma asperellum* (products known as BIO-TAM™),(2.53) *Trichoderma asperellum* in particular strain ICC 012 (products known as Bioten^{®}), (2.54) *Trichoderma atroviride*, in particular strain CNCM I-1237, (2.55) *Trichoderma gamsii* (products known as BIO-TAM™) and (2.63) *Tsukamurella paurometabola* (products known as HeberNem®).

More particularly preferred are biological control agents selected from the group of viruses consisting of (4.3) *Anticarsia gemmatalis* (Woolly pyrol moth) mNPV (products known as Polygen), (4.8) *Cydia pomonella* (Codling moth) granulosis virus (GV) (product known as Madex Plus), (4.10) *Helicoverpa armigera* NPV (product known as AgBiTech - ViVUS Max), (4.11) *Helicoverpa* (previously *Heliothis) zea* (corn earworm) NPV (products known as Elcar), (4.13) *Lymantria dispar* (gypsy moth) NPV (products known as Gypcheck), (4.18) *Phthorimaea operculella* (tobacco leaf miner) GV (products known as Matapol), (4.23) *Spodoptera exigua* (sugarbeet armyworm) mNPV (products known as Spexit from Andermatt Biocontrol) and (4.26) *Spodoptera litura* (oriental leafworm moth) NPV (products known as Littovir).

Most particularly preferred are biological control agents selected from the group of bacteria consisting of (1.24) *Bacillus firmus,* in particular strain I-1582 (products known as Bionem, VOTIVO), (1.47) *Bacillus pumilus,* in particular strain QST2808 (Accession No. NRRL B-30087, products known as Sonata QST 2808^{®}),(1.52) *Bacillus subtilis,* in particular strain GB03 (products known as Kodiak^{®}), (1.53) *Bacillus subtilis*, in particular strain QST713/AQ713 (Accession No. NRRL B-21661, products known as Serenade QST 713^{®}, Serenade Soil, Serenade Max), (1.121) *Streptomyces galbus*, in particular strain QST 6047, Accession No. NRRL 30232, (1.135) *Bacillus subtilis*, in particular strain QST30002/AQ30002 (Accession No. NRRL B-50421, cf. WO 2012/087980) and (1.136) *Bacillus subtilis*, in particular strain QST30004/AQ30004 (Accession No. NRRL B-50455, cf. WO 2012/087980).

Most particularly preferred are biological control agents selected from the group of fungi or yeasts consisting of (2.20) *Lagenidium giganteum* (products known as Laginex^{®} by AgraQuest, Inc.), *(2.52) Trichoderma asperellum* (products known as BIO-TAM™) and, (2.55) *Trichoderma gamsii* (products known as BIO-TAM™).

Most particularly preferred are biological control agents selected from the group of botanical extracts consisting of (7.1) Thymol, extracted e. g. from thyme *(thymus vulgaris)*.

### Ratio Fungicide / Insecticide

The synergistic effect is particularly pronounced when the active compounds in the active compound combinations according to the invention are present in certain weight ratios. However, the weight ratios of the active compounds in the active compound combinations can be varied within a relatively wide range. In general, the combinations according to the invention comprise an active compound (I) and an active compound of group (II) selected from Fungicide Groups (2) to (24) or Insecticide Groups (1), (2), (5), (7) to (22), (24) and (29), in the following preferred and particularly preferred mixing ratios:

Preferred mixing ratio: 125:1 to 1:125 such as 100:1 to 1:100 or 75:1 to 1:75.

More preferred mixing ratio: 50:1 to 1:50 such as 50:1 to 1:15 or 1:15 to 50:1 or even 20:1 to 1:20 or 20:1 to 1:15 or 15:1 to 1:20 or 15:1 to 1:15 or 10:1 to 1:10 or 5:1 to 1:5.

Particularly preferred mixing ratio for some specific combinations of compound of f ormula (I) and a compound of group (II) are:

| Compound of group (II) | Mixing ratio |
|---|---|
| Thymol | 15:1 to 1:15 |
| Indoxacarb | 20:1 to 1:15 |
| Buprofezin | 15:1 to 1:40 |
| Diafenthiuron | 10:1 to 1:15 |
| Chlorfenapyr | 10:1 to 1:20 |
| Tebufenpyrad | 10:1 to 1:20 |
| Fenpyroximate | 15:1 to 1:15 |
| Triflumezopyrim | 50:1 to 1:15 |

The mixing ratios are based on weight ratios. The ratio is to be understood as meaning active compound of the formula (I) : an active compound of group (II).

### Ratio BCA

The compounds of the formula (I) and a biological control agent of Biological Control Agent Groups (1) to (7) of as defined above of the mixture or composition according to the present invention can be combined in any specific ratio between these two mandatory components. A biological control agent is generally provided in form of a carrier such as a solution or powder or suspension comprising the biological control agent (e.g.in form of viable spores or conidia or an extract). In one preferred embodiment, the amount of viable spores or conidia per gramm compound (I) in a mixture or composition according to the invention normally provided in/on a carrier is at least 10⁷ viable spores or conidia / g compound (I), such as between 10⁷ and 10¹⁴ viable spores or conidia / g compound (I), more preferably at least 10⁸ viable spores or conidia / g compound (I), such as between 10⁸ and 5x10¹³ viable spores or conidia / g compound (I), or even more preferably at least 10⁹ viable spores or conidia / g compound (I), such as between 10⁹ and 10¹³ viable spores or conidia / g compound (I).

The term "viability" of spores or conidia refers to the ability of spores or conidia to germinate at standard conditions and under sufficient supply of nutritions, water, light and/or further support such as growth media. Viability of spores and conidia can be easily determined by a person skilled in the art, e.g. by counting colonies formed by spores/conidia on a growth medium suitable for species to be tested. In addition, many assays are available in the art to determine viability of spores and/or conidia, e.g., Chen et al (Can. J. Plant Pathol., 24; 230-232 (2002); Paul et al (Biotech. And Bioengeneering, 42; 11-23 (1993); Panahiam et al (International Research Journal of Applied and Basic Science, 3(2); 292-298 (2012) or Laflamme et al (J. of applied Microbiol. 96; 684-692 (2004)).

In one preferred embodiment, wherein the biological control agent is a natural extract or simulated blend (BCA Group 7), the ratio is measured in view of the amount of biological active agent(s) in the extract or simulated blend. Thus, the ratio of an extract or simulated blend is based on the amount of active ingredient and not on the amount of the whole extract or blend. For example, a weight ratio of 1:1 of compound (I) and a biological control agent of BCA Group (7) in form of a natural extract or simulated blend with 16.75% (w/w) active ingredient, such as a terpen (e.g. Thymol), refers to a mixture or composition comprising, e.g., 1 g of compound (I) and 5.97 g of the natural extract or simulated blend comprising 16.75% active ingredient (BCA Group 7), i.e. 1 g active ingredient (BCA Group 7) resulting in a 1:1 mixture in view of compound (I) and the active ingredient (BCA Group 7).

In another preferred embodiment, the mixing ratio in mixtures or compositions of a compound (I) and fungi (which are, e.g. provided in form of a solution or solid form (e.g. a powder) with viable conidia and/or spores) is between 10⁷ and 10¹⁴ viable spores or conidia / g compound (I), preferably between 10⁸ and 10¹³ viable spores or conidia / g compound (I), more preferably between 10⁹ and 10¹³ viable spores or conidia / g compound (I), even more preferably between 10¹⁰ and 10¹² viable spores or conidia / g compound (I).

For example, the ratio of viable conidia of *Metarhizium anisopliae* (e.g. Met 52, e.g., with a concentration of 5 x 10⁹ viable conidia/g solid form carrier as used in the examples) per gr compound (I) is preferably between 10⁸ and 10¹³ viable conidia / g compound (I), more preferably between 10⁹ and 10¹³ viable conidia / g compound (I), even more preferably between 10¹⁰ and 10¹² viable conidia / g compound (I) such as between 3x10¹⁰ and 7x10¹¹ viable conidia / g compound (I).

For example, the ratio of viable spores of *Paecilomyces fumosoroseus* (e.g. PreFeRal, for example with a concentration of 2 x 10⁹ viable spores/g solution as used in the examples) per gr compound (I) is preferably between 10⁸ and 10¹³ viable spores / g compound (I), more preferably between 10⁹ and 10¹³ viable spores / g compound (I), even more preferably between 10¹⁰ and 10¹³ viable spores / g compound (I) such as between 10¹¹ and 3x10¹² viable spores / g compound (I).

For example, the ratio of viable spores of *Beauveria bassiana* (e.g., Naturalis-L, for example with a concentration of 2.3 x 10⁷ viable spores/ml solution as used in the examples) per gr compound (I) is preferably between 10⁸ and 10¹³ viable spores / g compound (I), more preferably between 10⁹ and 10¹³ viable spores / g compound (I), even more preferably between 5x10⁹ and 10¹² viable spores / g compound (I) such as between 5x10⁹ and 5x10¹¹ viable spores / g compound (I).

For example, the ratio of viable spores of *Paecilomyces lilacinus* (e.g., *Paecilomyces lilacinus* strain 251 (BioAct), for example with a concentration of 10¹⁰ viable spores/g carrier as used in the examples) per gr compound (I) is preferably between 10⁸ and 10¹⁴ viable spores / g compound (I), more preferably between 10¹⁰ and 10¹⁴ viable spores / g compound (I), even more preferably between 5x10¹¹ and 5x10¹³ viable spores / g compound (I) such as between 10¹² and 5x10¹³ viable spores / g compound (I).

In another preferred embodiment, the mixing ratio in mixtures or compositions of a compound (I) and bacteria (wich are, e.g. provided in form of a solution or solid form (e.g. a powder) with viable spores) is between 10⁷ and 10¹⁴ viable spores / g compound (I), preferably between 10⁸ and 10¹³ viable spores / g compound (I), more preferably between 10⁹ and 10¹³ viable spores / g compound (I), even more preferably between 10¹⁰ and 10¹² viable spores / g compound (I).

For example, the ratio of viable spores of *Bacillus thuringiensis* (e.g., *B. thuringiensis subsp*. *aizawai* ABTS-1857 (XenTari), for example with a concentration of 1.5 x 10⁷ viable spores/g carrier as used in the examples) per gr compound (I) is preferably between 10⁸ and 10¹³ viable spores / g compound (I), more preferably between 10⁸ and 10¹¹ viable spores / g compound (I), even more preferably between 10⁹ and 10¹¹ viable spores / g compound (I) such as between 10⁹ and 5x10¹⁰ viable spores / g compound (I).

### Pests

The active compound combinations according to the invention, in combination with good plant tolerance and favourable toxicity to warm-blooded animals and being tolerated well by the environment, are suitable for protecting plants and plant organs, for increasing the harvest yields, for improving the quality of the harvested material and for controlling animal pests, in particular insects (especially acarids), arachnids, herlminths, nematodes and molluscs, which are encountered in agriculture, in horticulture, in animal husbandry, in forests, in gardens and leisure facilities, in the protection of stored products and of materials, and in the hygiene sector. They may be preferably employed as plant protection agents. They are active against normally sensitive and resistant species and against all or some stages of development. The abovementioned pests include pests: from the order of the Anoplura (Phthiraptera), from the phylum Arthropoda, especially from the class Arachnida, for example, Acarus spp., Aceria sheldoni, Aculops spp., Aculus spp., Amblyomma spp., Amphitetranychus viennensis, Argas spp., Boophilus spp., Brevipalpus spp., Bryobia graminum, Bryobia praetiosa, Centruroides spp., Chorioptes spp., Dermanyssus gallinae, Dermatophagoides pteronyssinus, Dermatophagoides farinae, Dermacentor spp., Eotetranychus spp., Epitrimerus pyri, Eutetranychus spp., Eriophyes spp., Glycyphagus domesticus, Halotydeus destructor, Hemitarsonemus spp., Hyalomma spp., Ixodes spp., Latrodectus spp., Loxosceles spp., Metatetranychus spp., Neutrombicula autumnalis, Nuphersa spp., Oligonychus spp., Ornithodorus spp., Ornithonyssus spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Steneotarsonemus spp., Steneotarsonemus spinki, Tarsonemus spp., Tetranychus spp., Trombicula alfreddugesi, Vaejovis spp., Vasates lycopersici; from the class of the Bivalva, from the order of the Chilopoda, from the order of the Coleoptera, from the order of the Collembola, from the order of the Dermaptera, from the order of the Diplopoda, from the order of the Diptera, from the class of the Gastropoda, from the class of the helminths, it is furthermore possible to control protozoa, from the order of the Heteroptera, from the order of the Homoptera, from the order of the Hymenoptera, from the order of the Isopoda, from the order of the Isoptera, from the order of the Lepidoptera, from the order of the Orthoptera, from the order of the Siphonaptera, from the order of the Symphyla, from the order of the Thysanoptera, from the order of the Thysanura, phytoparasitic nematodes.

In a preferred embodiment, a combination according to the invention can be used for controlling animal pests (preferably insect pests, such as arachnid pests, especially acarid pests (such as mites)) in citrus, pineapple (*Ananas comosus*), banana, plantains, pome, especially apple and pear, grapes, almonds, coffee, tea, vegetables as defined herein, especially tomato, lettuce, cucumber, carrots, onions, garlic and potatoes, cotton, soybean, coffee, tea, corn (maize) and rice. Especially preferred is the use of a combination according to the invention for controlling animal pests (preferably insect pests, such as arachnid pests, especially acarid pests (such as mites)) in citrus, cotton, soybean, almond, grape, tea, coffee, maize or rice.

In another preferred embodiment, the combination according to the invention can be used for controlling inter alia a spider specie or inter alia a mite specie. The term "inter alia" refers to the fact that a pest (a specie) can be present in a location alone or further pests (species of the same genera or a different genera) can be present at the same location at the same time.

Pests which are preferably controlled are spiders or mites such as *Panonychus spp.* (e.g., *P. citri* or *P. ulmi*), *Brevipalpus spp.* (e.g., *B. phoenicis*), *Phyllocoptruta oleivora*, *Aculops spp* (e.g., A. *pelekassi* or A. *lycopersici*), *Polyphagotarsonemus latus*, *Tetranychus spp.* (e.g., *T. urticae* or *T. pacificus*), *Oligonychus spp.* (e.g. *O. pratensis*, *O. coffea, O. ununguis*, *O. perseae* or *O. oryzae*).

In one preferred embodiment, a combination according to the invention can be used for controlling inter alia *Panonychus citri, Phyllocoptruta oleivora*, *Tetranychus urticae*, *Tetranychus pacificus*, *Brevipalpus phoenicis, Aculops pelekassi, Polyphagotarsonemus latus Oligonychus pratensis*, *Oligonychus coffeae* and *Panonychus ulmi*.

In one preferred embodiment, a combination according to the invention can be used for controlling inter alia *Panonychus citri, Brevipalpus phoenicis, Phyllocoptruta oleivora*, *Aculops pelekassi* and/or *Polyphagotarsonemus latus.* In a more preferred embodiment, a combination according to the invention can be used for controlling inter alia *Panonychus citri, Brevipalpus phoenicis, Phyllocoptruta oleivora*, *Aculops pelekassi* and/or *Polyphagotarsonemus latus* in citrus. The term "inter alia" refers to the fact that a pest can be present in a location alone or further pests can be present at the same location at the same time.

In another preferred embodiment, a combination according to the invention can be used for controlling inter alia *Tetranychus urticae*. In a more preferred embodiment, a combination according to the invention can be used for controlling inter alia *Tetranychus urticae* in cotton, soybean, citrus or maize. Especially preferably, a combination according to the invention can be used for controlling inter alia *Tetranychus urticae* in cotton, soybean or maize The term "inter alia" refers to the fact that a pest can be present in a location alone or further pests can be present at the same location at the same time.

In another preferred embodiment, the combination according to the invention can be used for controlling inter alia *Tetranychus pacificus*. In a more preferred embodiment, the combination according to the invention can be used for controlling inter alia *Tetranychus pacificus* in almonds or grapes. The term "inter alia" refers to the fact that a pest can be present in a location alone or further pests can be present at the same location at the same time.

In another preferred embodiment, the combination according to the invention can be used for controlling inter alia *Oligonychus coffeae.* In a more preferred embodiment, the combination according to the invention can be used for controlling inter alia *Oligonychus coffeae* in tea or coffee. The term "inter alia" refers to the fact that a pest can be present in a location alone or further pests can be present at the same location at the same time.

In another preferred embodiment, the combination according to the invention can be used for controlling inter alia *Oligonychus pratensis*. In a more preferred embodiment, the combination according to the invention can be used for controlling inter alia *Oligonychus pratensis* in maize. The term "inter alia" refers to the fact that a pest can be present in a location alone or further pests can be present at the same location at the same time.

In another preferred embodiment, the combination according to the invention can be used for controlling inter alia *Panonychus ulmi*. In a more preferred embodiment, the combination according to the invention can be used for controlling inter alia *Panonychus ulmi* in pome or vegetables. Preferred pomes are apple and pear. Preferred vegetables are tomato, lettuce, cucumber, carrots, onions, garlic and potatoes. The term "inter alia" refers to the fact that a pest can be present in a location alone or further pests can be present at the same location at the same time.

### Methods and uses

The invention also relates to methods for controlling animal pests, in which combinations according to the present invention are allowed to act on animal pests and/or their habitat. The control of the animal pests is preferably conducted in agriculture and forestry, and in material protection. Preferably excluded herefrom are methods for the surgical or therapeutic treatment of the human or animal body and diagnostic methods carried out on the human or animal body.

The invention furthermore relates to the use of the combinations according to the present invention as pesticidal combination, in particular crop protection agents.

In the context of the present application, the term "pesticide" in each case also always comprises the term "crop protection agent".

In addition to an active compound (I) and a compound of group (II) outlined herein, the active compound combinations according to the invention can comprise at least one further active compound selected from a fungicide, an insecticide or a biological control agent, i.e. at least one further fungicidally or insecticidally active additive.

In one embodiment, the active compound combinations according to the invention comprise one active fungicidal compound as disclosed in the 2013 FRAC code list (http://www.frac.info/publication/anhang/FRAC%20Code%20List%202013-update%20April-2013.pdf), active insecticidal compound as disclosed in the IRAC code list (http://www.irac-online.org/documents/moa-classification/?ext=pdf) or from a Biological Control Agent such as bacteria or natural extracts.

Surprisingly, the insecticidal activity of the active compound combination according to the invention is considerably higher than the sum of the activities of the individual active compounds. An unforeseeable true synergistic effect is present, and not just an addition of activities.

Surprisingly, the fungicidal action of the active compound combinations according to the invention is considerably better than the sum of the activities of the individual active compounds. Thus, an unforeseeable true synergistic effect is present, and not just an addition of actions.

If appropriate, the active compound combinations according to the invention can, at certain concentrations or application rates, also be used as herbicides, safeners, growth regulators or agents to improve plant properties, or as microbicides, for example as fungicides, antimycotics, bactericides, viricides (including agents against viroids) or as agents against MLO (Mycoplasma-like organisms) and RLO (Rickettsia-like organisms). If appropriate, they can also be employed as intermediates or precursors for the synthesis of other active compounds.

### Formulations

The present invention further relates to formulations and use forms prepared therefrom as pesticides, for example drench, drip and spray liquors, comprising a composition of compound of formula (I) and a compound of group (II). In some cases, the use forms comprise further pesticides and/or adjuvants which improve action, such as penetrants, e.g. vegetable oils, for example rapeseed oil, sunflower oil, mineral oils, for example paraffin oils, alkyl esters of vegetable fatty acids, for example rapeseed oil methyl ester or soya oil methyl ester, or alkanol alkoxylates and/or spreaders, for example alkylsiloxanes and/or salts, for example organic or inorganic ammonium or phosphonium salts, for example ammonium sulphate or diammonium hydrogenphosphate and/or retention promoters, for example dioctyl sulphosuccinate or hydroxypropyl guar polymers and/or humectants, for example glycerol and/or fertilizers, for example ammonium-, potassium- or phosphorus-containing fertilizers.

Customary formulations are, for example, water-soluble liquids (SL), emulsion concentrates (EC), emulsions in water (EW), suspension concentrates (SC, SE, FS, OD), water-dispersible granules (WG), granules (GR) and capsule concentrates (CS); these and further possible formulation types are described, for example, by Crop Life International and in Pesticide Specifications, Manual on development and use of FAO and WHO specifications for pesticides, FAO Plant Production and Protection Papers - 173, prepared by the FAO/WHO Joint Meeting on Pesticide Specifications, 2004, ISBN: 9251048576. The formulations, in addition to one or more compounds of the formula (I), optionally comprise further agrochemically active compounds.

These are preferably formulations or use forms which comprise auxiliaries, for example extenders, solvents, spontaneity promoters, carriers, emulsifiers, dispersants, frost protectants, biocides, thickeners and/or further auxiliaries, for example adjuvants. An adjuvant in this context is a component which enhances the biological effect of the formulation, without the component itself having any biological effect. Examples of adjuvants are agents which promote retention, spreading, attachment to the leaf surface or penetration.

These formulations are prepared in a known way, for example by mixing the compound combination according to the present invention with auxiliaries such as, for example, extenders, solvents and/or solid carriers and/or other auxiliaries such as, for example, surfactants. The formulations are prepared either in suitable facilities or else before or during application.

The auxiliaries used may be substances suitable for imparting special properties, such as certain physical, technical and/or biological properties, to the formulation of the compounds of the formula (I), or to the use forms prepared from these formulations (for example ready-to-use pesticides such as spray liquors or seed dressing products).

Suitable extenders are, for example, water, polar and nonpolar organic chemical liquids, for example from the classes of the aromatic and non-aromatic hydrocarbons (such as paraffins, alkylbenzenes, alkylnaphthalenes, chlorobenzenes), the alcohols and polyols (which, if appropriate, may also be substituted, etherified and/or esterified), the ketones (such as acetone, cyclohexanone), esters (including fats and oils) and (poly)ethers, the unsubstituted and substituted amines, amides, lactams (such as N-alkylpyrrolidones) and lactones, the sulphones and sulphoxides (such as dimethyl sulphoxide).

If the extender used is water, it is also possible to employ, for example, organic solvents as auxiliary solvents. Essentially, suitable liquid solvents are: aromatics such as xylene, toluene or alkylnaphthalenes, chlorinated aromatics or chlorinated aliphatic hydrocarbons such as chlorobenzenes, chloroethylenes or methylene chloride, aliphatic hydrocarbons such as cyclohexane or paraffins, for example mineral oil fractions, mineral and vegetable oils, alcohols such as butanol or glycol and their ethers and esters, ketones such as acetone, methyl ethyl ketone, methyl isobutyl ketone or cyclohexanone, strongly polar solvents such as dimethylformamide and dimethyl sulphoxide, and also water.

In principle, it is possible to use all suitable solvents. Examples of suitable solvents are aromatic hydrocarbons, such as xylene, toluene or alkylnaphthalenes, chlorinated aromatic or chlorinated aliphatic hydrocarbons, such as chlorobenzene, chloroethylene or methylene chloride, aliphatic hydrocarbons, such as cyclohexane, paraffins, petroleum fractions, mineral and vegetable oils, alcohols, such as methanol, ethanol, isopropanol, butanol or glycol and their ethers and esters, ketones such as acetone, methyl ethyl ketone, methyl isobutyl ketone or cyclohexanone, strongly polar solvents, such as dimethyl sulphoxide, and also water.

In principle, it is possible to use all suitable carriers. Useful carriers include especially: for example ammonium salts and ground natural minerals such as kaolins, clays, talc, chalk, quartz, attapulgite, montmorillonite or diatomaceous earth, and ground synthetic materials such as finely divided silica, alumina and natural or synthetic silicates, resins, waxes and/or solid fertilizers. Mixtures of such carriers can likewise be used. Useful carriers for granules include: for example crushed and fractionated natural rocks such as calcite, marble, pumice, sepiolite, dolomite, and synthetic granules of inorganic and organic meals, and also granules of organic material such as sawdust, paper, coconut shells, corn cobs and tobacco stalks.

Liquefied gaseous extenders or solvents can also be used. Particularly suitable extenders or carriers are those which are gaseous at ambient temperature and under atmospheric pressure, for example aerosol propellant gases, such as halohydrocarbons, and also butane, propane, nitrogen and carbon dioxide.

Examples of emulsifiers and/or foam-formers, dispersants or wetting agents with ionic or nonionic properties, or mixtures of these surfactants, are salts of polyacrylic acid, salts of lignosulphonic acid, salts of phenolsulphonic acid or naphthalenesulphonic acid, polycondensates of ethylene oxide with fatty alcohols or with fatty acids or with fatty amines, with substituted phenols (preferably alkylphenols or arylphenols), salts of sulphosuccinic esters, taurine derivatives (preferably alkyl taurates), phosphoric esters of polyethoxylated alcohols or phenols, fatty esters of polyols, and derivatives of the compounds containing sulphates, sulphonates and phosphates, for example alkylaryl polyglycol ethers, alkylsulphonates, alkyl sulphates, arylsulphonates, protein hydrolysates, lignosulphite waste liquors and methylcellulose. The presence of a surfactant is advantageous if one of the compounds of the formula (I) and/or one of the inert carriers is insoluble in water and when the application takes place in water.

It is possible to use colorants such as inorganic pigments, for example iron oxide, titanium oxide and Prussian Blue, and organic dyes such as alizarin dyes, azo dyes and metal phthalocyanine dyes, and nutrients and trace nutrients such as salts of iron, manganese, boron, copper, cobalt, molybdenum and zinc as further auxiliaries in the formulations and the use forms derived therefrom.

Additional components may be stabilizers, such as low-temperature stabilizers, preservatives, antioxidants, light stabilizers or other agents which improve chemical and/or physical stability. Foam formers or antifoams may also be present.

Tackifiers such as carboxymethylcellulose and natural and synthetic polymers in the form of powders, granules or latices, such as gum arabic, polyvinyl alcohol and polyvinyl acetate, or else natural phospholipids such as cephalins and lecithins and synthetic phospholipids may also be present as additional auxiliaries in the formulations and the use forms derived therefrom. Further possible auxiliaries are mineral and vegetable oils.

Optionally, further auxiliaries may be present in the formulations and the use forms derived therefrom. Examples of such additives include fragrances, protective colloids, binders, adhesives, thickeners, thixotropic agents, penetrants, retention promoters, stabilizers, sequestrants, complexing agents, humectants, spreaders. In general, a combination according to the invention can be combined with any solid or liquid additive commonly used for formulation purposes.

Useful retention promoters include all those substances which reduce the dynamic surface tension, for example dioctyl sulphosuccinate, or increase the viscoelasticity, for example hydroxypropylguar polymers.

Suitable penetrants in the present context are all those substances which are usually used for improving the penetration of agrochemical active compounds into plants. Penetrants are defined in this context by their ability to penetrate from the (generally aqueous) application liquor and/or from the spray coating into the cuticle of the plant and thereby increase the mobility of active compounds in the cuticle. The method described in the literature (Baur et al., 1997, Pesticide Science 51, 131-152) can be used to determine this property. Examples include alcohol alkoxylates such as coconut fatty ethoxylate (10) or isotridecyl ethoxylate (12), fatty acid esters, for example rapeseed oil methyl ester or soya oil methyl ester, fatty amine alkoxylates, for example tallowamine ethoxylate (15), or ammonium and/or phosphonium salts, for example ammonium sulphate or diammonium hydrogenphosphate.

The formulations preferably comprise between 0.00000001 and 98% by weight of the compound of the formula (I) or, with particular preference, between 0.01% and 95% by weight of the compound of the formula (I), more preferably between 0.5% and 90% by weight of the compound of the formula (I), based on the weight of the formulation.

The content of the compound of the formula (I) in the use forms prepared from the formulations (in particular pesticides) may vary within wide ranges. The concentration of the compound of the formula (I) in the use forms is usually between 0.00000001 and 95% by weight of the compound of the formula (I), preferably between 0.00001 and 1% by weight, based on the weight of the use form. The compounds are employed in a customary manner appropriate for the use forms.

### Plants and plant parts

All plants and plant parts can be treated in accordance with the invention. Plants are to be understood as meaning in the present context all plants and plant populations such as desired and undesired wild plants or crop plants (including naturally occurring crop plants). Crop plants can be plants which can be obtained by conventional plant breeding and optimization methods or by biotechnological and genetic engineering methods or by combinations of these methods, including the transgenic plants and including the plant cultivars protectable or not protectable by plant breeders' rights. Plant parts are to be understood as meaning all parts and organs of plants above and below the ground, such as shoot, leaf, flower and root, examples which may be mentioned being leaves, needles, stalks, stems, flowers, fruit bodies, fruits and seeds and also roots, tubers and rhizomes. The plant parts also include harvested material, and vegetative and generative propagation material, for example cuttings, tubers, rhizomes, offshoots and seeds.

### Treatment types

The treatment of the plants and plant parts with the active substance combinations or compositions according to the invention is carried out directly or by acting on the environment, habitat or storage space using customary treatment methods, for example by dipping, spraying, atomizing, misting, evaporating, dusting, fogging, scattering, foaming, painting on, spreading, injecting, drenching, trickle irrigation and, in the case of propagation material, in particular in the case of seed, furthermore by the dry seed treatment method, the wet seed treatment method, the slurry treatment method, by encrusting, by coating with one or more coats and the like. It is furthermore possible to apply the active substances by the ultra-low volume method or to inject the active substance preparation or the active substance itself into the soil.

A preferred direct treatment of the plants is the leaf application treatment, i.e. active substance combinations or compositions according to the invention are applied to the foliage, it being possible for the treatment frequency and the application rate to be matched to the infection pressure of the pest in question.

In the case of systemically active compounds, the active substance combinations or compositions according to the invention reach the plants via the root system. In this case, the treatment of the plants is effected by allowing the active substance combinations or compositions according to the invention to act on the environment of the plant. This can be done for example by drenching, incorporating in the soil or into the nutrient solution, i.e. the location of the plant (for example the soil or hydroponic systems) is impregnated with a liquid form of the active substance combinations or compositions according to the invention, or by soil application, i.e. the active substance combinations or compositions according to the invention are incorporated into the location of the plants in solid form (for example in the form of granules). In the case of paddy rice cultures, this may also be done by metering the active substance combinations or compositions according to the invention into a flooded paddy field in a solid use form (for example in the form of granules).

The treatment of the plants and plant parts with the active substance combinations or compositions according to the invention is carried out directly or by acting on the environment, habitat or storage space using customary treatment methods, for example by dipping, spraying, atomizing, misting, evaporating, dusting, fogging, scattering, foaming, painting on, spreading, injecting, drenching, trickle irrigation and, in the case of propagation material, in particular in the case of seed, furthermore by the dry seed treatment method, the wet seed treatment method, the slurry treatment method, by encrusting, by coating with one or more coats and the like. It is furthermore possible to apply the active substances by the ultra-low volume method or to inject the active substance preparation or the active substance itself into the soil.

A preferred direct treatment of the plants is the leaf application treatment, i.e. active substance combinations or compositions according to the invention are applied to the foliage, it being possible for the treatment frequency and the application rate to be matched to the infection pressure of the pest in question.

In the case of systemically active compounds, the active substance combinations or compositions according to the invention reach the plants via the root system. In this case, the treatment of the plants is effected by allowing the active substance combinations or compositions according to the invention to act on the environment of the plant. This can be done for example by drenching, incorporating in the soil or into the nutrient solution, i.e. the location of the plant (for example the soil or hydroponic systems) is impregnated with a liquid form of the active substance combinations or compositions according to the invention, or by soil application, i.e. the active substance combinations or compositions according to the invention are incorporated into the location of the plants in solid form (for example in the form of granules). In the case of paddy rice cultures, this may also be done by metering the active substance combinations or compositions according to the invention into a flooded paddy field in a solid use form (for example in the form of granules).

### GMO

The method of treatment according to the invention can be used in the treatment of genetically modified organisms (GMOs), e.g. plants (such as crop plants or trees) or seeds. Genetically modified plants (or transgenic plants) are plants of which a heterologous gene has been stably integrated into genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example, antisense technology, cosuppression technology, RNA interference - RNAi - technology or microRNA - miRNA - technology). A heterologous gene that is located in the genome is also called a transgene. A transgene that is defined by its particular location in the plant genome is called a transformation or transgenic event.

The present invention is particularly suitable for the treatment of transgenic plants or seeds thereof which comprises at least one heterologous gene originating from *Bacillus sp.* and whose gene product shows activity against the European corn borer and/or the corn root worm. It is particularly preferably a heterologous gene derived from *Bacillus thuringiensis* (Bt-plants).

Depending on the plant species or plant cultivars, their location and growth conditions (soils, climate, vegetation period, diet), the treatment according to the invention may also result in superadditive ("synergistic") effects. Thus, for example, reduced application rates and/or a widening of the activity spectrum and/or an increase in the activity of the active compounds and compositions which can be used according to the invention, better plant growth, increased tolerance to high or low temperatures, increased tolerance to drought or to water or soil salt content, increased flowering performance, easier harvesting, accelerated maturation, higher harvest yields, bigger fruits, larger plant height, greener leaf color, earlier flowering, higher quality and/or a higher nutritional value of the harvested products, higher sugar concentration within the fruits, better storage stability and/or processability of the harvested products are possible, which exceed the effects which were actually to be expected.

At certain application rates, the active compound combinations according to the invention may also have a strengthening effect in plants. Accordingly, they are also suitable for mobilizing the defense system of the plant against attack by unwanted microorganisms. This may, if appropriate, be one of the reasons of the enhanced activity of the combinations according to the invention, for example against fungi. Plant-strengthening (resistance-inducing) substances are to be understood as meaning, in the present context, those substances or combinations of substances which are capable of stimulating the defense system of plants in such a way that, when subsequently inoculated with unwanted microorganisms, the treated plants display a substantial degree of resistance to these microorganisms. In the present case, unwanted microorganisms are to be understood as meaning phytopathogenic fungi, bacteria and viruses. Thus, the substances according to the invention can be employed for protecting plants against attack by the abovementioned pathogens within a certain period of time after the treatment. The period of time within which protection is effected generally extends from 1 to 10 days, preferably 1 to 7 days, after the treatment of the plants with the active compounds.

Plants and plant cultivars which are preferably to be treated according to the invention include all plants which have genetic material which impart particularly advantageous, useful traits to these plants (whether obtained by breeding and/or biotechnological means).

Plants and plant cultivars which are also preferably to be treated according to the invention are resistant against one or more biotic stresses, i.e. said plants show a better defense against animal and microbial pests, such as against nematodes, insects, mites, phytopathogenic fungi, bacteria, viruses and/or viroids.

### Seed treatment

The control of animal pests by treating the seed of plants has been known for a long time and is a subject of continual improvements. Nevertheless, the treatment of seed entails a series of problems which cannot always be solved in a satisfactory manner. Thus, it is desirable to develop methods for protecting the seed and the germinating plant that remove the need for, or at least significantly reduce, the additional delivery of crop protection compositions in the course of storage, after sowing or after the emergence of the plants. It is desirable, furthermore, to optimize the amount of active ingredient employed in such a way as to provide the best-possible protection to the seed and the germinating plant from attack by animal pests, but without causing damage to the plant itself by the active ingredient employed. In particular, methods for treating seed ought also to take into consideration the intrinsic insecticidal and/or nematicidal properties of pest-resistant or pest-tolerant transgenic plants, in order to achieve optimum protection of the seed and of the germinating plant with a minimal use of crop protection compositions.

The present invention therefore also relates in particular to a method for protecting seed and germinating plants from attack by pests, by treating the seed with an active ingredient combination of the invention. The method of the invention for protecting seed and germinating plants from attack by pests encompasses a method in which the seed is treated simultaneously in one operation with an active ingredient of the formula I and a compound of group (II). It also encompasses a method in which the seed is treated at different times with an active ingredient of the formula I and a compound of group (II).

The invention likewise relates to the use of the an active ingredient combination of the invention for treating seed for the purpose of protecting the seed and the resultant plant against animal pests.

The invention relates, furthermore, to seed which for protection against animal pests has been treated with an active ingredient combination of the invention. $ The invention also relates to seed which at the same time has been treated with an active ingredient of the formula I and a compound of group (II). The invention further relates to seed which has been treated at different times with an active ingredient of the formula I and a compound of group (II). In the case of seed which has been treated at different times with an active ingredient of the formula I and a compound of group (II), the individual active ingredients in the composition of the invention may be present in different layers on the seed. In this case, the layers which comprise an active ingredient of the formula I and a compound of group (II)may optionally be separated by an intermediate layer. The invention also relates to seed in which an active ingredient of the formula I and a compound of group (II)have been applied as a constituent of a coating or as a further layer or further layers in addition to a coating.

Furthermore, the invention relates to seed which, following treatment with an active ingredient combination of the invention, is subjected to a film-coating process in order to prevent dust abrasion of the seed.

One of the advantages of the present invention is that, owing to the particular systemic properties of the compositions of the invention, the treatment of the seed with these compositions provides protection from animal pests not only to the seed itself but also to the plants originating from the seed, after they have emerged. In this way, it may not be necessary to treat the crop directly at the time of sowing or shortly thereafter.

A further advantage is to be seen in the fact that, through the treatment of the seed with the active ingredient combination of the invention, germination and emergence of the treated seed may be promoted.

It is likewise considered to be advantageous that active ingredient combinations of the invention may also be used, in particular, on transgenic seed.

It is also stated that active ingredient combinations of the invention may be used in combination with agents of the signalling technology, as a result of which, for example, colonization with symbionts is improved, such as rhizobia, mycorrhiza and/or endophytic bacteria, for example, is enhanced, and/or nitrogen fixation is optimized.

The compositions of the invention are suitable for protecting seed of any variety of plant which is used in agriculture, in greenhouses, in forestry or in horticulture. More particularly, the seed in question is that of cereals (e.g. wheat, barley, rye, oats and millet), maize, cotton, soybeans, rice, potatoes, sunflower, coffee, tobacco, canola, oilseed rape, beets (e.g. sugar beet and fodder beet), peanuts, vegetables (e.g. tomato, cucumber, bean, brassicas, onions and lettuce), fruit plants, lawns and ornamentals. Particularly important is the treatment of the seed of cereals (such as wheat, barley, rye and oats) maize, soybeans, cotton, canola, oilseed rape and rice.

As already mentioned above, the treatment of transgenic seed with an active ingredient combination of the invention is particularly important. The seed in question here is that of plants which generally contain at least one heterologous gene that controls the expression of a polypeptide having, in particular, insecticidal and/or nematicidal properties. These heterologous genes in transgenic seed may come from microorganisms such as *Bacillus, Rhizobium*, *Pseudomonas*, *Serratia, Trichoderma, Clavibacter*, *Glomus* or *Gliocladium.* The present invention is particularly suitable for the treatment of transgenic seed which contains at least one heterologous gene from *Bacillus sp.* With particular preference, the heterologous gene in question comes from *Bacillus thuringiensis.*

For the purposes of the present invention, the composition/active ingredient combination of the invention is applied alone or in a suitable formulation to the seed. The seed is preferably treated in a condition in which its stability is such that no damage occurs in the course of the treatment. Generally speaking, the seed may be treated at any point in time between harvesting and sowing. Typically, seed is used which has been separated from the plant and has had cobs, hulls, stems, husks, hair or pulp removed. Thus, for example, seed may be used that has been harvested, cleaned and dried to a moisture content of less than 15% by weight. Alternatively, seed can also be used that after drying has been treated with water, for example, and then dried again.

When treating seed it is necessary, generally speaking, to ensure that the amount of the composition of the invention, and/or of other additives, that is applied to the seed is selected such that the germination of the seed is not adversely affected, and/or that the plant which emerges from the seed is not damaged. This is the case in particular with active ingredients which may exhibit phytotoxic effects at certain application rates.

The compositions of the invention can be applied directly, in other words without comprising further components and without having been diluted. As a general rule, it is preferable to apply the compositions in the form of a suitable formulation to the seed. Suitable formulations and methods for seed treatment are known to the skilled person and are described in, for example, the following documents: US 4,272,417 A, US 4,245,432 A, US 4,808,430 A, US 5,876,739 A, US 2003/0176428 A1, WO 2002/080675 A1,WO 2002/028186 A2.

The active ingredients/active ingredient combinations which can be used in accordance with the invention may be converted into the customary seed-dressing formulations, such as solutions, emulsions, suspensions, powders, foams, slurries or other coating compositions for seed, and also ULV formulations.

These formulations are prepared in a known manner, by mixing the active ingredients/active ingredient combinations with customary adjuvants, such as, for example, customary extenders and also solvents or diluents, colorants, wetters, dispersants, emulsifiers, antifoams, preservatives, secondary thickeners, stickers, gibberellins, and also water.

Colorants which may be present in the seed-dressing formulations which can be used in accordance with the invention include all colorants which are customary for such purposes. In this context it is possible to use not only pigments, which are of low solubility in water, but also water-soluble dyes. Examples include the colorants known under the designations Rhodamin B, C.I. Pigment Red 112 and C.I. Solvent Red 1.

Wetters which may be present in the seed-dressing formulations which can be used in accordance with the invention include all of the substances which promote wetting and which are customary in the formulation of active agrochemical ingredients. Use may be made preferably of alkylnaphthalenesulphonates, such as diisopropyl- or diisobutyl-naphthalenesulphonates.

Dispersants and/or emulsifiers which may be present in the seed-dressing formulations which can be used in accordance with the invention include all of the nonionic, anionic and cationic dispersants that are customary in the formulation of active agrochemical ingredients. Use may be made preferably of nonionic or anionic dispersants or of mixtures of nonionic or anionic dispersants. Suitable nonionic dispersants are, in particular, ethylene oxide-propylene oxide block polymers, alkylphenol polyglycol ethers and also tristryrylphenol polyglycol ethers, and the phosphated or sulphated derivatives of these. Suitable anionic dispersants are, in particular, lignosulphonates, salts of polyacrylic acid, and arylsulphonate-formaldehyde condensates.

Antifoams which may be present in the seed-dressing formulations which can be used in accordance with the invention include all of the foam inhibitors that are customary in the formulation of active agrochemical ingredients. Use may be made preferably of silicone antifoams and magnesium stearate.

Preservatives which may be present in the seed-dressing formulations which can be used in accordance with the invention include all of the substances which can be employed for such purposes in agrochemical compositions. Examples include dichlorophen and benzyl alcohol hemiformal.

Secondary thickeners which may be present in the seed-dressing formulations which can be used in accordance with the invention include all substances which can be used for such purposes in agrochemical compositions. Those contemplated with preference include cellulose derivatives, acrylic acid derivatives, xanthan, modified clays and highly disperse silica.

Stickers which may be present in the seed-dressing formulations which can be used in accordance with the invention include all customary binders which can be used in seed-dressing products. Preferred mention may be made of polyvinylpyrrolidone, polyvinyl acetate, polyvinyl alcohol and tylose.

Gibberellins which may be present in the seed-dressing formulations which can be used in accordance with the invention include preferably the gibberellins A1,A3 (= gibberellic acid), A4 and A7, with gibberellic acid being used with particular preference. The gibberellins are known (cf. R. Wegler, "Chemie der Pflanzenschutz- und Schädlingsbekämpfungsmittel", Volume 2, Springer Verlag, 1970, pp. 401-412).

The seed-dressing formulations which can be used in accordance with the invention may be used, either directly or after prior dilution with water, to treat seed of any of a wide variety of types. Accordingly, the concentrates or the preparations obtainable from them by dilution with water may be employed to dress the seed of cereals, such as wheat, barley, rye, oats and triticale, and also the seed of maize, rice, oilseed rape, peas, beans, cotton, sunflowers and beets, or else the seed of any of a very wide variety of vegetables. The seed-dressing formulations which can be used in accordance with the invention, or their diluted preparations, may also be used to dress seed of transgenic plants. In that case, additional synergistic effects may occur in interaction with the substances formed through expression.

For the treatment of seed with the seed-dressing formulations which can be used in accordance with the invention, or with the preparations produced from them by addition of water, suitable mixing equipment includes all such equipment which can typically be employed for seed dressing. More particularly, the procedure when carrying out seed dressing is to place the seed in a mixer, to add the particular desired amount of seed-dressing formulations, either as such or following dilution with water beforehand, and to carry out mixing until the distribution of the formulation on the seed is uniform. This may be followed by a drying operation.

The application rate of the seed-dressing formulations which can be used in accordance with the invention may be varied within a relatively wide range. It is guided by the particular amount of the active ingredients in the formulations, and by the seed. The application rates in the case of active ingredients/active ingredient combinations are situated generally at between 0.001 and 50 g per kilogram of seed, preferably between 0.01 and 15 g per kilogram of seed.

Embodiments of the invention which are emphasized for the treatment of seed are mixtures comprising a combination comprising the compound of formula (I) and a compound of group (II) as described herein and a compound selected from the group consisting of fluoxastrobin and/or trifloxystrobin and/or prothioconazole and/or tebuconazole and/or ipconazole and/or triticonazole and/or triadimenol and/or carpropamid and/or N-[2-(1,3-dimethylbutyl)phenyl]-5-fluoro-1,3-dimethyl-1H-pyrazole-4-carboxamide and/or thiram and/or metalaxyl and/or metalaxyl-M and/or N-({4-[(cyclopropylamino)carbonyl]phenyl}sulphonyl)-2-methoxybenzamide (19-21) and/or pencycuron and/or *N*-(3',4'-dichloro-5-fluoro-1,1'-biphenyl-2-yl)-3-(difluoromethyl)-1-methyl-1*H*-pyrazole-4-carboxamide.

Embodiments of the invention which are emphasized for the treatment of seed are mixtures comprising a combination comprising the compound of formula (I) and a compound of group (II) as described herein and a compound selected from the group consisting of fluoxastrobin and/or trifloxystrobin and/or prothioconazole and/or tebuconazole and/or ipconazole and/or triticonazole and/or triadimenol and/or carpropamid and/or N-[2-(1,3-dimethylbutyl)phenyl]-5-fluoro-1,3-dimethyl-1H-pyrazole-4-carboxamide and/or thiram and/or metalaxyl and/or metalaxyl-M and/or N-({4-[(cyclopropylamino)carbonyl]phenyl}sulphonyl)-2-methoxybenzamide and/or pencycuron and/or N-(3',4'-dichloro-5-fluoro-1,1'-biphenyl-2-yl)-3-(difluoromethyl)-1-methyl-1*H*-pyrazole-4-carboxamide.

### Animal health

In addition, the active compound combinations of the present invention can be used for controlling a wide variety of pests, including, for example, harmful sucking insects, biting insects and other plant-parasitic pests, stored grain pests, pests which destroy technical materials, and hygienic pests as well as pests, including parasites, in the veterinary field and can be applied for their control, like for example eradication and extermination. Therefore, the present invention also encompasses a method for controlling harmful pests.

In the animal health field, i.e. in the field of veterinary medicine, the active compound combinations according to the present invention are active against animal parasites, in particular ectoparasites or endoparasites. The term endoparasites includes in particular helminths and protozoae, such as coccidia. Ectoparasites are typically and preferably arthropods, in particular insects and acarids.

In the field of veterinary medicine the compound combinations according to the invention are suitable, with favourable warm blood toxicity, for controlling parasites which occur in animal breeding and animal husbandry in livestock, breeding, zoo, laboratory, experimental and domestic animals. They are active against all or specific stages of development of the parasites.

Agricultural livestock include, for example mammals, such as, sheep, goats, horses, donkeys, camels, buffaloes, rabbits, reindeers, fallow deers, and in particular cattle and pigs; or poultry such as turkeys, ducks, geese, and in particular chickens; or fish or crustaceans e.g. in aquaculture; or as the case may be insects such as bees.

Domestic animals include, for example mammals, such as hamsters, guinea pigs, rats, mice, chinchillas, ferrets or in particular dogs, cats; cage birds; reptiles; amphibians or aquarium fish.

According to a preferred embodiment, the compound combinations according to the invention are administered to mammals.

According to another preferred embodiment, the compound combinations according to the invention are administered to birds, namely cage birds or in particular poultry.

By using the compound combinations according to the invention to control animal parasites, it is intended to reduce or prevent illness, cases of deaths and performance reductions (in the case of meat, milk, wool, hides, eggs, honey and the like), so that more economical and simpler animal keeping is made possible and better animal well-being is achievable.

The term "control" or "controlling" as used herein with regard to the animal health field, means that the active compounds are effective in reducing the incidence of the respective parasite in an animal infected with such parasites to innocuous levels. More specifically, "controlling", as used herein, means that the active compound is effective in killing the respective parasite, inhibiting its growth, or inhibiting its proliferation.

Exemplary arthropods include, without any limitation:

from the order of the Anoplurida, for example Haematopinus spp., Linognathus spp., Pediculus spp., Phtirus spp., Solenopotes spp.; from the order of the Mallophagida and the suborders Amblycerina and Ischnocerina, for example Trimenopon spp., Menopon spp., Trinoton spp., Bovicola spp., Werneckiella spp., Lepikentron spp., Damalina spp., Trichodectes spp., Felicola spp.; from the order of the Diptera and the suborders Nematocerina and Brachy¬cerina, for example Aedes spp., Anopheles spp., Culex spp., Simulium spp., Eusimulium spp., Phlebotomus spp., Lutzomyia spp., Culicoides spp., Chrysops spp., Odagmia spp., Wilhelmia spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp., Rhinoestrus spp., Tipula spp.; from the order of the Siphonapterida, for example Pulex spp., Ctenocephalides spp., Tunga spp., Xenopsylla spp., Ceratophyllus spp.; from the order of the Heteropterida, for example Cimex spp., Triatoma spp., Rhodnius spp., Panstrongylus spp.; as well as nuisance and hygiene pests from the order of the Blattarida.

Further, among the arthropods, the following acari may be mentioned by way of example, without any limitation:

from the subclass of the Acari (Acarina) and the order of the Metastigmata, for example from the family of argasidae like Argas spp., Ornithodorus spp., Otobius spp., from the family of Ixodidae like Ixodes spp., Amblyomma spp., Rhipicephalus (Boophilus) spp Dermacentor spp., Haemophysalis spp., Hyalomma spp., Rhipicephalus spp. (the original genus of multi host ticks); from the order of mesostigmata like Dermanyssus spp., Ornithonyssus spp., Pneumonyssus spp., Raillietia spp., Pneumonyssus spp., Sternostoma spp., Varroa spp., Acarapis spp.; from the order of the Actinedida (Prostigmata), for example Acarapis spp., Cheyletiella spp., Ornithocheyletia spp., Myobia spp., Psorergates spp., Demodex spp., Trombicula spp., Neotrombiculla spp., Listrophorus spp.; and from the order of the Acaridida (Astigmata), for example Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp.

Exemplary parasitic protozoa include -, without any limitation:

Mastigophora (Flagellata), such as, for example, Trypanosomatidae, for example, Trypanosoma b. brucei, T.b. gambiense, T.b. rhodesiense, T. congolense, T. cruzi, T. evansi, T. equinum, T. lewisi, T. percae, T. simiae, T. vivax, Leishmania brasiliensis, L. donovani, L. tropica, such as, for example, Trichomonadidae, for example, Giardia lamblia, G. canis.

Sarcomastigophora (Rhizopoda), such as Entamoebidae, for example, Entamoeba histolytica, Hartmanellidae, for example, Acanthamoeba sp., Harmanella sp.

Apicomplexa (Sporozoa), such as Eimeridae, for example, Eimeria acervulina, E. adenoides, E. alabamensis, E. anatis, E. anserina, E. arloingi, E. ashata, E. auburnensis, E. bovis, E. brunetti, E. canis, E. chinchillae, E. clupearum, E. columbae, E. contorta, E. crandalis, E. debliecki, E. dispersa, E. ellipsoidales, E. falciformis, E. faurei, E. flavescens, E. gallopavonis, E. hagani, E. intestinalis, E. iroquoina, E. irresidua, E. labbeana, E. leucarti, E. magna, E. maxima, E. media, E. meleagridis, E. meleagrimitis, E. mitis, E. necatrix, E. ninakohlyakimovae, E. ovis, E. parva, E. pavonis, E. perforans, E. phasani, E. piriformis, E. praecox, E. residua, E. scabra, E. spec., E. stiedai, E. suis, E. tenella, E. truncata, E. truttae, E. zuernii, Globidium spec., Isospora belli, I. canis, I. felis, I. ohioensis, I. rivolta, I. spec., I. suis, Cystisospora spec., Cryptosporidium spec., in particular C. parvum; such as Toxoplasmadidae, for example, Toxoplasma gondii, Hammondia heydornii, Neospora caninum, Besnoitia besnoitii; such as Sarcocystidae, for example, Sarcocystis bovicanis, S. bovihominis, S. ovicanis, S. ovifelis, S. neurona, S. spec., S. suihominis, such as Leucozoidae, for example, Leucozytozoon simondi, such as Plasmodiidae, for example, Plasmodium berghei, P. falciparum, P. malariae, P. ovale, P. vivax, P. spec., such as Piroplasmea, for example, Babesia argentina, B. bovis, B. canis, B. spec., Theileria parva, Theileria spec., such as Adeleina, for example, Hepatozoon canis, H. spec.

Exemplary pathogenic endoparasites, which are helminths, include platyhelmintha (e.g. monogenea, cestodes and trematodes), nematodes, acanthocephala, and pentastoma. Additional exemplary helminths include -, without any limitation:

Monogenea: e.g.: Gyrodactylus spp., Dactylogyrus spp., Polystoma spp..

Cestodes: From the order of the Pseudophyllidea for example: Diphyllobothrium spp., Spirometra spp., Schistocephalus spp., Ligula spp., Bothridium spp., Diplogonoporus spp..

From the order of the Cyclophyllida for example: Mesocestoides spp., Anoplocephala spp., Paranoplocephala spp., Moniezia spp., Thysanosoma spp., Thysaniezia spp., Avitellina spp., Stilesia spp., Cittotaenia spp., Andyra spp., Bertiella spp., Taenia spp., Echinococcus spp., Hydatigera spp., Davainea spp., Raillietina spp., Hymenolepis spp., Echinolepis spp., Echinocotyle spp., Diorchis spp., Dipylidium spp., Joyeuxiella spp., Diplopylidium spp..

Trematodes: From the class of the Digenea for example: Diplostomum spp., Posthodiplostomum spp., Schistosoma spp., Trichobilharzia spp., Ornithobilharzia spp., Austrobilharzia spp., Gigantobilharzia spp., Leucochloridium spp., Brachylaima spp., Echinostoma spp., Echinoparyphium spp., Echinochasmus spp., Hypoderaeum spp., Fasciola spp., Fasciolides spp., Fasciolopsis spp., Cyclocoelum spp., Typhlocoelum spp., Paramphistomum spp., Calicophoron spp., Cotylophoron spp., Gigantocotyle spp., Fischoederius spp., Gastrothylacus spp., Notocotylus spp., Catatropis spp., Plagiorchis spp., Prosthogonimus spp., Dicrocoelium spp., Eurytrema spp., Troglotrema spp., Paragonimus spp., Collyriclum spp., Nanophyetus spp., Opisthorchis spp., Clonorchis spp. Metorchis spp., Heterophyes spp., Metagonimus spp..

Nematodes: Trichinellida for example: Trichuris spp., Capillaria spp., Trichomosoides spp., Trichinella spp..

From the order of the Tylenchida for example: Micronema spp., Strongyloides spp..

From the order of the Rhabditina for example: Strongylus spp., Triodontophorus spp., Oesophagodontus spp., Trichonema spp., Gyalocephalus spp., Cylindropharynx spp., Poteriostomum spp., Cyclococercus spp., Cylicostephanus spp., Oesophagostomum spp., Chabertia spp., Stephanurus spp., Ancylostoma spp., Uncinaria spp., Bunostomum spp., Globocephalus spp., Syngamus spp., Cyathostoma spp., Metastrongylus spp., Dictyocaulus spp., Muellerius spp., Protostrongylus spp., Neostrongylus spp., Cystocaulus spp., Pneumostrongylus spp., Spicocaulus spp., Elaphostrongylus spp. Parelaphostrongylus spp., Crenosoma spp., Paracrenosoma spp., Angiostrongylus spp., Aelurostrongylus spp., Filaroides spp., Parafilaroides spp., Trichostrongylus spp., Haemonchus spp., Ostertagia spp., Marshallagia spp., Cooperia spp., Nematodirus spp., Hyostrongylus spp., Obeliscoides spp., Amidostomum spp., Ollulanus spp.

From the order of the Spirurida for example: Oxyuris spp., Enterobius spp., Passalurus spp., Syphacia spp., Aspiculuris spp., Heterakis spp.; Ascaris spp., Toxascaris spp., Toxocara spp., Baylisascaris spp., Parascaris spp., Anisakis spp., Ascaridia spp.; Gnathostoma spp., Physaloptera spp., Thelazia spp., Gongylonema spp., Habronema spp., Parabronema spp., Draschia spp., Dracunculus spp.; Stephanofilaria spp., Parafilaria spp., Setaria spp., Loa spp., Dirofilaria spp., Litomosoides spp., Brugia spp., Wuchereria spp., Onchocerca spp.

Acantocephala: From the order of the Oligacanthorhynchida z.B: Macracanthorhynchus spp., Prosthenorchis spp.; from the order of the Polymorphida for example: Filicollis spp.; from the order of the Moniliformida for example: Moniliformis spp.,

From the order of the Echinorhynchida for example Acanthocephalus spp., Echinorhynchus spp., Leptorhynchoides spp.

Pentastoma: From the order of the Porocephalida for example Linguatula spp.

In the veterinary field and in animal keeping, the administration of the compound combinations according to the invention is carried out by methods generally known in the art, such as enterally, parenterally, dermally or nasally in the form of suitable preparations. Administration can be carried out prophylactically or therapeutically.

Thus, one embodiment of the present invention refers to compound combinations according to the invention for use as a medicament.

Another aspect refers to compounds according to the invention for use as an antiendoparasitical agent, in particular an helmithicidal agent or antiprotozoaic agent. For example, compound combinations according to the invention for use as an antiendoparasitical agent, in particular an helmithicidal agent or antiprotozoaic agent, e.g., in animal husbandry, in animal breeding, in animal housing, in the hygiene sector.

Yet another aspect refers to compound combinations according to the invention for use as an antiectoparasitical agent, in particular an arthropodicidal agent such as an insecticidal agent or acaricidal agent. For example, compounds according to the invention for use as an antiectoparasitical agent, in particular an arthropodicidal agent such as an insecticidal agent or acaricidal agent, e.g., in animal husbandry, in animal breeding, in animal housing, in the hygiene sector.

### Industrial material

It has furthermore been found that the active compound combinations according to the invention have a strong insecticidal action against insects which destroy industrial materials.

The following insects may be mentioned as examples and as preferred - but without any limitation: Beetles, Hymenopterons, Termites, Bristletails.

Industrial materials in the present connection are to be understood as meaning non-living materials, such as, preferably, plastics, adhesives, sizes, papers and cardboards, leather, wood and processed wood products and coating compositions.

The ready-to-use compositions may, if appropriate, comprise further insecticides and, if appropriate, one or more fungicides.

With respect to possible additional additives, reference may be made to the insecticides and fungicides mentioned above.

The active compound combinations according to the invention can likewise be employed for protecting objects which come into contact with seawater or brackish water, in particular hulls, screens, nets, buildings, moorings and signalling systems, against fouling.

Furthermore, the active compound combinations according to the invention, alone or in combinations with other active compounds, may be employed as antifouling agents.

In domestic, hygiene and stored-product protection, the active compound combinations are also suitable for controlling animal pests, in particular insects, arachnids and mites, which are found in enclosed spaces such as, for example, dwellings, factory halls, offices, vehicle cabins and the like. They can be employed alone or in combination with other active compounds and auxiliaries in domestic insecticide products for controlling these pests. They are active against sensitive and resistant species and against all developmental stages. These pests include:

From the order of the Scorpionidea, Acarina, Araneae, Opiliones, Isopoda, Diplopoda, Chilopoda, Zygentoma, Blattaria, Saltatoria, Dermaptera, Isoptera, Psocoptera, Coleoptera, Diptera, Lepidoptera, Siphonaptera, Hymenoptera, Anoplura, Heteroptera.

In the field of household insecticides, they are used alone or in combination with other suitable active compounds, such as phosphoric esters, carbamates, pyrethroids, neonicotinoids, growth regulators or active compounds from other known classes of insecticides.

They are used in aerosols, pressure-free spray products, for example pump and atomizer sprays, automatic fogging systems, foggers, foams, gels, evaporator products with evaporator tablets made of cellulose or polymer, liquid evaporators, gel and membrane evaporators, propeller-driven evaporators, energy-free, or passive, evaporation systems, moth papers, moth bags and moth gels, as granules or dusts, in baits for spreading or in bait stations.

### Hygiene protection

The active ingredients combinations and compositions according to the invention are suitable for control of animal pests in the hygiene sector. More particularly, the invention can be used in domestic protection, hygiene protection and stored material protection, in particular for control of insects, arachnids and mites encountered in enclosed spaces, for example dwellings, factory halls, offices, vehicle cabins. For control of animal pests, the active ingredients or compositions are used alone or in combination with other active ingredients and/or auxiliaries. They are preferably used in domestic insecticide products. The inventive active ingredients are effective against sensitive and resistant species, and against all stages of development.

These pests include, for example, pests from the class of Arachnida, from the orders of Scorpiones, Araneae and Opiliones, from the classes of Chilopoda and Diplopoda, from the class of Insecta, the order of Blattodea, from the orders of Coleoptera, Dermaptera, Diptera, Heteroptera, Hymenoptera, Isoptera, Lepidoptera, Phthiraptera, Psocoptera, Saltatoria or Orthoptera, Siphonaptera and Zygentoma and from the class of Malacostraca, the order of Isopoda.

Application is effected, for example, in aerosols, unpressurized spray products, for example pump and atomizer sprays, automatic fogging systems, foggers, foams, gels, vaporizer products with vaporizer tablets made of cellulose or plastic, liquid vaporizers, gel and membrane vaporizers, propeller-driven vaporizers, energy-free or passive vaporization systems, moth papers, moth bags and moth gels, as granules or dusts, in baits for spreading or in bait stations.

## Claims

1. Active compound combination comprising compound of the formula (I) 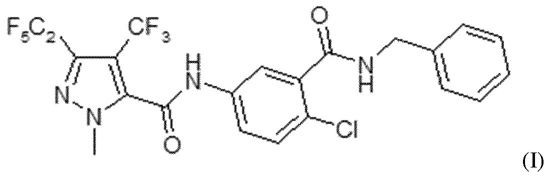 and at least one active compound of group (II) consisting of Fungicide Groups (2) to (24), Insecticide Groups (2), (7), (8), (10) to (14), (16) to to (22), (24) and (29) or from Biological Control Agent (BCA) Groups (1) to (7).

2. Active compound combination according to claim 1, wherein a compound of group (II) is selected from an insecticide/acaricide selected from the group consisting of Formetanat (II-1-1), Fipronil (II-2-1), Diafenthiuron (II-12-1), Azocyclotin (II-12-2), Propargit (II-12-3), Tetradifon (II-12-4), Amitraz (II-19-1), Acequinocyl (II-20-1), Fenazaquin (II-21-1), Fenpyroximate (II-21-2), Pyrimidifen (II-21-3), Pyridaben (II-21-4), Tebufenpyrad (II-21-5), Tolfenpyrad (II-21-6), Rotenone (Derris) (II-21-7), Indoxacarb (II-22-1), Dicofol (II-29-1) and Triflumezopyrim.

3. Active compound combination according to claim 1, wherein a compound of group (II) is selected from the group consisting of (2-2) fluoxastrobin, (2-4) trifloxystrobin, (3-15) prothioconazole, (3-17) tebuconazole, (3-18) ipconazole, (3-20) triticonazole, (3-22) triadimenol, (6-7) carpropamid, (6-18) N-[2-(1,3-dimethylbutyl)phenyl]-5-fluoro-1,3-dimethyl-1H-pyrazole-4-carboxamide, (7-5) thiram, (8-3) metalaxyl, (8-4) metalaxyl-M, (19-21) cyprosulfamide, (20-1) pencycuron, and (24-1) N-(3',4'-dichloro-5-fluoro-1,1'-biphenyl-2-yl)-3-(difluoromethyl)-1-methyl-1H-pyrazole-4-carboxamide.

4. Active compound combination according to claim 1, wherein a compound of group (II) is selected from the group consisting of (7.1) Thymol extracted from thyme (*thymus vulgaris*).

5. Use of active compound combinations as defined in any one of claims 1 to 4 for controlling insect or arachnid pests.

6. Use according to claim 5, wherein the arachnid pest is an acarid pest.

7. Method for controlling animal pests, **characterized in that** active compound combinations as defined in any one of claims 1 to 4 are allowed to act on insect or arachnid pests and/or their habitat and/or seed.

8. Method according to claim 7, wherein arachnid pest is an acarid pest.

9. Process for preparing insecticidal or arachnicidal, especially acaricidal, compositions, **characterized in that** active compound combinations as defined in any one of claims 1 to 4 are mixed with extenders and/or surfactants.

10. Use of an active compound combination according to any one of claims 1 to 4 for treating seed.

11. Use of active compound combinations according to any one of claims 1 to 4 for treating transgenic plants or seeds thereof.

12. Use of active compound combinations according to any one of claims 1 to 4 for treating plants or parts thereof selected from the group consisting of citrus, vegetables, cotton, soybean, almond, grape, tea, coffee, maize or rice.
